# EUROPEAN PATENT SPECIFICATION

(11) **EP 4 231 773 B1**
(45) Date of publication and mention of the grant of the patent: **21.05.2025**
(21) Application number: 21891019.8
(22) Date of filing: 03.11.2021
(51) Int. Cl.: H04L 5/00, H04W 74/06, H04W 28/20, H04W 84/12

(54) **METHOD FOR DETERMINING SPATIAL REUSE PARAMETER FIELD IN PPDU AND RELATED APPARATUS**
VERFAHREN ZUR BESTIMMUNG EINES RÄUMLICHEN WIEDERVERWENDUNGSPARAMETERFELDES IN PPDU UND ZUGEHÖRIGE VORRICHTUNG
PROCÉDÉ POUR DÉTERMINER UN CHAMP DE PARAMÈTRE DE RÉUTILISATION SPATIALE DANS UNE PPDU, ET APPAREIL ASSOCIÉ

(30) Priority: 12.11.2020 CN 202011263310
(43) Date of publication of application: 23.08.2023
(73) Proprietor: Huawei Technologies Co., Ltd., Shenzhen, Guangdong 518129 (CN)
(72) Inventor: YU, Jian, Shenzhen, Guangdong 518129 (CN); GUO, Yuchen, Shenzhen, Guangdong 518129 (CN); PAN, Jinzhe, Shenzhen, Guangdong 518129 (CN); GAN, Ming, Shenzhen, Guangdong 518129 (CN)
(74) Representative: Isarpatent
(86) International application number: PCT/CN2021/128374
(87) International publication number: WO 2022/100492

(56) References cited:
- WO-A1-2020/112021
- WO-A1-2020/175137
- CN-A- 109 076 596
- CN-A- 111 279 646
- TW-A- 201 924 290
- US-A1- 2019 041 509
- US-A1- 2020 136 884
- US-A1- 2020 177 425

## Description

Priority is claimed to Chinese Patent Application No. 202011263310.4, filed with the China National Intellectual Property Administration on November 12, 2020 and entitled "METHOD FOR DETERMINING SPATIAL REUSE PARAMETER FIELD IN PPDU AND RELATED APPARATUS".

### TECHNICAL FIELD

This disclosure generally relates to the field of wireless communication technologies, and the invention in particular relates to a method for determining a spatial reuse parameter field in a physical layer protocol data unit (PPDU) and a related communication apparatus.

### BACKGROUND

A wireless local area network (wireless local area network, WLAN) has been developed for many generations, including 802.11a/b/g, 802.11n, 802.11ac, 802.11ax, and 802.11be under discussion. The 802.11ax standard may be referred to as a high efficiency (high efficient, HE) standard, and the 802.11be standard may be referred to as an extremely high throughput (extremely high throughput, EHT) standard or a Wi-Fi 7 standard. Different from 802.11ax, 802.11be uses an ultra-large bandwidth, for example, 320 MHz, to achieve ultra-high transmission rates and support scenarios with ultra-high user density. In the following, a station that supports the 802.11ax standard but does not support the 802.11be standard is referred to as an HE station for short, and a station that supports the 802.11be standard is referred to as an EHT station for short.

802.11ax WLAN devices (such as an access point (access point, AP) and a station (station, STA)) support only half-duplex transmission. In other words, on a same spectrum bandwidth or channel, only one device can send information, and another device can only receive a signal but cannot send a signal, to avoid interference to the current sending device. However, with increasing density of WLAN devices, it is more common that a basic service set (basic service set, BSS) overlaps with another BSS. In other words, an overlapping basic service set (Overlapping BSS, OBSS) becomes more common. Because a WLAN device located in the OBSS may receive physical layer protocol data units (physical protocol data unit, PPDU, also referred to as a packet or a data packet) from two BSSs, a conventional method causes low transmission efficiency. Therefore, 802.11ax proposes a spatial reuse (spatial reuse) method. By adaptively adjusting transmit power, WLAN devices in the overlapping basic service set can simultaneously perform transmission. This greatly improves transmission efficiency. Specifically, in 802.11ax, spatial reuse is introduced into a trigger-based uplink scheduling transmission method. When sending a high efficiency trigger-based physical layer data protocol unit (high efficient trigger based physical layer protocol data unit, HE TB PPDU), a station copies values of four uplink spatial reuse parameter (uplink spatial reuse parameter, UL SRP) fields (which may also be referred to as uplink parameterized spatial reuse (uplink parameterized spatial reuse, UL PSR) fields) in an uplink spatial reuse (UL spatial reuse) field in a common information field of a received trigger frame to four spatial reuse parameter (spatial reuse parameter, SRP) fields included in a high efficiency signal field A (high efficient signal field A, HE-SIG-A) of the HE TB PPDU one by one.

The 802.11be standard still uses the trigger-based uplink scheduling transmission method in the 802.11ax standard. However, because a structure of the HE TB PPDU is different from that of an extremely high throughput trigger-based physical layer data protocol unit (extremely high throughput trigger based physical layer protocol data unit, EHT TB PPDU), that is, a universal signal field (Universal SIG, U-SIG) of the EHT TB PPDU includes a maximum of two SRP fields due to limited space. Therefore, in a scenario in which an EHT station is scheduled or an HE station and an EHT station are simultaneously scheduled by using a trigger frame, how to set a spatial reuse parameter field in an EHT TB PPDU becomes an urgent problem to be resolved.

US 2019/041509 A1 discloses methods, apparatuses, and computer readable media for location measurement reporting in a wireless network. In particular, this document addresses the technical problem of efficient utilization of resources in wireless local-area networks (WLANs), particularly in environments where multiple devices, including legacy devices, are competing for the same resources. This competition can lead to bandwidth limitations and unacceptable response times for users. The solution provided in this document involves a series of methods, computer-readable media, and apparatuses designed to improve the efficiency of WLAN resource usage and compatibility with various protocols. The key aspects of this solution include separate paths for WLAN and Bluetooth (BT) signals, with the capability to share paths and antennas. Down-conversion and up-conversion of RF signals for both WLAN and BT is performed by one radio IC circuitry. A baseband processing circuitry processes the baseband signals and includes physical layer (PHY) and medium access control layer (MAC) circuitry. A coexistence circuitry interfaces between WLAN and BT baseband circuitry to enable coexistence and switching between WLAN and BT radios.

### SUMMARY

The object of the present invention is to provide a method for determining a spatial reuse parameter field in a PPDU and a related communication apparatus, so that in a scenario in which an EHT station is scheduled or an HE station and an EHT station are simultaneously scheduled by using a trigger frame, a frame structure of an EHT TB PPDU may not be changed, and a spatial reuse parameter field of the EHT TB PPDU may be set based on four UL SRP fields in the trigger frame. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

The following describes this application from different aspects. It should be understood that mutual reference may be made to the following implementations and beneficial effects of the different aspects.

According to a first aspect according to the invention, the invention provides a method for determining a spatial reuse parameter field in a PPDU. The method includes: An AP sends a trigger frame, where the trigger frame is used to trigger a station to send an EHT TB PPDU; and the AP receives the EHT TB PPDU sent by the station. A common information field of the trigger frame includes four UL SRP fields, indicating a sum of transmit power of the AP and maximum interference power accepted by the AP. A U-SIG of the EHT TB PPDU includes only two SRP fields: an SRP1 field and an SRP2 field. The SRP1 field and the SRP2 field respectively indicate SRP values on different subchannels, and the SRP value is equal to a sum of transmit power of the AP on the corresponding subchannel and maximum interference power accepted by the AP. The values indicated by the SRP1 field and the SRP2 field in the U-SIG are respectively determined based on values indicated by the four UL SRP fields in the common information field of the trigger frame.

Optionally, the trigger frame is further used to trigger a station to send an HE TB PPDU. Values of four SRP fields included in an HE-SIG-A of the HE TB PPDU are respectively copied from the foregoing four UL SRP fields. A length of each UL SRP field is 4 bits, and a length of each SRP field in the HE-SIG-A is also 4 bits.

In one aspect of this solution, content of the trigger frame is not changed (that is, the UL SRP value in the trigger frame is not changed), so that the HE station can set the spatial reuse parameter in an original manner, and for the HE station, there is no loss in granularity. In another aspect, a frame structure of the U-SIG is not changed (for example, the 1-byte length is maintained), and the spatial reuse parameter in the U-SIG of the EHT TB PPDU is set based on the four UL SRP fields in the trigger frame, so that the EHT station can be scheduled by using the trigger frame to send an uplink EHT TB PPDU, and the HE station and the EHT station can be scheduled by using a same trigger frame.

According to a second aspect according to the invention, the invention also provides another method for determining a spatial reuse parameter field in a PPDU. The method includes: A STA receives a trigger frame from an AP, where the trigger frame is used to trigger the STA to send an EHT TB PPDU; and the STA sends the EHT TB PPDU. A common information field of the trigger frame includes four UL SRP fields, indicating a sum of transmit power of the AP and maximum interference power accepted by the AP. A U-SIG of the EHT TB PPDU includes only two SRP fields: an SRP1 field and an SRP2 field. The SRP1 field and the SRP2 field respectively indicate SRP values on different subchannels, and the SRP value is equal to a sum of transmit power of the AP on the corresponding subchannel and maximum interference power accepted by the AP. The values indicated by the SRP1 field and the SRP2 field in the U-SIG are respectively determined based on values indicated by the four UL SRP fields in the common information field of the trigger frame.

Optionally, the trigger frame is further used to trigger a station to send an HE TB PPDU. Values of four SRP fields included in an HE-SIG-A of the HE TB PPDU are respectively copied from the foregoing four UL SRP fields. A length of each UL SRP field is 4 bits, and a length of each SRP field in the HE-SIG-A is also 4 bits.

Optionally, before the STA sends the EHT TB PPDU, the method further includes: The STA sets, based on the values indicated by the four UL SRP fields in the common information field of the trigger frame, the SRP1 field and the SRP2 field that are included in the U-SIG of the EHT TB PPDU. A length of each SRP field in the U-SIG is 4 bits.

According to a third aspect according to the invention, the invention provides a communication apparatus. The communication apparatus may be, although not claimed, an AP or a chip in the AP, for example, a Wi-Fi chip. The communication apparatus includes: a processing unit, configured to generate a trigger frame, where the trigger frame is used to trigger a station to send an EHT TB PPDU; and a transceiver unit, configured to send the trigger frame. The transceiver unit is further configured to receive the EHT TB PPDU sent by the station. Values indicated by an SRP1 field and an SRP2 field in a U-SIG of the EHT TB PPDU are respectively determined based on values indicated by one or more UL SRP fields in a common information field of the trigger frame.

Optionally, although not claimed, the trigger frame is further used to trigger a station to send an HE TB PPDU. Values of four SRP fields included in an HE-SIG-A of the HE TB PPDU are respectively copied from the foregoing four UL SRP fields. A length of each UL SRP field is 4 bits, and a length of each SRP field in the HE-SIG-A is also 4 bits.

According to a fourth aspect according to the invention, the inventiob also provides another communication apparatus. The communication apparatus may be, although not claimed, a STA or a chip in the STA, for example, a Wi-Fi chip. The communication apparatus includes: a transceiver unit, configured to receive a trigger frame, where the trigger frame is used to trigger the STA to send an EHT TB PPDU; and a processing unit, configured to generate the EHT TB PPDU, where values indicated by an SRP1 field and an SRP2 field in a U-SIG of the EHT TB PPDU are respectively determined based on values indicated by one or more UL SRP fields in a common information field of the trigger frame. The transceiver unit is further configured to send the EHT TB PPDU.

Optionally, although not claimed, the processing unit is further configured to set, based on the values indicated by the four UL SRP fields in the common information field of the trigger frame, the SRP1 field and the SRP2 field that are included in the U-SIG of the EHT TB PPDU. A length of each SRP field in the U-SIG is 4 bits.

Optionally, although not claimed, the trigger frame is further used to trigger a station to send an HE TB PPDU. Values of four SRP fields included in an HE-SIG-A of the HE TB PPDU are respectively copied from the foregoing four UL SRP fields. A length of each UL SRP field is 4 bits, and a length of each SRP field in the HE-SIG-A is also 4 bits.

In an implementation of any one of the foregoing aspects, the four UL SRP fields are a UL SRP1 field, a UL SRP2 field, a UL SRP3 field, and a UL SRP4 field. When a bandwidth of the EHT TB PPDU is 20 MHz, the values indicated by the four UL SRP fields are the same, and both the value indicated by the SRP1 field and the value indicated by the SRP2 field in the U-SIG of the EHT TB PPDU are equal to a value indicated by any one of the four UL SRP fields.

In an implementation of any one of the foregoing aspects, the four UL SRP fields are a UL SRP1 field, a UL SRP2 field, a UL SRP3 field, and a UL SRP4 field. When a bandwidth of the EHT TB PPDU is 40 MHz, the UL SRP1 field and the UL SRP3 field each indicate an SRP value of a first 20 MHz subchannel on a 40 MHz channel in ascending order of frequencies, and values indicated by the UL SRP1 field and the UL SRP3 field are the same; and the UL SRP2 field and the UL SRP4 field each indicate an SRP value of a second 20 MHz subchannel on the 40 MHz channel in ascending order of frequencies, and values indicated by the UL SRP2 field and the UL SRP4 field are the same. The value indicated by the SRP1 field in the U-SIG of the EHT TB PPDU is equal to the value indicated by the UL SRP1 field or the value indicated by the UL SRP3 field, and the value indicated by the SRP2 field in the U-SIG of the EHT TB PPDU is equal to the value indicated by the UL SRP2 field or the value indicated by the UL SRP4 field.

In an implementation of any one of the foregoing aspects, the four UL SRP fields are a UL SRP1 field, a UL SRP2 field, a UL SRP3 field, and a UL SRP4 field. When a bandwidth of the EHT TB PPDU is 80 MHz, the four UL SRP fields respectively indicate SRP values of four 20 MHz subchannels on an 80 MHz channel in ascending order of frequencies. When a bandwidth of the EHT TB PPDU is 160 MHz, the four UL SRP fields respectively indicate SRP values of four 40 MHz subchannels on a 160 MHz channel in ascending order of frequencies. The value indicated by the SRP1 field in the U-SIG of the EHT TB PPDU is equal to a minimum value of the values indicated by the UL SRP1 field and the UL SRP2 field, and the value indicated by the SRP2 field in the U-SIG of the EHT TB PPDU is equal to a minimum value of the values indicated by the UL SRP3 field and the UL SRP4 field.

In an implementation of any one of the foregoing aspects, the four UL SRP fields are a UL SRP1 field, a UL SRP2 field, a UL SRP3 field, and a UL SRP4 field. When a bandwidth of the EHT TB PPDU is 320 MHz, the four UL SRP fields respectively indicate SRP values of four 40 MHz subchannels on a primary 160 MHz channel in ascending order of frequencies, and SRP values of four 40 MHz subchannels on a secondary 160 MHz channel are respectively the same as the SRP values of the four 40 MHz subchannels on the primary 160 MHz channel. That is, the SRP values on the secondary 160 MHz channel are implicitly indicated. The value indicated by the SRP1 field in the U-SIG of the EHT TB PPDU is equal to a minimum value of the values indicated by the UL SRP1 field and the UL SRP2 field, and the value indicated by the SRP2 field in the U-SIG of the EHT TB PPDU is equal to a minimum value of the values indicated by the UL SRP3 field and the UL SRP4 field.

Optionally, although not claimed, when the bandwidth of the EHT TB PPDU is 80 MHz, 160 MHz, or 320 MHz, the value indicated by the SRP1 field in the U-SIG is equal to a maximum value of the values indicated by the UL SRP1 field and the UL SRP2 field, and the value indicated by the SRP2 field in the U-SIG is equal to a maximum value of the values indicated by the UL SRP3 field and the UL SRP4 field. Alternatively, when the bandwidth of the EHT TB PPDU is 80 MHz, 160 MHz, or 320 MHz, the value indicated by the SRP1 field in the U-SIG is equal to an average value of the values indicated by the UL SRP1 field and the UL SRP2 field, and the value indicated by the SRP2 field in the U-SIG is equal to an average value of the values indicated by the UL SRP3 field and the UL SRP4 field.

In this solution, in the 80 MHz bandwidth, the 160 MHz bandwidth, and the 320 MHz bandwidth, a smaller value (or a minimum value) of the values indicated by the UL SRP1 field and the UL SRP2 is allocated to the SRP1 field in the U-SIG, and a smaller value (or a minimum value) of the values indicated by the UL SRP3 field and the UL SRP4 is allocated to the SRP2 field in the U-SIG. This can ensure that transmit power of a device located in a same OBSS as the AP does not interfere with sending of the AP on some 20 MHz subchannels, and can also resolve a problem of insufficient SRP fields in the U-SIG.

According to a fifth aspect, where the fifth aspect and any of its implementations below are not claimed, this disclosure provides a method for determining a spatial reuse parameter field in a PPDU. The method includes: An AP sends a trigger frame, where the trigger frame is used to trigger a station to send an EHT TB PPDU; and the AP receives the EHT TB PPDU sent by the station. A common information field of the trigger frame includes four uplink spatial reuse parameter UL SRP fields. Two of the four UL SRP fields indicate a same value, and the other two indicate a same value. A U-SIG of the EHT TB PPDU includes only two SRP fields: an SRP1 field and an SRP2 field. A value indicated by the SRP1 field in the U-SIG of the EHT TB PPDU is equal to a value indicated by either of the two UL SRP fields that indicate a same value, and a value indicated by the SRP2 field in the U-SIG of the EHT TB PPDU is equal to a value indicated by either of the other two UL SRP fields that indicate a same value.

Optionally, although not claimed, the trigger frame is further used to trigger a station to send an HE TB PPDU. Values of four SRP fields included in an HE-SIG-A of the HE TB PPDU are respectively copied from the foregoing four UL SRP fields. A length of each UL SRP field is 4 bits, and a length of each SRP field in the HE-SIG-A is also 4 bits.

In this solution, the UL SRP value in the trigger frame is changed (that is, content of the trigger frame is changed) to adapt to the SRP field of the U-SIG, so that the trigger frame can schedule an EHT station to send an uplink EHT TB PPDU, and an HE station and an EHT station can also be scheduled by using a same trigger frame.

According to a sixth aspect, where the sixth aspect and any of its implementations below are not claimed, this application provides a method for determining a spatial reuse parameter field in a PPDU. The method includes: A STA receives a trigger frame from an AP, where the trigger frame is used to trigger the station to send an EHT TB PPDU; and the STA sends the EHT TB PPDU. A common information field of the trigger frame includes four uplink spatial reuse parameter UL SRP fields. Two of the four UL SRP fields indicate a same value, and the other two indicate a same value. A U-SIG of the EHT TB PPDU includes only two SRP fields: an SRP1 field and an SRP2 field. A value indicated by the SRP1 field in the U-SIG of the EHT TB PPDU is equal to a value indicated by either of the two UL SRP fields that indicate a same value, and a value indicated by the SRP2 field in the U-SIG of the EHT TB PPDU is equal to a value indicated by either of the other two UL SRP fields that indicate a same value.

Optionally but not claimed, the trigger frame is further used to trigger a station to send an HE TB PPDU. Values of four SRP fields included in an HE-SIG-A of the HE TB PPDU are respectively copied from the foregoing four UL SRP fields. A length of each UL SRP field is 4 bits, and a length of each SRP field in the HE-SIG-A is also 4 bits.

Optionally but not claimed, before the STA sends the EHT TB PPDU, the method further includes: The STA sets the value indicated by the SRP1 field included in the U-SIG of the EHT TB PPDU to the value indicated by either of the two UL SRP fields that indicate a same value, and sets the value indicated by the SRP2 field in the U-SIG to the value indicated by either of the other two UL SRP fields that indicate a same value. A length of each SRP field in the U-SIG is 4 bits.

According to a seventh aspect according to the invention, the invention provides a communication apparatus. The communication apparatus may be, although not claimed, an AP or a chip in the AP, for example, a Wi-Fi chip. The communication apparatus includes: a processing unit, configured to generate a trigger frame, where the trigger frame is used to trigger a station to send an EHT TB PPDU, a common information field of the trigger frame includes four uplink spatial reuse parameter UL SRP fields, two of the four UL SRP fields indicate a same value, and the other two indicate a same value, and a transceiver unit, configured to send the trigger frame. The transceiver unit is further configured to receive the EHT TB PPDU sent by the station, where a value of an SRP1 field in a U-SIG of the EHT TB PPDU is equal to a value indicated by either of the two UL SRP fields that indicate a same value, and a value of an SRP2 field in the U-SIG of the EHT TB PPDU is equal to a value indicated by either of the other two UL SRP fields that indicate a same value.

Optionally, the trigger frame is further used to trigger a station to send an HE TB PPDU. Values of four SRP fields included in an HE-SIG-A of the HE TB PPDU are respectively copied from the foregoing four UL SRP fields. A length of each UL SRP field is 4 bits, and a length of each SRP field in the HE-SIG-A is also 4 bits.

According to an eighth aspect according to the invention, the invention also provides another communication apparatus. The communication apparatus may be a STA or a chip in the STA, for example, a Wi-Fi chip. The communication apparatus includes a transceiver unit, configured to receive a trigger frame, where the trigger frame is used to trigger the station to send an EHT TB PPDU, a common information field of the trigger frame includes four uplink spatial reuse parameter UL SRP fields, two of the four UL SRP fields indicate a same value, and the other two indicate a same value, and a processing unit, configured to generate the EHT TB PPDU, where a value indicated by an SRP1 field in a U-SIG of the EHT TB PPDU is equal to a value indicated by either of the two UL SRP fields that indicate a same value, and a value indicated by an SRP2 field in the U-SIG of the EHT TB PPDU is equal to a value indicated by either of the other two UL SRP fields that indicate a same value. The transceiver unit is further configured to send the EHT TB PPDU.

Optionally, the trigger frame is further used to trigger a station to send an HE TB PPDU. Values of four SRP fields included in an HE-SIG-A of the HE TB PPDU are respectively copied from the foregoing four UL SRP fields. A length of each UL SRP field is 4 bits, and a length of each SRP field in the HE-SIG-A is also 4 bits.

Optionally, the processing unit is further configured to: set the value indicated by the SRP1 field included in the U-SIG of the EHT TB PPDU to the value indicated by either of the two UL SRP fields that indicate a same value, and set the value indicated by the SRP2 field in the U-SIG to the value indicated by either of the other two UL SRP fields that indicate a same value. A length of each SRP field in the U-SIG is 4 bits.

In an implementation of any one of the foregoing aspects, the four UL SRP fields are a UL SRP1 field, a UL SRP2 field, a UL SRP3 field, and a UL SRP4 field. Values indicated by the UL SRP1 field and the UL SRP2 field are the same, and values indicated by the UL SRP3 field and the UL SRP4 field are the same.

Optionally, when a bandwidth of the EHT TB PPDU is 80 MHz, the four UL SRP fields respectively indicate SRP values of four 20 MHz subchannels on an 80 MHz channel in ascending order of frequencies. When a bandwidth of the EHT TB PPDU is 160 MHz, the four UL SRP fields respectively indicate SRP values of four 40 MHz subchannels on a 160 MHz channel in ascending order of frequencies. When a bandwidth of the EHT TB PPDU is 320 MHz, the four UL SRP fields respectively indicate SRP values of four 40 MHz subchannels on a primary 160 MHz channel in ascending order of frequencies, and SRP values of four 40 MHz subchannels on a secondary 160 MHz channel are respectively the same as the SRP values of the four 40 MHz subchannels on the primary 160 MHz channel. That is, the SRP values on the secondary 160 MHz channel are implicitly indicated.

According to a ninth aspect according to the invention, the invention also provides another method for determining a spatial reuse parameter field in a PPDU. The method includes: An AP sends a trigger frame, where the trigger frame is used to trigger a station to send an EHT TB PPDU; and the AP receives the EHT TB PPDU sent by the station. The trigger frame carries first indication information, and the first indication information indicates a value of an SRP1 field and/or a value of an SRP2 field in a U-SIG of the EHT TB PPDU. The value of the SRP1 field and/or the value of the SRP2 field in the U-SIG of the EHT TB PPDU are/is determined based on the first indication information.

Optionally, bit not claimed, the first indication information is located in a user information field of the trigger frame, a value of an AID12 field of the user information field is a preset value, and the preset value is any one of 2008 to 2044 or 2046 to 4095.

Optionally, but not claimed, a common information field of the first indication information further includes four UL SRP fields, and the four UL SRP fields respectively indicate values of four SRP fields in an HE TB PPDU.

Optionally, but not claimed, the trigger frame is further used to trigger a station to send an HE TB PPDU. Values of four SRP fields included in an HE-SIG-A of the HE TB PPDU are respectively copied from the foregoing four UL SRP fields. A length of each UL SRP field is 4 bits, and a length of each SRP field in the HE-SIG-A is also 4 bits.

In this solution, a special user information field in the trigger frame independently indicates a spatial reuse parameter for the EHT TB PPDU. A meaning of the special user information field is clear, and scheduling of an HE station is not affected. In this way, an HE station and an EHT station can be scheduled by using a same trigger frame.

According to a tenth aspect according to the invention, the invention also provides a method for determining a spatial reuse parameter field in a PPDU. The method includes: A STA receives a trigger frame, where the trigger frame is used to trigger the station to send an EHT TB PPDU; and the STA sends the EHT TB PPDU. The trigger frame carries first indication information, and the first indication information indicates a value of an SRP1 field and/or a value of an SRP2 field in a U-SIG of the EHT TB PPDU. The value of the SRP1 field and/or the value of the SRP2 field in the U-SIG of the EHT TB PPDU are/is determined based on the first indication information.

Optionally, but not claimed, the first indication information is located in a user information field of the trigger frame, a value of an AID12 field of the user information field is a preset value, and the preset value is any one of 2008 to 2044 or 2046 to 4095.

Optionally, but not claimed a common information field of the first indication information further includes four UL SRP fields, and the four UL SRP fields respectively indicate values of four SRP fields in an HE TB PPDU.

Optionally, but not claimed, the trigger frame is further used to trigger a station to send an HE TB PPDU. Values of four SRP fields included in an HE-SIG-A of the HE TB PPDU are respectively copied from the foregoing four UL SRP fields. A length of each UL SRP field is 4 bits, and a length of each SRP field in the HE-SIG-A is also 4 bits.

According to an eleventh aspect according to the ivnention, the invention provides a communication apparatus. The communication apparatus may be, although not claimed, an AP or a chip in the AP, for example, a Wi-Fi chip. The communication apparatus includes: a processing unit, configured to generate a trigger frame, where the trigger frame is used to trigger a station to send an EHT TB PPDU, the trigger frame carries first indication information, and the first indication information indicates a value of an SRP1 field and/or a value of an SRP2 field in a U-SIG of the EHT TB PPDU; and a transceiver unit, configured to send the trigger frame. The transceiver unit is further configured to receive the EHT TB PPDU sent by the station, where the value of the SRP1 field and/or the value of the SRP2 field in the U-SIG of the EHT TB PPDU are/is determined based on the first indication information.

Optionally, but not claimed, the first indication information is located in a user information field of the trigger frame, a value of an AID12 field of the user information field is a preset value, and the preset value is any one of 2008 to 2044 or 2046 to 4095.

Optionally, a common information field of the first indication information further includes four UL SRP fields, and the four UL SRP fields respectively indicate values of four SRP fields in an HE TB PPDU.

Optionally, but not claimed, the trigger frame is further used to trigger a station to send an HE TB PPDU. Values of four SRP fields included in an HE-SIG-A of the HE TB PPDU are respectively copied from the foregoing four UL SRP fields. A length of each UL SRP field is 4 bits, and a length of each SRP field in the HE-SIG-A is also 4 bits.

According to a twelfth aspect according to the invention, the invention provides a communication apparatus. The communication apparatus may be, although not claimed, a STA or a chip in the STA, for example, a Wi-Fi chip. The communication apparatus includes: a transceiver unit, configured to receive a trigger frame, where the trigger frame is used to trigger the station to send an EHT TB PPDU, the trigger frame carries first indication information, and the first indication information indicates a value of an SRP1 field and/or a value of an SRP2 field in a U-SIG of the EHT TB PPDU; and a processing unit, configured to generate the EHT TB PPDU, where the value of the SRP1 field and/or the value of the SRP2 field in the U-SIG of the EHT TB PPDU are/is determined based on the first indication information. The transceiver unit is further configured to send the EHT TB PPDU.

Optionally, but not claimed, the processing unit is further configured to set the value of the SRP1 field and/or the value of the SRP2 field in the U-SIG of the EHT TB PPDU based on an indication of the first indication information.

Optionally, but not claimed, the first indication information is located in a user information field of the trigger frame, a value of an AID12 field of the user information field is a preset value, and the preset value is any one of 2008 to 2044 or 2046 to 4095.

Optionally, but not claimed, a common information field of the first indication information further includes four UL SRP fields, and the four UL SRP fields respectively indicate values of four SRP fields in an HE TB PPDU.

Optionally, but not claimed, the trigger frame is further used to trigger a station to send an HE TB PPDU. Values of four SRP fields included in an HE-SIG-A of the HE TB PPDU are respectively copied from the foregoing four UL SRP fields. A length of each UL SRP field is 4 bits, and a length of each SRP field in the HE-SIG-A is also 4 bits.

In an implementation of any one of the foregoing aspects, a bandwidth of the EHT TB PPDU is 320 MHz.

In an implementation of any one of the foregoing aspects, if the first indication information indicates the value of the SRP1 field and the value of the SRP2 field in the U-SIG of the EHT TB PPDU, the value of the SRP1 field and the value of the SRP2 field in the U-SIG of the EHT TB PPDU are also set to the values indicated by the first indication information.

In an implementation of any one of the foregoing aspects, if the first indication information indicates the value of the SRP2 field in the U-SIG of the EHT TB PPDU, the value of the SRP2 field in the U-SIG of the EHT TB PPDU is set to the value indicated by the first indication information. The value of the SRP1 field in the U-SIG of the EHT TB PPDU may be set to a minimum value (or a maximum value or an average value) of values of the four UL SRP fields included in the common information field of the trigger frame. The four UL SRP fields respectively indicate SRP values of four 40 MHz subchannels on a primary 160 MHz channel in ascending order of frequencies.

Optionally, when the first indication information indicates the value of the SRP2 field in the U-SIG of the EHT TB PPDU, the first indication information may alternatively be located at a reserved bit in the common information field of the trigger frame. It should be understood that the reserved bit is different from the UL SRP field in the common information field of the trigger frame.

In this solution, the SRP1 field in the U-SIG is determined based on the four UL SRP fields in the trigger frame, and the SRP2 field in the U-SIG is determined based on a newly added field/information in the trigger frame. This can explicitly indicate SRP values on a secondary 160 MHz channel. The indication is more flexible, and the SRP values on the secondary 160 MHz channel does not need to be the same as the SRP values on the primary 160 MHz channel.

According to a thirteenth aspect, where the thirdteenth aspect and any of its implementations and options below are not claimed, this disclosure provides a method for determining a spatial reuse parameter field in a PPDU. The method includes: An AP sends a trigger frame, where the trigger frame carries second indication information, and the second indication information indicates that the trigger frame is used to schedule a station to send only an EHT TB PPDU; and the AP receives the EHT TB PPDU sent by the station. A common information field of the trigger frame includes a first UL SRP field and a second UL SRP field, the first UL SRP field indicates an SRP value of a first bandwidth in a bandwidth of the EHT TB PPDU, the second UL SRP field indicates an SRP value of a second bandwidth in the bandwidth of the EHT TB PPDU, both the first bandwidth and the second bandwidth are a half of the bandwidth of the EHT TB PPDU, and a frequency of the first bandwidth is lower than a frequency of the second bandwidth. In other words, the first UL SRP field indicates an SRP value of a bandwidth with a lower frequency in the bandwidth of the EHT TB PPDU, and the second UL SRP field indicates an SRP value of a bandwidth with a higher frequency in the bandwidth of the EHT TB PPDU. For example, the bandwidth of the EHT TB PPDU is 80 MHz. The first UL SRP field indicates a low 40 MHz bandwidth in the 80 MHz bandwidth, and the second UL SRP field indicates a high 40 MHz bandwidth in the 80 MHz bandwidth. The bandwidth of the EHT TB PPDU is any one of 40 MHz, 80 MHz, 160 MHz, and 320 MHz.

Therefore, a value indicated by an SRP1 field in a U-SIG of the EHT TB PPDU received by the AP is equal to the value indicated by the first UL SRP field, and a value indicated by an SRP2 field in the U-SIG is equal to the value indicated by the second UL SRP field.

Optionally, but not claimed, the first UL SRP field and the second UL SRP field may be any one of a UL SRP1 field, a UL SRP2 field, a UL SRP3 field, or a UL SRP4 field, and the first UL SRP field is different from the second UL SRP field. For example, the first UL SRP field is the UL SRP1 field, the second UL SRP field is the UL SRP2 field, and other UL SRP fields (that is, the UL SRP3 field and the UL SRP4 field) are reserved or used for another purpose.

Optionally, but not claimed, the second indication information may be 1 to 4 bits.

Optionally, but not claimed, when the bandwidth of the EHT TB PPDU is 20 MHz, the value of the first UL SRP field is the same as the value of the second UL SRP field, and both the first UL SRP field and the second UL SRP field indicate an SRP value of the 20 MHz bandwidth.

In this solution, when the trigger frame indicates that an EHT station is scheduled to send only an EHT TB PPDU, only two UL SRP fields (the other two UL SRP fields are reserved) in the trigger frame are used to respectively indicate SRP values in a lower frequency half and a higher frequency half of a total bandwidth. The EHT station copies values of the two UL SRP fields in the trigger frame to two SRP fields in a U-SIG. This can resolve insufficient SRP fields in the U-SRP, and can reduce indication overheads in the trigger frame.

According to a fourteenth aspect, where the fourteenth aspect and any of its implementations and options below are not claimed, this application provides a method for determining a spatial reuse parameter field in a PPDU. The method includes: A STA receives a trigger frame, where the trigger frame carries second indication information, and the second indication information indicates that the trigger frame is used to schedule a station to send only an EHT TB PPDU; and the STA sends the EHT TB PPDU. A common information field of the trigger frame includes a first UL SRP field and a second UL SRP field, the first UL SRP field indicates an SRP value of a first bandwidth in a bandwidth of the EHT TB PPDU, the second UL SRP field indicates an SRP value of a second bandwidth in the bandwidth of the EHT TB PPDU, both the first bandwidth and the second bandwidth are a half of the bandwidth of the EHT TB PPDU, and a frequency of the first bandwidth is lower than a frequency of the second bandwidth. In other words, the first UL SRP field indicates an SRP value of a bandwidth with a lower frequency in the bandwidth of the EHT TB PPDU, and the second UL SRP field indicates an SRP value of a bandwidth with a higher frequency in the bandwidth of the EHT TB PPDU. For example, the bandwidth of the EHT TB PPDU is 80 MHz. The first UL SRP field indicates a low 40 MHz bandwidth in the 80 MHz bandwidth, and the second UL SRP field indicates a high 40 MHz bandwidth in the 80 MHz bandwidth. The bandwidth of the EHT TB PPDU is any one of 40 MHz, 80 MHz, 160 MHz, and 320 MHz.

Therefore, a value indicated by an SRP1 field in a U-SIG of the EHT TB PPDU is equal to the value indicated by the first UL SRP field, and a value indicated by an SRP2 field in the U-SIG is equal to the value indicated by the second UL SRP field.

Optionally, but not claimed, the first UL SRP field and the second UL SRP field may be any one of a UL SRP1 field, a UL SRP2 field, a UL SRP3 field, or a UL SRP4 field, and the first UL SRP field is different from the second UL SRP field. For example, the first UL SRP field is the UL SRP1 field, the second UL SRP field is the UL SRP2 field, and other UL SRP fields (that is, the UL SRP3 field and the UL SRP4 field) are reserved or used for another purpose.

Optionally, but not claimed, the second indication information may be 1 to 4 bits.

Optionally, but not claimed, when the bandwidth of the EHT TB PPDU is 20 MHz, the value of the first UL SRP field is the same as the value of the second UL SRP field, and both the first UL SRP field and the second UL SRP field indicate an SRP value of the 20 MHz bandwidth.

According to a fifteenth aspect, where the fifteenth aspect and any of its implementations and options below are not claimed, this application provides a communication apparatus. The communication apparatus may be an AP or a chip in the AP, for example, a Wi-Fi chip. The communication apparatus includes: a processing unit, configured to generate a trigger frame, where the trigger frame carries second indication information, the second indication information indicates that the trigger frame is used to schedule a station to send only an EHT TB PPDU, a common information field of the trigger frame includes a first UL SRP field and a second UL SRP field, the first UL SRP field indicates an SRP value of a first bandwidth in a bandwidth of the EHT TB PPDU, the second UL SRP field indicates an SRP value of a second bandwidth in the bandwidth of the EHT TB PPDU, both the first bandwidth and the second bandwidth are a half of the bandwidth of the EHT TB PPDU, and a frequency of the first bandwidth is lower than a frequency of the second bandwidth; and a transceiver unit, configured to send the trigger frame. The transceiver unit is further configured to receive the EHT TB PPDU sent by the station. A value indicated by an SRP1 field in a U-SIG of the EHT TB PPDU is equal to the value indicated by the first UL SRP field, and a value indicated by an SRP2 field in the U-SIG of the EHT TB PPDU is equal to the value indicated by the second UL SRP field. The bandwidth of the EHT TB PPDU is any one of 40 MHz, 80 MHz, 160 MHz, and 320 MHz.

Optionally, but not claimed, the first UL SRP field and the second UL SRP field may be any one of a UL SRP1 field, a UL SRP2 field, a UL SRP3 field, or a UL SRP4 field, and the first UL SRP field is different from the second UL SRP field. For example, the first UL SRP field is the UL SRP1 field, the second UL SRP field is the UL SRP2 field, and other UL SRP fields (that is, the UL SRP3 field and the UL SRP4 field) are reserved or used for another purpose.

Optionally,but not claimed, the second indication information may be 1 to 4 bits.

Optionally, 'but not claime, when the bandwidth of the EHT TB PPDU is 20 MHz, the value of the first UL SRP field is the same as the value of the second UL SRP field, and both the first UL SRP field and the second UL SRP field indicate an SRP value of the 20 MHz bandwidth.

According to a sixteenth aspect, where the sixteenth aspect and any of its implementations and options below are not claimed, this application provides a communication apparatus. The communication apparatus may be a STA or a chip in the STA, for example, a Wi-Fi chip. The communication apparatus includes: a transceiver unit, configured to receive a trigger frame, where the trigger frame carries second indication information, the second indication information indicates that the trigger frame is used to schedule a station to send only an EHT TB PPDU, a common information field of the trigger frame includes a first UL SRP field and a second UL SRP field, the first UL SRP field indicates an SRP value of a first bandwidth in a bandwidth of the EHT TB PPDU, the second UL SRP field indicates an SRP value of a second bandwidth in the bandwidth of the EHT TB PPDU, both the first bandwidth and the second bandwidth are a half of the bandwidth of the EHT TB PPDU, and a frequency of the first bandwidth is lower than a frequency of the second bandwidth; and a processing unit, configured to generate the EHT TB PPDU. A value indicated by an SRP1 field in a U-SIG of the EHT TB PPDU is equal to the value indicated by the first UL SRP field, and a value indicated by an SRP2 field in the U-SIG of the EHT TB PPDU is equal to the value indicated by the second UL SRP field. The transceiver unit is further configured to send the EHT TB PPDU.

Optionally, but not claimed, the processing unit is further configured to: set the value indicated by the SRP1 field in the U-SIG of the EHT TB PPDU to the value indicated by the first UL SRP field, and set the value indicated by the SRP2 field in the U-SIG to the value indicated by the second UL SRP field.

Optionally, but not claimed, the first UL SRP field and the second UL SRP field may be any one of a UL SRP1 field, a UL SRP2 field, a UL SRP3 field, or a UL SRP4 field, and the first UL SRP field is different from the second UL SRP field. For example, the first UL SRP field is the UL SRP1 field, the second UL SRP field is the UL SRP2 field, and other UL SRP fields (that is, the UL SRP3 field and the UL SRP4 field) are reserved or used for another purpose.

Optionally, but not claimed, the second indication information may be 1 to 4 bits.

Optionally, but not claimd, when the bandwidth of the EHT TB PPDU is 20 MHz, the value of the first UL SRP field is the same as the value of the second UL SRP field, and both the first UL SRP field and the second UL SRP field indicate an SRP value of the 20 MHz bandwidth.

According to a seventeenth aspect, where the seventheenth aspect and any of its implementations below are not claimed, this application provides a spatial reuse method. The method includes: A communication device determines transmit power of a PPDU based on values respectively indicated by an SRP1 field and an SRP2 field in a U-SIG of an EHT TB PPDU, and/or values respectively indicated by four UL SRP fields included in a common information field of a trigger frame; and the communication device sends the PPDU based on the transmit power of the PPDU.

The communication device may be an AP or a STA. When the communication device is an AP, the PPDU is a parameterized spatial reuse reception (parameterized spatial reuse reception, PSRR) PPDU. When the communication device is a STA, the PPDU is a response frame in response to a PSRR PPDU.

Optionally, but not claimed, before the communication device determines the transmit power of the PPDU, the method further includes: The communication device receives the trigger frame, where the trigger frame includes the four UL SRP fields, a value indicated by one UL SRP field is a sum of transmit power of a first AP on a subchannel and maximum interference power accepted by the first AP. The communication device and the first AP are located in a same overlapping basic service set OBSS. The "first AP" herein is an AP that sends the trigger frame, and is also the AP in the foregoing method for determining a spatial reuse parameter field in a PPDU. The communication device and the first AP are not a same device.

Optionally, but not claimed, before the communication device determines the transmit power of the PPDU, the method further includes: The communication device receives the EHT TB PPDU, where the U-SIG of the EHT TB PPDU includes the SRP1 field and the SRP2 field. The value indicated by the SRP1 field is a sum of transmit power of a first AP on a first subchannel and maximum interference power accepted by the first AP. The value indicated by the SRP2 field is a sum of transmit power of the first AP on a second subchannel and maximum interference power accepted by the first AP. A bandwidth of the first subchannel and a bandwidth of the second subchannel are equal to a half of a bandwidth of the EHT TB PPDU, and a frequency of the first subchannel is lower than a frequency of the second subchannel. The communication device and the first AP are located in a same OBSS. The "first AP" herein is an AP that sends the trigger frame, and is also the AP in the foregoing method for determining a spatial reuse parameter field in a PPDU. If the station that sends the EHT TB PPDU is considered as a first STA, the communication device, the first STA, and the first AP are different devices, and the communication device may receive information sent by the first STA and the first AP.

This solution provides a spatial reuse method for an EHT TB PPDU, to be compatible with a case of two SRP fields in a U-SIG, and spatial reuse is implemented in compliance with an EHT standard. In this way, devices in an overlapping basic service set can simultaneously perform transmission, improving transmission efficiency.

According to an eighteenth aspect, where the rightheenth aspect and any of its implementations below are not claimed, this application provides a communication apparatus. The communication apparatus may be an AP or a STA. Further, the communication apparatus may be a chip in the AP or the STA, for example, a Wi-Fi chip. The communication apparatus includes: a determining unit, configured to determine transmit power of a PPDU based on values respectively indicated by an SRP1 field and an SRP2 field included in a U-SIG of an EHT TB PPDU and/or values respectively indicated by four UL SRP fields included in a common information field of a trigger frame; and a transceiver unit, configured to send the PPDU based on the transmit power of the PPDU.

The communication device may be an AP or a STA. When the communication device is an AP, the PPDU is a PSRR PPDU. When the communication device is a STA, the PPDU is a response frame in response to a PSRR PPDU.

Optionally, but not claimed, the transceiver unit is further configured to receive the trigger frame, where the trigger frame includes the four UL SRP fields. A value indicated by one UL SRP field is a sum of transmit power of a first AP on one subchannel and maximum interference power accepted by the first AP. The communication apparatus and the first AP are located in a same overlapping basic service set OBSS. The "first AP" herein is an AP that sends the trigger frame, and is also the AP in the foregoing method for determining a spatial reuse parameter field in a PPDU. The communication apparatus and the first AP are not a same device.

Optionally, but not claimed, the transceiver unit is further configured to receive the EHT TB PPDU, where the U-SIG of the EHT TB PPDU includes the SRP1 field and the SRP2 field. The value indicated by the SRP1 field is a sum of transmit power of a first AP on a first subchannel and maximum interference power accepted by the first AP. The value indicated by the SRP2 field is a sum of transmit power of the first AP on a second subchannel and maximum interference power accepted by the first AP. A bandwidth of the first subchannel and a bandwidth of the second subchannel are equal to a half of a bandwidth of the EHT TB PPDU, and a frequency of the first subchannel is lower than a frequency of the second subchannel. The communication apparatus and the first AP are located in a same OBSS. The "first AP" herein is an AP that sends the trigger frame, and is also the AP in the foregoing method for determining a spatial reuse parameter field in a PPDU. If the station that sends the EHT TB PPDU is considered as a first STA, the communication apparatus, the first STA, and the first AP are different devices, and the communication apparatus may receive information sent by the first STA and the first AP.

According to a nineteenth aspect, where the nineteenth aspect and any of its implementations below are not claimed, this application provides a communication apparatus, which is specifically the AP in the first aspect, and includes a processor and a transceiver. The processor is configured to generate a trigger frame, where the trigger frame is used to trigger a station to send an EHT TB PPDU. The transceiver is configured to send the trigger frame, and the transceiver is further configured to receive the EHT TB PPDU sent by the station. Values indicated by an SRP1 field and an SRP2 field in a U-SIG of the EHT TB PPDU are respectively determined based on values indicated by one or more UL SRP fields in a common information field of the trigger frame.

According to a twentieth aspect, where the twentieth aspect and any of its implementations below are not claimed, this application provides a communication apparatus, which is specifically the STA in the second aspect, and includes a processor and a transceiver. The transceiver is configured to receive a trigger frame, where the trigger frame is used to trigger the STA to send an EHT TB PPDU. The processor is configured to generate the EHT TB PPDU, and the transceiver is further configured to send the EHT TB PPDU. Values indicated by an SRP1 field and an SRP2 field in a U-SIG of the EHT TB PPDU are respectively determined based on values indicated by one or more UL SRP fields in a common information field of the trigger frame. Optionally, the processor is further configured to set, based on the values indicated by the four UL SRP fields in the common information field of the trigger frame, the SRP1 field and the SRP2 field that are included in the U-SIG of the EHT TB PPDU.

According to a twenty-first aspect, where the twenty-first aspect and any of its implementations below are not claimed, this application provides a communication apparatus, which is specifically the AP in the fifth aspect, and includes a processor and a transceiver. The processor is configured to generate a trigger frame, where the trigger frame is used to trigger a station to send an EHT TB PPDU, a common information field of the trigger frame includes four uplink spatial reuse parameter UL SRP fields, two of the four UL SRP fields indicate a same value, and the other two indicate a same value. The transceiver is configured to send the trigger frame. The transceiver is further configured to receive the EHT TB PPDU sent by the station, where a value of an SRP1 field in a U-SIG of the EHT TB PPDU is equal to a value indicated by either of the two UL SRP fields that indicate a same value, and a value of an SRP2 field in the U-SIG of the EHT TB PPDU is equal to a value indicated by either of the other two UL SRP fields that indicate a same value.

According to a twenty-second aspect, where the twenty-second aspect and any of its implementations below are not claimed, this application provides a communication apparatus, which is specifically the STA in the sixth aspect, and includes a processor and a transceiver. The transceiver is configured to receive a trigger frame, where the trigger frame is used to trigger the station to send an EHT TB PPDU, a common information field of the trigger frame includes four uplink spatial reuse parameter UL SRP fields, two of the four UL SRP fields indicate a same value, and the other two indicate a same value. The processor is configured to generate the EHT TB PPDU, where a value indicated by an SRP1 field in a U-SIG of the EHT TB PPDU is equal to a value indicated by either of the two UL SRP fields that indicate a same value, and a value indicated by an SRP2 field in the U-SIG of the EHT TB PPDU is equal to a value indicated by either of the other two UL SRP fields that indicate a same value. The transceiver is further configured to send the EHT TB PPDU. Optionally, the processor is further configured to: set the value indicated by the SRP1 field in the U-SIG of the EHT TB PPDU to a value indicated by either UL SRP field in a first group of the two groups, and set the value indicated by the SRP2 field in the U-SIG to a value indicated by either UL SRP field in a second group of the two groups.

According to a twenty-third aspect, where the twenty-third aspect and any of its implementations below are not claimed, this application provides a communication apparatus, which is specifically the AP in the ninth aspect, and includes a processor and a transceiver. The processor is configured to generate a trigger frame, where the trigger frame is used to trigger a station to send an EHT TB PPDU, the trigger frame carries first indication information, and the first indication information indicates a value of an SRP1 field and/or a value of an SRP2 field in a U-SIG of the EHT TB PPDU. The transceiver is configured to send the trigger frame. The transceiver unit is further configured to receive the EHT TB PPDU sent by the station, where the value of the SRP1 field and/or the value of the SRP2 field in the U-SIG of the EHT TB PPDU are/is determined based on the first indication information.

According to a twenty-fourth aspect, where the twenty-fourth aspect and any of its implementations below are not claimed, this application provides a communication apparatus, which is specifically the STA in the tenth aspect, and includes a processor and a transceiver. The transceiver is configured to receive a trigger frame, where the trigger frame is used to trigger the station to send an EHT TB PPDU, the trigger frame carries first indication information, and the first indication information indicates a value of an SRP1 field and/or a value of an SRP2 field in a U-SIG of the EHT TB PPDU. The processor is configured to generate the EHT TB PPDU, where the value of the SRP1 field and/or the value of the SRP2 field in the U-SIG of the EHT TB PPDU are/is determined based on the first indication information. The transceiver is further configured to send the EHT TB PPDU. Optionally, the processor is further configured to set the value of the SRP1 field and/or the value of the SRP2 field in the U-SIG of the EHT TB PPDU based on an indication of the first indication information.

According to a twenty-fifth aspect, where the twenty-fifth aspect and any of its implementations below are not claimed, this application provides a communication apparatus, which is specifically the AP in the thirteenth aspect, and includes a processor and a transceiver. The processor is configured to generate a trigger frame, where the trigger frame carries second indication information, the second indication information indicates that the trigger frame is used to schedule a station to send only an EHT TB PPDU, a common information field of the trigger frame includes a first UL SRP field and a second UL SRP field, the first UL SRP field indicates an SRP value of a first bandwidth in a bandwidth of the EHT TB PPDU, the second UL SRP field indicates an SRP value of a second bandwidth in the bandwidth of the EHT TB PPDU, both the first bandwidth and the second bandwidth are a half of the bandwidth of the EHT TB PPDU, and a frequency of the first bandwidth is lower than a frequency of the second bandwidth. The transceiver is configured to send the trigger frame. The transceiver is further configured to receive the EHT TB PPDU sent by the station. A value indicated by an SRP1 field in a U-SIG of the EHT TB PPDU is equal to the value indicated by the first UL SRP field, and a value indicated by an SRP2 field in the U-SIG of the EHT TB PPDU is equal to the value indicated by the second UL SRP field.

According to a twenty-sixth aspect, where the twenty-sixth aspect and any of its implementations below are not claimed, this application provides a communication apparatus, which is specifically the STA in the fourteenth aspect, and includes a processor and a transceiver. The transceiver is configured to receive a trigger frame, where the trigger frame carries second indication information, the second indication information indicates that the trigger frame is used to schedule a station to send only an EHT TB PPDU, a common information field of the trigger frame includes a first UL SRP field and a second UL SRP field, the first UL SRP field indicates an SRP value of a first bandwidth in a bandwidth of the EHT TB PPDU, the second UL SRP field indicates an SRP value of a second bandwidth in the bandwidth of the EHT TB PPDU, both the first bandwidth and the second bandwidth are a half of the bandwidth of the EHT TB PPDU, and a frequency of the first bandwidth is lower than a frequency of the second bandwidth. The processor is configured to generate the EHT TB PPDU. A value indicated by an SRP1 field in a U-SIG of the EHT TB PPDU is equal to the value indicated by the first UL SRP field, and a value indicated by an SRP2 field in the U-SIG of the EHT TB PPDU is equal to the value indicated by the second UL SRP field. The transceiver is further configured to send the EHT TB PPDU. Optionally, the processor is further configured to: set the value indicated by the SRP1 field in the U-SIG of the EHT TB PPDU to the value indicated by the first UL SRP field, and set the value indicated by the SRP2 field in the U-SIG to the value indicated by the second UL SRP field.

According to a twenty-seventh aspect, where the twenty-seventh aspect and any of its implementations below are not claimed, this application provides a communication apparatus, which is specifically the communication device in the seventeenth aspect, and includes a processor and a transceiver. The processor is configured to determine transmit power of a PPDU based on values respectively indicated by an SRP1 field and an SRP2 field included in a U-SIG of an EHT TB PPDU and/or values respectively indicated by four UL SRP fields included in a common information field of a trigger frame. The transceiver is configured to send the PPDU based on the transmit power of the PPDU.

The communication device may be an AP or a STA. When the communication device is an AP, the PPDU is a PSRR PPDU. When the communication device is a STA, the PPDU is a response frame in response to a PSRR PPDU.

According to a twenty-eighth aspect, where the twenty-eighth aspect and any of its implementations below are not claimed, this application provides an apparatus. The apparatus is implemented in a product form of a chip, and includes an input/output interface and a processing circuit.

In a possible design, the apparatus is a chip in the AP in the first aspect. The processing circuit is configured to generate a trigger frame, where the trigger frame is used to trigger a station to send an EHT TB PPDU. The input/output interface is configured to output the trigger frame, and send the trigger frame through an antenna after processing is performed by using a radio frequency circuit. The input/output interface is further configured to input the EHT TB PPDU that is sent by the station and that is received by using the antenna and the radio frequency circuit. Values indicated by an SRP1 field and an SRP2 field in a U-SIG of the EHT TB PPDU are respectively determined based on values indicated by one or more UL SRP fields in a common information field of the trigger frame. In another implementation, the chip may include the radio frequency circuit.

In a possible design, the apparatus is the AP in the fifth aspect. The processing circuit is configured to generate a trigger frame, where the trigger frame is used to trigger a station to send an EHT TB PPDU, a common information field of the trigger frame includes four uplink spatial reuse parameter UL SRP fields, two of the four UL SRP fields indicate a same value, and the other two indicate a same value. The input/output interface is configured to output the trigger frame, and send the trigger frame through an antenna after processing is performed by using a radio frequency circuit. The input/output interface is further configured to input the EHT TB PPDU that is sent by the station and that is received by using the antenna and the radio frequency circuit. A value indicated by an SRP1 field in a U-SIG of the EHT TB PPDU is equal to a value indicated by either of the two UL SRP fields that indicate a same value, and a value indicated by an SRP2 field in the U-SIG of the EHT TB PPDU is equal to a value indicated by either of the other two UL SRP fields that indicate a same value. In another implementation, the chip may include the radio frequency circuit.

In a possible design, the apparatus is the AP in the ninth aspect. The processing circuit is configured to generate a trigger frame, where the trigger frame is used to trigger a station to send an EHT TB PPDU, the trigger frame carries first indication information, and the first indication information indicates a value of an SRP1 field and/or a value of an SRP2 field in a U-SIG of the EHT TB PPDU. The input/output interface is configured to output the trigger frame, and send the trigger frame through an antenna after processing is performed by using a radio frequency circuit. The input/output interface is further configured to input the EHT TB PPDU that is sent by the station and that is received by using the antenna and the radio frequency circuit. The value of the SRP1 field and/or the value of the SRP2 field in the U-SIG of the EHT TB PPDU are/is determined based on the first indication information. In another implementation, the chip may include the radio frequency circuit.

In a possible but not claimed design, the apparatus is a chip in the AP in the thirteenth aspect. The processing unit is configured to generate a trigger frame, where the trigger frame carries second indication information, the second indication information indicates that the trigger frame is used to schedule a station to send only an EHT TB PPDU, a common information field of the trigger frame includes a first UL SRP field and a second UL SRP field, the first UL SRP field indicates an SRP value of a first bandwidth in a bandwidth of the EHT TB PPDU, the second UL SRP field indicates an SRP value of a second bandwidth in the bandwidth of the EHT TB PPDU, both the first bandwidth and the second bandwidth are a half of the bandwidth of the EHT TB PPDU, and a frequency of the first bandwidth is lower than a frequency of the second bandwidth. The input/output interface is configured to output the trigger frame, and send the trigger frame through an antenna after processing is performed by using a radio frequency circuit. The input/output interface is further configured to input the EHT TB PPDU that is sent by the station and that is received by using the antenna and the radio frequency circuit. A value indicated by an SRP1 field in a U-SIG of the EHT TB PPDU is equal to the value indicated by the first UL SRP field, and a value indicated by an SRP2 field in the U-SIG of the EHT TB PPDU is equal to the value indicated by the second UL SRP field. In another implementation, the chip may include the radio frequency circuit.

According to a twenty-ninth aspect, where the twenty-ninth aspect and any of its implementations below are not claimed, this application provides another apparatus. The apparatus is implemented in a product form of a chip, and includes an input/output interface and a processing circuit.

In a possible not claimed design, the apparatus is a chip in the STA in the second aspect. The input/output interface is configured to input a trigger frame received by using an antenna and a radio frequency circuit, where the trigger frame is used to trigger the apparatus to send an EHT TB PPDU. The processing circuit is configured to generate the EHT TB PPDU, where values indicated by an SRP1 field and an SRP2 field in a U-SIG of the EHT TB PPDU are respectively determined based on values indicated by one or more UL SRP fields in a common information field of the trigger frame. The input/output interface is further configured to output the EHT TB PPDU, and send the EHT TB PPDU through the antenna after processing is performed by using the radio frequency circuit. Optionally, the processing circuit is further configured to set, based on values indicated by four UL SRP fields in the common information field of the trigger frame, the SRP1 field and the SRP2 field that are included in the U-SIG of the EHT TB PPDU. In another implementation, the chip may include the radio frequency circuit.

In a possible but not calaimed design, the apparatus is a chip in the STA in the sixth aspect. The input/output interface is configured to input a trigger frame received by using an antenna and a radio frequency circuit, where the trigger frame is used to trigger the apparatus to send an EHT TB PPDU, a common information field of the trigger frame includes four uplink spatial reuse parameter UL SRP fields, two of the four UL SRP fields indicate a same value, and the other two indicate a same value. The processing circuit is configured to generate the EHT TB PPDU. A value indicated by an SRP1 field in a U-SIG of the EHT TB PPDU is equal to a value indicated by either UL SRP field in a first group of the two groups, and a value indicated by an SRP2 field in the U-SIG of the EHT TB PPDU is equal to a value indicated by either UL SRP field in a second group of the two groups. The input/output interface is further configured to output the EHT TB PPDU, and send the EHT TB PPDU through the antenna after processing is performed by using the radio frequency circuit. Optionally, the processing unit is further configured to: set the value indicated by the SRP1 field included in the U-SIG of the EHT TB PPDU to the value indicated by either of the two UL SRP fields that indicate a same value, and set the value indicated by the SRP2 field in the U-SIG to the value indicated by either of the other two UL SRP fields that indicate a same value. In another implementation, the chip may include the radio frequency circuit.

In a possible but not claimed design, the apparatus is a chip in the STA in the tenth aspect. The input/output interface is configured to input a trigger frame received by using an antenna and a radio frequency circuit, where the trigger frame is used to trigger the station to send an EHT TB PPDU, the trigger frame carries first indication information, and the first indication information indicates a value of an SRP1 field and/or a value of an SRP2 field in a U-SIG of the EHT TB PPDU. The processing circuit is configured to generate the EHT TB PPDU. The value of the SRP1 field and/or the value of the SRP2 field in the U-SIG of the EHT TB PPDU are/is determined based on the first indication information. The input/output interface is further configured to output the EHT TB PPDU, and send the EHT TB PPDU through the antenna after processing is performed by using the radio frequency circuit. Optionally, the processing circuit is further configured to set the value of the SRP1 field and/or the value of the SRP2 field in the U-SIG of the EHT TB PPDU based on an indication of the first indication information. In another implementation, the chip may include the radio frequency circuit.

In a possible not claimed design, the apparatus is a chip in the STA in the fourteenth aspect. The input/output interface is configured to input a trigger frame received by using an antenna and a radio frequency circuit, where the trigger frame carries second indication information, the second indication information indicates that the trigger frame is used to schedule a station to send only an EHT TB PPDU, a common information field of the trigger frame includes a first UL SRP field and a second UL SRP field, the first UL SRP field indicates an SRP value of a first bandwidth in a bandwidth of the EHT TB PPDU, the second UL SRP field indicates an SRP value of a second bandwidth in the bandwidth of the EHT TB PPDU, both the first bandwidth and the second bandwidth are a half of the bandwidth of the EHT TB PPDU, and a frequency of the first bandwidth is lower than a frequency of the second bandwidth. The processing circuit is configured to generate the EHT TB PPDU. A value indicated by an SRP1 field in a U-SIG of the EHT TB PPDU is equal to the value indicated by the first UL SRP field, and a value indicated by an SRP2 field in the U-SIG of the EHT TB PPDU is equal to the value indicated by the second UL SRP field. The input/output interface is further configured to output the EHT TB PPDU, and send the EHT TB PPDU through the antenna after processing is performed by using the radio frequency circuit. Optionally, the processing circuit is further configured to: set the value indicated by the SRP1 field in the U-SIG of the EHT TB PPDU to the value indicated by the first UL SRP field, and set the value indicated by the SRP2 field in the U-SIG to the value indicated by the second UL SRP field. In another implementation, the chip may include the radio frequency circuit.

According to a thirtieth aspect, where the thirtieth aspect and any of its implementations below are not claimed, this application provides another apparatus. The apparatus is implemented in a product form of a chip, and includes an input/output interface and a processing circuit. The apparatus is a chip in the communication device in the seventeenth aspect. The processing circuit is configured to determine transmit power of a PPDU based on values respectively indicated by an SRP1 field and an SRP2 field included in a U-SIG of an EHT TB PPDU and/or values respectively indicated by four UL SRP fields included in a common information field of a trigger frame. The input/output interface is configured to send, based on the transmit power of the PPDU, the PPDU through an antenna after processing is performed by using a radio frequency unit. In another implementation, the chip may include the radio frequency circuit.

The apparatus may be an AP or a STA. When the apparatus is an AP, the PPDU is a PSRR PPDU. When the apparatus is a STA, the PPDU is a response frame in response to a PSRR PPDU.

According to a thirty-first aspect according to the invention, the invention also provides a computer-readable storage medium. The computer-readable storage medium stores instructions. When the instructions are run on a computer, the computer is enabled to perform the method for determining a spatial reuse parameter field in a PPDU in the first aspect, the second aspect, the fifth aspect, the sixth aspect, the ninth aspect, the tenth aspect, the thirteenth aspect, or the fourteenth aspect.

According to a thirty-second aspect according to the invention, the invention also provides another computer-readable storage medium. The computer-readable storage medium stores instructions. When the instructions are run on a computer, the computer is enabled to perform the spatial reuse method in the seventeenth aspect.

According to a thirty-third aspect according to the invention, the invention also provides a computer program product including instructions. When the computer program product runs on a computer, the computer is enabled to perform the method for determining a spatial reuse parameter field in a PPDU in the first aspect, the second aspect, the fifth aspect, the sixth aspect, the ninth aspect, the tenth aspect, the thirteenth aspect, or the fourteenth aspect.

According to a thirty-fourth aspect according to the invention, the invention further provides another computer program product including instructions. When the computer program product runs on a computer, the computer is enabled to perform the spatial reuse method in the seventeenth aspect.

In embodiments of this application, in a scenario in which a trigger frame is used to schedule an EHT station or simultaneously schedule an HE station and an EHT station, a frame structure of an EHT TB PPDU may not be changed, and a spatial reuse parameter field of the EHT TB PPDU may be set based on four UL SRP fields in the trigger frame.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

In the description of the mebodiments of the invention with reference to the drawings below, it should be noted that in particular the embodiment 3 along with FIG: 10 reflect the technical teaching claimed in the independent claims whilst the other embodiments, irrespective whether they are claimed or not claimed (see above) serve further illustration of the invention as claimed.

### BRIEF DESCRIPTION OF DRAWINGS

To describe the technical solutions in embodiments of this application more clearly, the following briefly describes the accompanying drawings used for describing the embodiments.
FIG. 1 is a schematic diagram depicting an architecture of a wireless communication system according to an embodiment of this application;
FIG. 2a is a schematic diagram depicting a structure of an access point according to an embodiment of this application;
FIG. 2b is a schematic diagram depicting a structure of a station according to an embodiment of this application;
FIG. 3a is a schematic diagram of an OBSS formed by partially overlapping one BSS and another BSS;
FIG. 3b is a schematic diagram of an OBSS formed by one BSS including another BSS;
FIG. 4 is a schematic diagram of a trigger-based uplink scheduling transmission method in the 802.11ax standard;
FIG. 5a is a schematic diagram of a frame format of a trigger frame;
FIG. 5b is a schematic diagram of frame formats of a common information field and a user information field in a trigger frame in 802.11ax;
FIG. 6a is a schematic diagram of frame formats of a common information field and a user information field in a trigger frame in 802.11be;
FIG. 6b is a schematic diagram depicting a frame structure of an EHT TB PPDU;
FIG. 7 is a schematic flowchart 1 of a method for determining a spatial reuse parameter field in a PPDU according to an embodiment of this application;
FIG. 8 is a sequence diagram in which an HE station and an EHT station are simultaneously scheduled by using a trigger frame to perform uplink data transmission according to an embodiment of this application;
FIG. 9 is a schematic flowchart 2 of a method for determining a spatial reuse parameter field in a PPDU according to an embodiment of this application;
FIG. 10 is a schematic flowchart 3 of a method for determining a spatial reuse parameter field in a PPDU according to an embodiment of this application;
FIG. 11a is a schematic diagram of indicating an SRP in a U-SIG of a trigger frame according to an embodiment of this application;
FIG. 11b is another schematic diagram of indicating an SRP in a U-SIG of a trigger frame according to an embodiment of this application;
FIG. 12 is a schematic flowchart 4 of a method for determining a spatial reuse parameter field in a PPDU according to an embodiment of this application;
FIG. 13 is a schematic flowchart of a spatial reuse method according to an embodiment of this application;
FIG. 14 is a sequence diagram of a spatial reuse method according to an embodiment of this application;
FIG. 15 is another schematic flowchart of a spatial reuse method according to an embodiment of this application;
FIG. 16 is a schematic diagram depicting a structure of a communication apparatus 1 according to an embodiment of this application;
FIG. 17 is a schematic diagram depicting a structure of a communication apparatus 2 according to an embodiment of this application;
FIG. 18 is a schematic diagram depicting a structure of a communication apparatus 3 according to an embodiment of this application; and
FIG. 19 is a schematic diagram depicting a structure of a communication apparatus 1000 according to an embodiment of this application.

### DESCRIPTION OF EMBODIMENTS

The following clearly and completely describes the technical solutions in embodiments of this application with reference to the accompanying drawings in embodiments of this application.

For ease of understanding the method provided in embodiments of this application, the following describes a system architecture and/or an application scenario of the method provided in embodiments of this application. It may be understood that the system architecture and/or the application scenario described in embodiments of this application are/is intended to describe the technical solutions in embodiments of this application more clearly, and do/does not constitute a limitation on the technical solutions provided in embodiments of this application.

Embodiments of this application provide a method for determining a spatial reuse parameter field in a PPDU. In a scenario in which an EHT station is scheduled or an HE station and an EHT station are simultaneously scheduled by using a trigger frame, a frame structure of an EHT TB PPDU is not changed. Specifically, a length of a U-SIG field of the EHT TB PPDU is not changed (that is, maintaining 8 bits), and a spatial reuse parameter field of the EHT TB PPDU is set based on four UL SRP fields in the trigger frame. In this way, the HE station and the EHT station can be scheduled by using a same trigger frame, and spatial reuse can be implemented in compliance with the EHT standard. WLAN devices in an overlapping basic service set can simultaneously perform transmission, improving transmission efficiency. The method for determining a spatial reuse parameter field in a PPDU may be applied to a wireless communication system, for example, a wireless local area network system. The method for determining a spatial reuse parameter field in a PPDU may be implemented by a communication device in the wireless communication system or a chip or a processor in the communication device. The communication device may be an access point device or a station device. Alternatively, the communication device may be a wireless communication device that supports concurrent transmission on multiple links. For example, the communication device may be referred to as a multi-link device (multi-link device, MLD) or a multi-band device. Compared with a communication device that supports only single-link transmission, the multi-link device has higher transmission efficiency and a higher throughput.

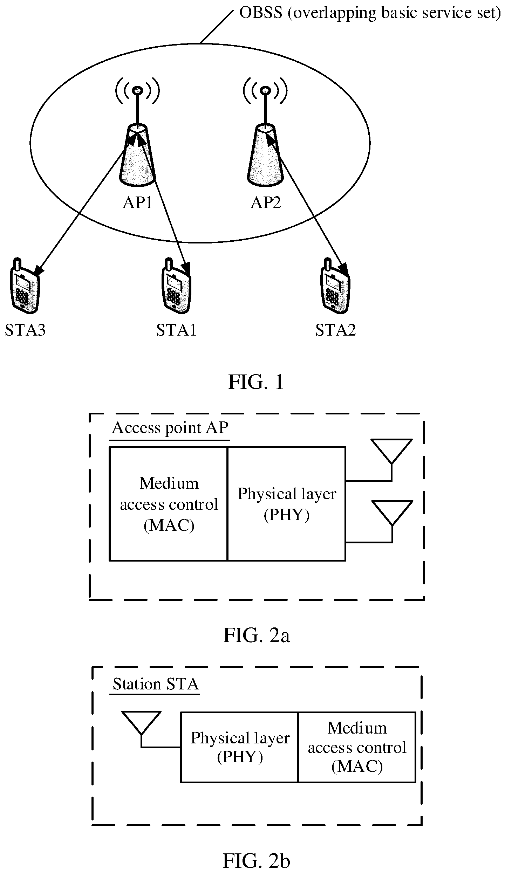

The method for determining a spatial reuse parameter field in a PPDU provided in embodiments of this application may be applied to a scenario in which an AP communicates with one or more STAs, a scenario in which an AP communicates with another AP, and a scenario in which a STA communicates with another STA. Refer to FIG. 1. FIG. 1 is a schematic diagram depicting an architecture of a wireless communication system according to an embodiment of this application. As shown in FIG. 1, the wireless communication system may include one or more APs (for example, an AP1 and an AP2 in FIG. 1) and one or more STAs (for example, a STA1, a STA2, and a STA3 in FIG. 1). The AP1 and the AP2 may be located in a same OBSS. Both the AP and the STA support a WLAN communication protocol. The communication protocol may include the 802.11be (or referred to as Wi-Fi 7, EHT protocol), and may further include protocols such as the 802.11 ax and the 802.11ac. Certainly, the communication protocol may further include a next-generation protocol of 802.11be and the like with continuous evolution and development of communication technologies. A WLAN is used as an example. An apparatus for implementing the method in this application may be an AP or a STA in the WLAN, or a chip or a processing system disposed in the AP or the STA.

An access point (for example, the AP1 or the AP2 in FIG. 1) is an apparatus having a wireless communication function, supports communication by using a WLAN protocol, has a function of communicating with another device (for example, a station or another access point) in a WLAN network, and certainly, may further have a function of communicating with another device. In a WLAN system, an access point may be referred to as an access point station (AP STA). The apparatus having a wireless communication function may be an entire device, or may be a chip or a processing system installed in the entire device. The device in which the chip or the processing system is installed may implement the method and the function in embodiments of this application under control of the chip or the processing system. An AP in embodiments of this application is an apparatus providing a service for a STA, and may support 802.11 series protocols. For example, the AP may be a communication entity, for example, a communication server, a router, a switch, or a bridge. The AP may include a macro base station, a micro base station, a relay station, and the like in various forms. Certainly, the AP may alternatively be a chip or a processing system in these devices in various forms, to implement the method and function in embodiments of this application.

A station (for example, the STA1, the STA2, or the STA3 in FIG. 1) is an apparatus having a wireless communication function, supports communication by using a WLAN protocol, and has a capability of communicating with another station or an access point in a WLAN network. In a WLAN system, a station may be referred to as a non-access point station (non-access point station, non-AP STA). For example, the STA is any user communication device that allows a user to communicate with an AP and further communicate with a WLAN. The apparatus having a wireless communication function may be an entire device, or may be a chip or a processing system installed in the entire device. The device in which the chip or the processing system is installed may implement the method and the function in embodiments of this application under control of the chip or the processing system. For example, the STA may be user equipment that can connect to the internet, for example, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), or a mobile phone. Alternatively, the STA may be an internet of things node in the internet of things, an in-vehicle communication apparatus in the internet of vehicles, an entertainment device, a game device or system, a global positioning system device, or the like. The STA may alternatively be a chip and a processing system in the foregoing terminals.

The WLAN system can provide high-speed and low-latency transmission. With continuous evolution of WLAN application scenarios, the WLAN system is to be applied to more scenarios or industries, for example, the internet of things industry, the internet of vehicles industry, the banking industry, enterprise offices, exhibition halls of stadiums, concert halls, hotel rooms, dormitories, wards, classrooms, supermarkets, squares, streets, production workshops and warehousing. Certainly, a device (such as an access point or a station) that supports WLAN communication may be a sensor node (for example, a smart water meter, a smart electricity meter, or a smart air detection node) in smart city, a smart device (for example, a smart camera, a projector, a display, a television, a stereo, a refrigerator, or a washing machine) in smart home, a node in the internet of things, an entertainment terminal (for example, an AR, a VR, or another wearable device), a smart device in smart office (for example, a printer, a projector, a loudspeaker, or a stereo), an internet of vehicles device in the internet of vehicles, an infrastructure (for example, a vending machine, a self-service navigation station of a supermarket, a self-service cash register device, or a self-service ordering machine) in daily life scenarios, a device in a large sports and music venue, and the like. Specific forms of the STA and the AP are not limited in embodiments of this application, and are merely examples for description herein.

The 802.11 standard focuses on a physical (physical layer, PHY) layer and a medium access control (medium access control, MAC) layer. Refer to FIG. 2a for an example. FIG. 2a is a schematic diagram depicting a structure of an access point according to an embodiment of this application. The AP may be multi-antenna/multi-radio frequency, or may be single-antenna/single-radio frequency. The antenna/radio frequency is configured to send/receive a data packet. In an implementation, an antenna or a radio frequency part of the AP may be separated from a main body of the AP, that is, may be remotely disposed. In FIG. 2a, the AP may include a physical layer processing circuit and a medium access control layer processing circuit. The physical layer processing circuit may be configured to process a physical layer signal, and the MAC layer processing circuit may be configured to process a MAC layer signal. Refer to FIG. 2b for another example. FIG. 2b is a schematic diagram depicting a structure of a station according to an embodiment of this application. FIG. 2b is a schematic diagram depicting a structure of a single-antenna/radio frequency STA. In an actual scenario, the STA may also be multi-antenna/multi-radio frequency, and may be a device with more than two antennas. The antenna/radio frequency is configured to send/receive a data packet. In an implementation, an antenna or a radio frequency part of the STA may be separated from a main body of the STA, that is, may be remotely disposed. In FIG. 2b, the STA may include a PHY processing circuit and a MAC processing circuit. The physical layer processing circuit may be configured to process a physical layer signal, and the MAC layer processing circuit may be configured to process a MAC layer signal.

The foregoing content briefly describes the system architecture in embodiments of this application. To better understand the technical solutions in embodiments of this application, the following describes content related to embodiments of this application.

### 1. Overlapping basic service set (Overlapping BSS, OBSS)

Overlapping basic service set: A basic service set and a basic service set of a station operate on a same channel, and the basic service set is (partly or completely) in a basic service area of the basic service set of the station. The overlapping basic service area is referred to as an overlapping basic service set (overlapping basic service set (OBSS): A basic service set (BSS) operating on the same channel as the station's (STA's) BSS and within (either partly or wholly) its basic service area (BSA)). The basic service area is an area containing members of a basic service set, and may contain members of other BSSs (basic service area (BSA): The area containing the members of a basic service set (BSS). It might contain members of other BSSs).

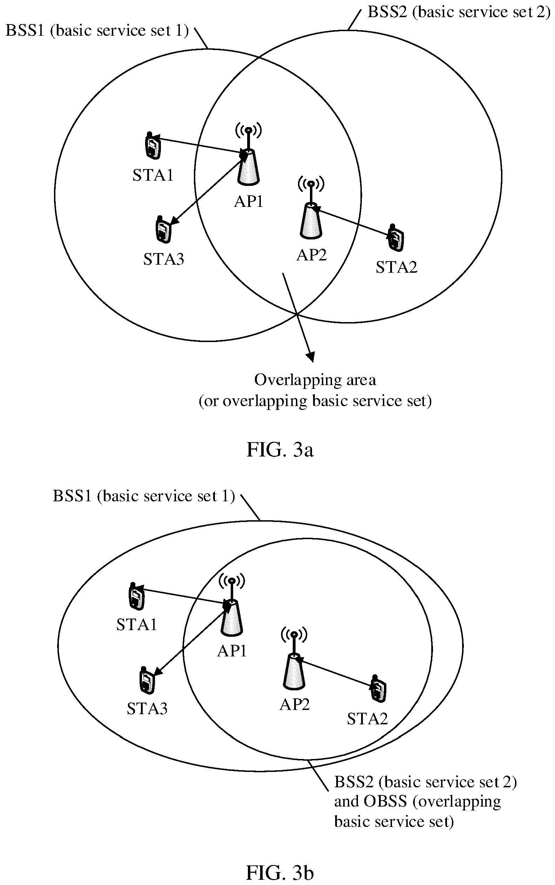

In other words, an overlapping part between a basic service area of one BSS and a basic service area of another BSS is the OBSS. It may be understood that the overlapping herein may mean that a basic service area of one BSS partially overlaps or includes a basic service area of another BSS, to be specific, a basic service area of one BSS falls within a basic service area of another BSS. Refer to FIG. 3a. FIG. 3a is a schematic diagram of an OBSS formed by partially overlapping one BSS and another BSS. In FIG. 3a, an AP1, a STA1, and a STA3 belong to a BSS1, and an AP2 and a STA2 belong to a BSS2. There is an overlapping area between the BSS1 and the BSS2, and the AP1 and the AP2 are located in the overlapping area between the BSS1 and the BSS2, in other words, located in an OBSS formed by the BSS1 and the BSS2. Refer to FIG. 3b. FIG. 3b is a schematic diagram of an OBSS formed by one BSS including another BSS. In FIG. 3b, an AP1, a STA1, and a STA3 belong to a BSS1, and an AP2 and a STA2 belong to a BSS2. The BSS1 includes the BSS2, and the AP1 and the AP2 are located in an overlapping area (namely, a basic service area of the BSS2 in FIG. 3b) between the BSS1 and the BSS2, in other words, located in an OBSS formed by the BSS1 and the BSS2.

Optionally, a WLAN device located in a same OBSS may receive information from two BSSs. For example, FIG. 3a is used as an example. When the AP1 and the STA1 located in a same BSS performs data transmission, the AP2 located in another BSS may receive information sent by the AP1 and the STA1, or the AP2 may further receive information sent by the STA3. The AP2 may adaptively adjust, based on a spatial reuse parameter transferred by the AP1, power at which the AP2 sends a PPDU to the STA2, to implement simultaneous transmission in the OBSS. Similarly, when the AP2 and the STA2 in a same BSS perform data transmission, the AP1 in another BSS may receive information sent by the AP2. Alternatively, the AP1 may adaptively adjust, based on a spatial reuse parameter transferred by the AP2, power at which the AP1 sends a PPDU to the STA1 and/or the STA3, to implement simultaneous transmission in the OBSS.

### 2. Trigger-based uplink scheduling transmission method in the 802.11ax standard

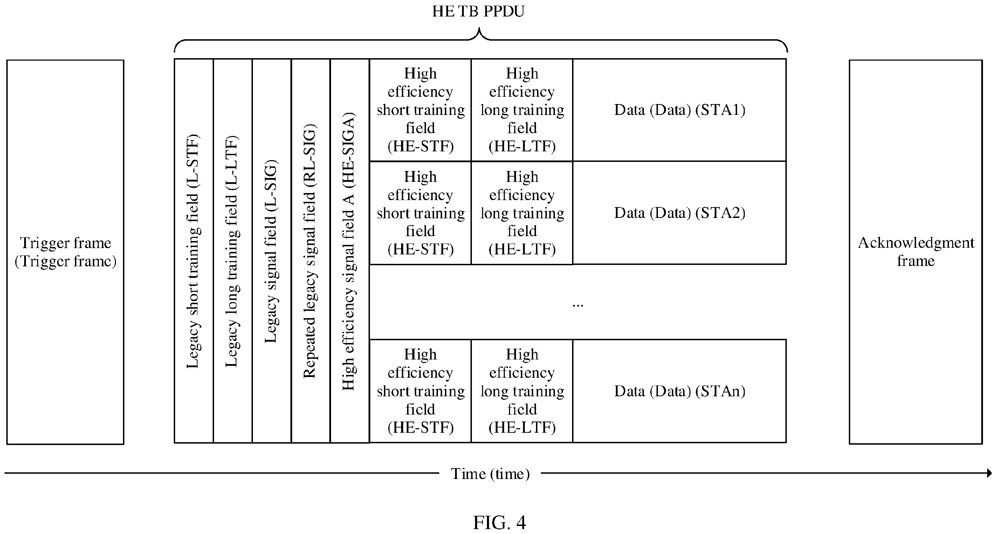

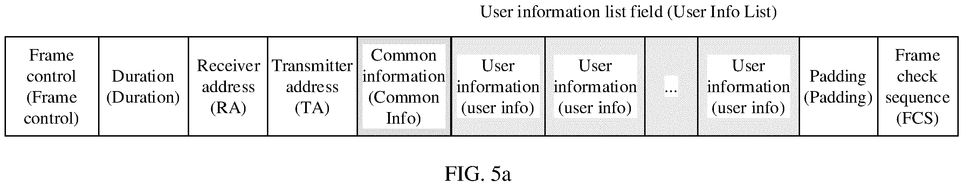

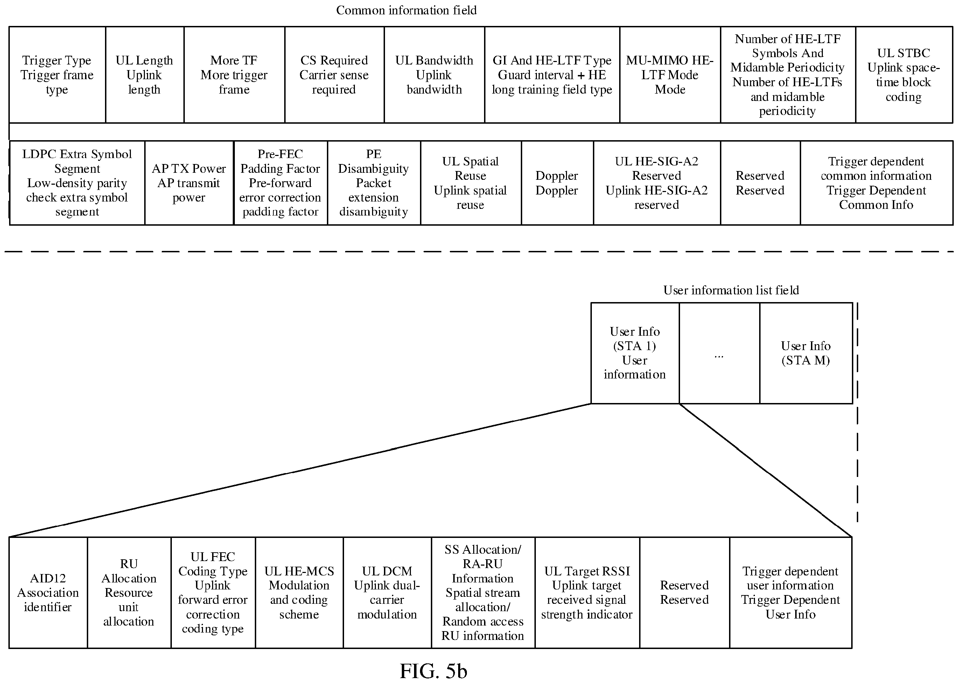

Refer to FIG. 4. FIG. 4 is a schematic diagram of a trigger-based uplink scheduling transmission method in the 802.11ax standard. As shown in FIG. 4, the trigger-based uplink scheduling transmission method in the 802.11ax standard specifically includes: (1) An AP sends a trigger frame, where the trigger frame is used to schedule one or more STAs to send an uplink trigger-based HE PPDU. A trigger-based HE PPDU may be abbreviated as an HE TB PPDU. Refer to FIG. 5a. FIG. 5a is a schematic diagram of a frame format of a trigger frame. As shown in FIG. 5a, the trigger frame includes a common information (common information) field and a user information list (user information list) field. The common information field includes common information that all STAs need to read, and includes an AP transmit power (AP TX Power) field and an uplink spatial reuse (UL Spatial Reuse) field. The user information list field includes one or more user information fields, and one user information field includes information that one STA needs to read. Refer to FIG. 5b. FIG. 5b is a schematic diagram of frame formats of a common information field and a user information field in a trigger frame in 802.11ax. As shown in FIG. 5b, in the user information field, an association identifier 12 (association identification 12, AID12) indicates an association identifier of a STA, and a resource unit (resource unit, RU) allocation (RU allocation) subfield indicates a location of a specific resource unit allocated to the STA (the STA indicated by the AID12).

(2) After receiving the trigger frame, the one or more STAs parse the trigger frame to obtain a user information field that matches an AID of the STA, and then send the HE TB PPDU on an RU indicated by a resource unit allocation subfield in the user information field.

(3) After receiving the HE TB PPDU, the AP returns an acknowledgment frame to the one or more STAs, to acknowledge that the AP has received the HE TB PPDU.

Optionally, for meanings and functions of fields that may be included in the HE TB PPDU, refer to the following Table 1.

**Table 1**

| **Acronyms and Abbreviations** | **Full name** | **Item** | Description |
|---|---|---|---|
| L-STF | Legacy Short Training Field | Legacy short training field | Performs PPDU discovery, coarse synchronization, and automatic gain control |
| L-LTF | Legacy Long Training Field | Legacy long training field | Performs fine synchronization and channel estimation |
| L-SIG | Legacy Signal Field A | Legacy signal field | Carries signaling information related to a PPDU length, to ensure coexistence |
| HE-SIG-A | High Efficient Signal Field A | High efficiency signal field A | Carries signaling used to demodulate subsequent data |
| HE-STF | High Efficient Short Training Field | High efficiency short training field | Performs automatic gain control of a subsequent field |
| HE-LTF | High Efficient Long Training Field | High efficiency long training field | Estimates a channel |
| Data | | Data | Carries data information |

### 3. EHT TB PPDU

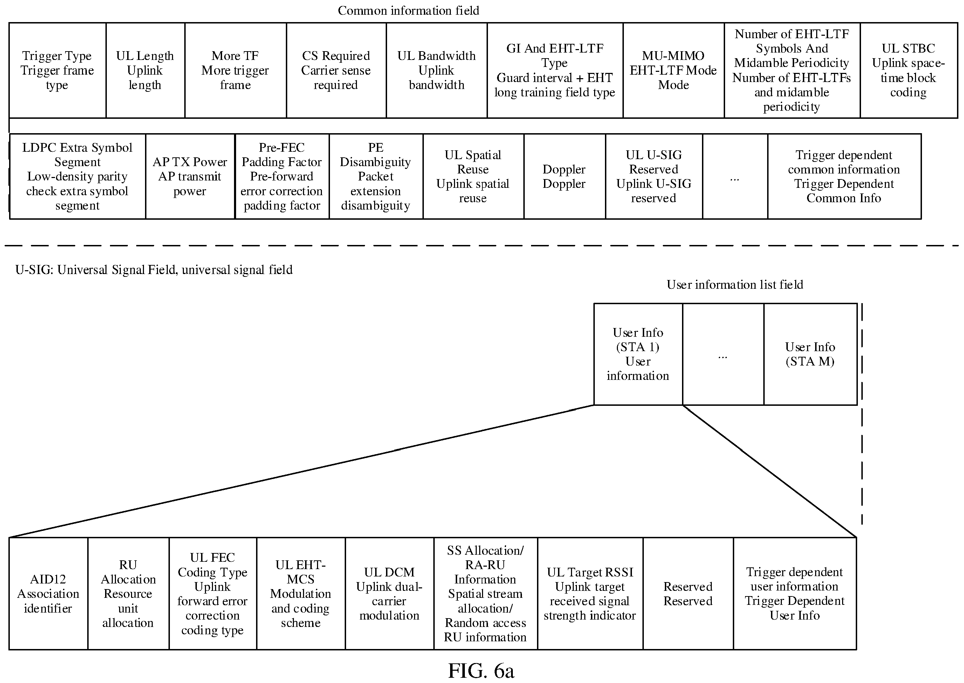

The trigger-based uplink scheduling transmission method in 802.11ax is still used in 802.11be, and a frame format and a method procedure of a trigger frame in 802.11be are similar to those in 802.11ax. Refer to FIG. 6a. FIG. 6a is a schematic diagram of frame formats of a common information field and a user information field in a trigger frame in 802.11be. The trigger frame shown in FIG. 6a may be used to schedule an EHT station to transmit uplink data, for example, schedule the EHT station to send an EHT TB PPDU. It should be understood that FIG. 6a is merely an example. In this embodiment of this application, a UL SRP field in an uplink spatial reuse field of the common information field is concerned. Another field in the trigger frame may be different from that in FIG. 6a, in other words, may be represented in another form. This is not limited in this embodiment of this application.

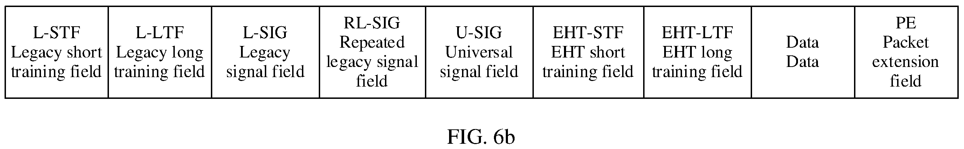

Refer to FIG. 6b. FIG. 6b is a schematic diagram depicting a frame structure of an EHT TB PPDU. As shown in FIG. 6b, the EHT TB PPDU includes a legacy short training sequence, a legacy long training sequence, a legacy signal field, a repeated legacy signal field, a universal signal field, an extremely high throughput short training sequence, an extremely high throughput long training sequence, a data field, and a data packet extension field. For meanings of the fields included in the EHT TB PPDU, refer to the following Table 2.

**Table 2**

| **Acronyms and Abbreviations** | **Full name** | **Item** | Description |
|---|---|---|---|
| L-STF | Legacy Short Training Field | Legacy short training field | Performs PPDU discovery, coarse synchronization, and automatic gain control |
| L-LTF | Legacy Long Training Field | Legacy long training field | Performs fine synchronization and channel estimation |
| L-SIG | Legacy Signal Field A | Legacy signal field | Carries signaling information related to a PPDU length, to ensure coexistence |
| RL-SIG | Repeated Legacy Signal Field | Repeated legacy signal field | Same as an L-SIG. Used together with the L-SIG for automatic detection, to improve reliability |
| U-SIG | Universal SIG | Universal signal field | Similar to an HE-SIG-A, a difference is that a unified signal field is used in an EHT PPDU and subsequent standards, and therefore, this field is referred to as the universal signal field |
| EHT-STF | Extremely High Throughput Short Training Field | Extremely high throughput short training field | Performs automatic gain control of a subsequent field |
| EHT-LTF | Extremely High Throughput Long Training Field | Extremely high throughput long training field | Estimates a channel |
| Data | | Data | Carries data information |
| PE | Packet Extension | Packet extension | For increasing processing time of a receiver |

It can be learned from the frame structure of the EHT TB PPDU in FIG. 6b that, due to a limited length of the U-SIG in the EHT TB PPDU (the length of the U-SIG is only 1 byte, that is, 8 bits), the U-SIG includes a maximum of two SRP fields, and a length of each SRP field is 4 bits. The common information field of the trigger frame carries four UL SRP fields, and the HE-SIG-A field of the HE TB PPDU also includes four SRP fields that one-to-one correspond with the four UL SRP fields in the trigger frame. Therefore, in a scenario in which an EHT station is scheduled by using a trigger frame to send an uplink EHT TB PPDU, an SRP field in an EHT TB PPDU cannot be set according to the method for setting an SRP field in an HE TB PPDU. Therefore, how to set a spatial reuse parameter to schedule an HE station and an EHT station by using a same trigger frame becomes an urgent problem to be resolved.

Embodiments of this application provide a method for determining a spatial reuse parameter field in a PPDU. For different bandwidths, an uplink spatial reuse parameter in a trigger frame and a spatial reuse parameter in an EHT TB PPDU are set without changing a frame structure of the EHT TB PPDU, so that an HE station and an EHT station can be scheduled by using a same trigger frame, and spatial reuse can be implemented in an EHT standard. In this way, WLAN devices in an overlapping basic service set can simultaneously perform transmission, improving transmission efficiency.

The following describes in detail the technical solutions provided in this application with reference to more accompanying drawings.

The technical solutions provided in this application are described by using Embodiment 1 to Embodiment 5. Embodiment 1 describes how to set a spatial reuse parameter in an EHT TB PPDU of different bandwidths (20/40/80/160/320 MHz) without changing a UL SRP value in a trigger frame of 802.11ax. Embodiment 2 describes how to set a UL SRP value in a trigger frame and a spatial reuse parameter in a trigger-based PPDU in different bandwidths (80/160/320 MHz). Embodiment 3 describes that in a 320 MHz bandwidth, a special user information field in a trigger frame is used to separately indicate a spatial reuse parameter in an EHT TB PPDU. Embodiment 4 describes how to set a UL SRP value in a trigger frame when an EHT station is scheduled to send only an EHT TB PPDU. Embodiment 5 describes a spatial reuse method based on a spatial reuse parameter in 802.11be. It may be understood that any combination of the technical solutions described in Embodiment 1 to Embodiment 5 of this application may form a new embodiment.

It may be understood that the AP and the STA in this application may be a single-link device, or may be a functional entity or a functional unit in a multi-link device. For example, the AP in this application is an AP in an AP multi-link device, and the STA is a STA in a station multi-link device. This is not limited in this application.

It may be understood that the following describes the method provided in this application by using a communication system including one or more APs and one or more STAs as an example. The AP supports the 802.11be protocol (or referred to as the Wi-Fi 7, the EHT protocol), and may further support another WLAN communication protocol, for example, protocols such as 802.11 ax and 802.11ac. At least one STA in the one or more STAs supports the 802.11be protocol, in other words, there is at least one EHT station. It should be understood that the AP and the STA in this application may further support a next-generation protocol of 802.11be. In other words, the method provided in this application is applicable to not only the 802.11be protocol, but also a next-generation protocol of 802.11be.

### Embodiment 1

Embodiment 1 of this application mainly describes setting of a spatial reuse parameter in an EHT TB PPDU of a bandwidth of 20/40/80/160/320 MHz without changing a UL SRP value in a trigger frame (or without changing content of the trigger frame).

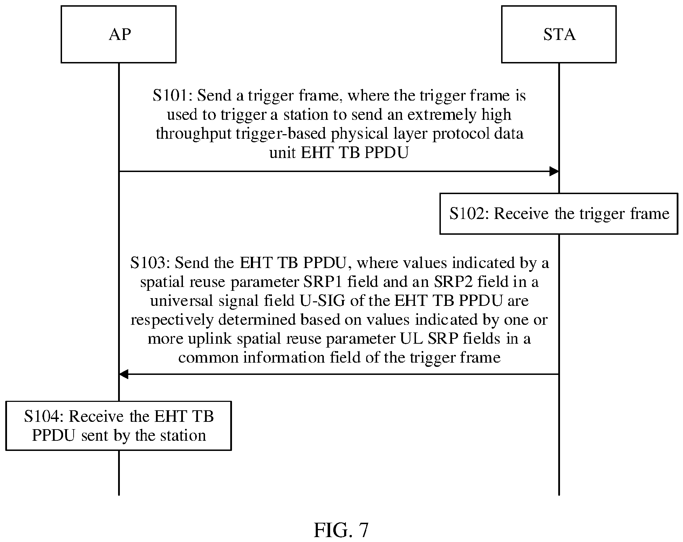

Refer to FIG. 7. FIG. 7 is a schematic flowchart 1 of a method for determining a spatial reuse parameter field in a PPDU according to an embodiment of this application. As shown in FIG. 7, the method for determining a spatial reuse parameter field in a PPDU includes but is not limited to the following steps.

S101: An AP sends a trigger frame, where the trigger frame is used to trigger a station to send an extremely high throughput trigger-based physical layer protocol data unit EHT TB PPDU.

S102: The STA receives the trigger frame.

S103: The STA sends the EHT TB PPDU, where values indicated by a spatial reuse parameter SRP1 field and an SRP2 field in a universal signal field U-SIG of the EHT TB PPDU are respectively determined based on values indicated by one or more uplink spatial reuse parameter UL SRP fields in a common information field of the trigger frame.

S104: The AP receives the EHT TB PPDU sent by the station.

Optionally, the trigger frame may be not only used to trigger an EHT station to send an EHT TB PPDU, but also used to trigger an HE station to send an HE TB PPDU. Alternatively, the trigger frame is only used to trigger an EHT station to send an EHT TB PPDU, or only used to trigger an HE station to send an HE TB PPDU. This embodiment of this application focuses on a case in which the trigger frame is used to trigger an EHT station to send an EHT TB PPDU, but is not limited to a case in which the trigger frame is only used to trigger an EHT station to send an EHT TB PPDU, and may also include a case in which the trigger frame is used to simultaneously trigger an EHT station to send an EHT TB PPDU and an HE station/EHT station to send an HE TB PPDU. It may be understood that the HE station can send only an HE TB PPDU, while the EHT station may be compatible with the 802.11ax protocol. Therefore, the EHT station may send both an HE TB PPDU and an EHT TB PPDU.

Optionally, the U-SIG of the EHT TB PPDU includes only two spatial reuse parameter (SRP) fields: the SRP1 field and the SRP2 field. The SRP1 field and the SRP2 field respectively indicate SRP values on different subchannels, and the SRP value is equal to a sum of transmit power of the AP on the corresponding subchannel and maximum interference power accepted by the AP. The values respectively indicated by the SRP1 field and the SRP2 field may be determined based on values indicated by four UL SRP fields in the common information field of the trigger frame. It should be understood that the SRP1 field and the SRP2 field in the U-SIG of the EHT TB PPDU may have other names, for example, a PSR1 field and a PSR2 field. This is not limited in this embodiment of this application.

Specifically, the trigger frame may be broadcast. After the AP sends the trigger frame, one or more stations may receive the trigger frame. If the trigger frame is used to simultaneously schedule an EHT station to send an EHT TB PPDU and an HE station to send an HE TB PPDU, the EHT station may set, based on values indicated by one or more UL SRP fields in the common information field of the received trigger frame, the values indicated by the SRP1 field and the SRP2 field in the U-SIG of the EHT TB PPDU, and send the EHT TB PPDU. In other words, the EHT station may alternatively set, based on the value indicated by the one or more UL SRP fields in the common information field of the received trigger frame, the values indicated by the SRP1 field and the SRP2 field in the U-SIG of the EHT TB PPDU. The HE station may copy the values of the four UL SRP fields in the received trigger frame to four SRP fields in the HE TB PPDU one by one, and send the HT TB PPDU.

Optionally, a correspondence between a value and a meaning of the UL SRP field or the SRP field in this application may be shown in the following Table 3. The uplink spatial reuse parameter (UL SRP) field may also be referred to as an uplink parameterized spatial reuse (UL PSR) field. In this application, the UL SRP and the UL PSR may be used interchangeably, that is, an SRP and a PSR may be used interchangeably. It may be understood that the value of the spatial reuse parameter is determined by the AP, and is equal to a sum of transmit power of the AP and maximum interference power accepted by the AP.

**Table 3**

| UL SRP field/SRP field value | Description |
|---|---|
| 0 | SRP_Disallow (parameterized spatial reuse is disallowed) |
| 1 | SRP = -80 dBm |
| 2 | SRP = -74 dBm |
| 3 | SRP = -68 dBm |
| 4 | SRP = -62 dBm |
| 5 | SRP = -56 dBm |
| 6 | SRP = -50 dBm |
| 7 | SRP = -47 dBm |
| 8 | SRP = -44 dBm |
| 9 | SRP = -41 dBm |
| 10 | SRP = -38 dBm |
| 11 | SRP = -35 dBm |
| 12 | SRP = -32 dBm |
| 13 | SRP = -29 dBm |
| 14 | SRP ≥ -26 dBm |
| 15 | SRP_AND_NON_SRG_OBSS_PD_PROHIBITED (SRP and non-SR group (Group) OBSS-packet detection (Packet Detection) is prohibited) |

It may be understood that, in this application, the value indicated by the UL SRP field may be any value in the second column in Table 3, and the value of the UL SRP field may be any value in the first column in Table 3.

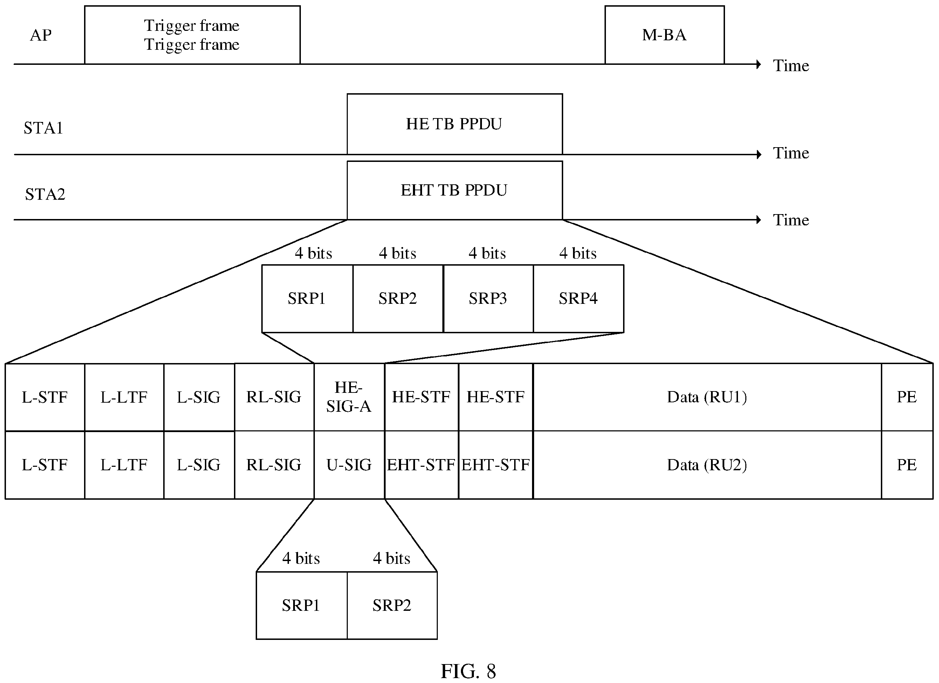

Refer to FIG. 8. FIG. 8 is a sequence diagram in which an HE station and an EHT station are simultaneously scheduled by using a trigger frame to perform uplink data transmission according to an embodiment of this application. As shown in FIG. 8, an AP sends a trigger frame, and the trigger frame is used to simultaneously schedule an HE station (for example, a STA1 in FIG. 8) and an EHT station (for example, a STA2 in FIG. 8) to perform uplink data transmission. After the STA1 and the STA2 receive the trigger frame, the STA1 sends an HE TB PPDU and the STA2 sends an EHT TB PPDU at a time interval (for example, a short interframe space). After receiving an uplink multi-user PPDU, the AP returns a multi-station block acknowledgment (Multiple STA Block Acknowledgment, M-BA) frame at a time interval (for example, a short interframe space), to acknowledge that the AP has received a PPDU sent by the one or more stations. It may be understood that the trigger frame shown in FIG. 8 may be used to schedule only an EHT station, in other words, both the STA1 and the STA2 in FIG. 8 are EHT stations. It should be further understood that the trigger frame shown in FIG. 8 may also be used to schedule a station to send only an EHT TB PPDU, in other words, both the STA1 and the STA2 in FIG. 8 send EHT TB PPDUs.

The following describes in detail settings of the SRP1 field and the SRP2 field in the U-SIG of the EHT TB PPDU in different bandwidths. It may be understood that a common information field of the trigger frame includes four UL SRP fields: a UL SRP1 field, a UL SRP2 field, a UL SRP3 field, and a UL SRP4 field.

### 1. 20 MHz bandwidth

For a 20 MHz bandwidth, only one 20 MHz subchannel (sub-channel) is included, and only one UL SRP value and one SRP value are needed. However, to unify an indication format, four UL SRP fields are still transmitted in the trigger frame, and values of the four UL SRP fields are the same, that is, UL SRP1 = UL SRP2 = UL SRP3 = UL SRP4. In other words, in the 20 MHz bandwidth, values indicated by the four UL SRP fields included in the trigger frame are the same, or values of the four UL SRP fields included in the trigger frame are the same.

For an EHT station that sends an EHT TB PPDU, if the 20 MHz bandwidth is used to schedule the EHT TB PPDU (that is, a bandwidth of the EHT TB PPDU is 20 MHz), a U-SIG of the EHT TB PPDU includes two SRP fields (that is, an SRP1 field and an SRP2 field). Both a value indicated by the SRP1 field and a value indicated by the SRP2 field are equal to the value indicated by any one of the four UL SRP fields of the trigger frame. In other words, when the bandwidth of the EHT TB PPDU is 20 MHz, both the value of the SRP1 field and the value of the SRP2 field in the U-SIG are equal to the value of any UL SRP field in the trigger frame, which may be represented as SRP1 = SRP2 = any one of the UL SRPs.

For an HE station or an EHT station that sends an HE TB PPDU, if the 20 MHz bandwidth is used to schedule the HE TB PPDU (that is, the bandwidth of the HE TB PPDU is 20 MHz), values of four SRP fields in an HE-SIG-A of the HE TB PPDU are still values copied from the four UL SRP values in the trigger frame.

It may be understood that the four SRP fields in the HE-SIG-A of the HE TB PPDU are described in this embodiment of this application in comparison with settings of the SRP1 field and the SRP2 field in the U-SIG of the EHT TB PPDU. In this embodiment of this application, settings of the four SRP fields in the HE-SIG-A of the HE TB PPDU are not changed, that is, the values of the four UL SRP fields in the trigger frame are copied one by one.

### 2. 40 MHz bandwidth

In a 40 MHz bandwidth, the trigger frame still transmits four UL SRP fields, the value of the UL SRP1 field is the same as the value of the UL SRP3 field, and the value of the UL SRP2 field is the same as the value of the UL SRP4 field, that is, UL SRP1 = UL SRP3 and UL SRP2 = UL SRP4. Specifically, in the 40 MHz bandwidth, the UL SRP1 field and the UL SRP3 field included in the trigger frame each indicate an SRP value of a first 20 MHz subchannel (that is, a low 20 MHz subchannel) in the 40 MHz bandwidth in ascending order of frequencies, and values indicated by the UL SRP1 field and the UL SRP3 field are the same. In other words, values of the UL SRP1 field and the UL SRP3 field are the same. The UL SRP2 field and the UL SRP4 field included in the trigger frame each indicate an SRP value of a second 20 MHz subchannel (that is, a high 20 MHz subchannel) in the 40 MHz bandwidth in ascending order of frequencies, and values indicated by the UL SRP2 field and the UL SRP4 field are the same. In other words, values of the UL SRP2 field and the UL SRP4 field are the same.

For an EHT TB PPDU with a 40 MHz bandwidth, a value indicated by an SRP1 field in a U-SIG of the EHT TB PPDU is equal to the value indicated by the UL SRP1 field or the value indicated by the UL SRP3 field; and a value indicated by an SRP2 field in the U-SIG of the EHT TB PPDU is equal to the value indicated by the UL SRP2 field or the value indicated by the UL SRP4 field. In other words, when the bandwidth of the EHT TB PPDU is 40 MHz, the value of the SRP1 field in the U-SIG is equal to the value of the UL SRP1 field or the UL SRP3 field in the trigger frame, which may be represented as SRP1 = UL SRP1= UL SRP3. The value of the SRP2 field in the U-SIG is equal to the value of the UL SRP2 field or the UL SRP4 field in the trigger frame, which may be represented as SRP2 = UL SRP2 = UL SRP4. In other words, in the 40 MHz bandwidth, two SRP fields in the U-SIG respectively correspond to the UL SRP1 field and the UL SRP2 field (or the UL SRP3 field and the UL SRP4 field), and each SRP field in the U-SIG indicates an SRP value on a 20 MHz subchannel.

For an HE TB PPDU (with a 40 MHz bandwidth), values of four SRP fields in an HE-SIG-A of the HE TB PPDU are still values copied from the four UL SRP values in the trigger frame.

### 3. 80 MHz or 160 MHz bandwidth

An 80 MHz bandwidth includes four 20 MHz subchannels, the common information field of the trigger frame includes four UL SRP fields, and the four UL SRP fields respectively indicate SRP values of the four 20 MHz subchannels on the 80 MHz channel in ascending order of frequencies. Similarly, a 160 MHz bandwidth includes four 40 MHz subchannels, and the four UL SRP fields in the trigger frame respectively indicate SRP values of the four 40 MHz subchannels on the 160 MHz channel in ascending order of frequencies.

For an HE TB PPDU, the four SRP fields in the HE-SIG-A one-to-one correspond with the four UL SRP fields in the trigger frame. For example, the value of the SRP1 field in the HE-SIG-A is equal to the value of the UL SRP1 field, the value of the SRP2 field in the HE-SIG-A is equal to the value of the UL SRP2 field, the value of the SRP3 field in the HE-SIG-A is equal to the value of the UL SRP3 field, and the value of the SRP4 field in the HE-SIG-A is equal to the value of the UL SRP4 field.

For an EHT TB PPDU, a U-SIG includes only two SRP fields. In a case in which content of the trigger frame is not changed, after receiving the trigger frame, the EHT station may put any two of the four UL SRP fields into one group and the other two UL SRP fields into another group, allocate a minimum value (or a maximum value or an average value) of either of the two groups to the SRP1 field in the U-SIG, and allocate a minimum value (or a maximum value or an average value) of the other group of the two groups to the SRP2 field in the U-SIG. In an example, the UL SRP1 field and the UL SRP3 field form one group, and the UL SRP2 field and the UL SRP4 field form one group. A minimum value (or a maximum value or an average value) in the values indicated by the UL SRP1 field and the UL SRP3 field is allocated to the SRP1 field in the U-SIG, and a minimum value (or a maximum value or an average value) in the values indicated by the UL SRP2 field and the UL SRP4 field is allocated to the SRP2 field in the U-SIG. In another example, the UL SRP1 field and the UL SRP4 field form one group, and the UL SRP2 field and the UL SRP3 field form one group. A minimum value (or a maximum value or an average value) in the values indicated by the UL SRP1 field and the UL SRP4 field is allocated to the SRP1 field in the U-SIG, and a minimum value (or a maximum value or an average value) in the values indicated by the UL SRP2 field and the UL SRP3 field is allocated to the SRP2 field in the U-SIG.

In still another example, after receiving the trigger frame, the EHT station selects a smaller value between the value indicated by the UL SRP1 field and the value indicated by the UL SRP2 field, and a smaller value between the value indicated by the UL SRP3 field and the value indicated by the UL SRP4 field, and allocates the values to the SRP1 field and the SRP2 field in the U-SIG. In other words, the value indicated by the SRP1 field in the U-SIG of the EHT TB PPDU is equal to the minimum value of the value indicated by the UL SRP1 field and the value indicated by the UL SRP2 field, and the value indicated by the SRP2 field is equal to the minimum value of the value indicated by the UL SRP3 field and the value indicated by the UL SRP4 field. In other words, when the bandwidth of the EHT TB PPDU is 80 MHz or 160 MHz, the value of the SRP1 field in the U-SIG is equal to a minimum value in the values of the UL SRP1 field and the UL SRP2 field, which may be represented as SRP1 = min{UL SRP1, UL SRP2}. The value of the SRP2 field in the U-SIG is equal to a minimum value in the values of the UL SRP3 field and the UL SRP4 field, which may be represented as SRP2 = min{UL SRP3, UL SRP4}. It should be understood that the function min{x, y} indicates that a minimum value of x and y is taken.

Optionally, for an EHT TB PPDU, after receiving the trigger frame, the EHT station may alternatively allocate an average value of the value indicated by the UL SRP1 field and the value indicated by the UL SRP2 field to the SRP1 field in the U-SIG, and allocate an average value of the value indicated by the UL SRP3 field and the value indicated by the UL SRP4 field to the SRP2 field in the U-SIG. In other words, the value indicated by the SRP1 field in the U-SIG of the EHT TB PPDU is equal to the average value of the value indicated by the UL SRP1 field and the value indicated by the UL SRP2 field, and the value indicated by the SRP2 field is equal to the average value of the value indicated by the UL SRP3 field and the value indicated by the UL SRP4 field. This may be represented as SRP1 = avg{UL SRP1, UL SRP2}, and SRP2 = avg{UL SRP3, UL SRP4}. It should be understood that the function avg{x, y} indicates that an average value of x and y is taken.

Optionally, for an EHT TB PPDU, after receiving the trigger frame, the EHT station may alternatively allocate a maximum value of the value indicated by the UL SRP1 field and the value indicated by the UL SRP2 field to the SRP1 field in the U-SIG, and allocate a maximum value of the value indicated by the UL SRP3 field and the value indicated by the UL SRP4 field to the SRP2 field in the U-SIG. In other words, the value indicated by the SRP1 field in the U-SIG of the EHT TB PPDU is equal to the maximum value of the value indicated by the UL SRP1 field and the value indicated by the UL SRP2 field, and the value indicated by the SRP2 field is equal to the maximum value of the value indicated by the UL SRP3 field and the value indicated by the UL SRP4 field. This may be represented as SRP1 = max{UL SRP1, UL SRP2}, and SRP2 = max{UL SRP3, UL SRP4}. It should be understood that the function max{x, y} indicates that a maximum value of x and y is taken.

It can be learned that, in this example, a minimum value/maximum value/average value is selected from the values indicated by the UL SRP1 field and the UL SRP2 field and allocated to the SRP1 field in the U-SIG, and a minimum value/maximum value/average value is selected from the values indicated by the UL SRP3 field and the UL SRP4 field and allocated to the SRP2 field in the U-SIG, so that the SRP1 field in the U-SIG may indicate an SRP value of a low half bandwidth in a total bandwidth in ascending order of frequencies, and the SRP2 field in the U-SIG may indicate an SRP value of a high half bandwidth in the total bandwidth in ascending order of frequencies. In other words, the SRP1 field in the U-SIG indicates an SRP value of a low 40 MHz bandwidth in an 80 MHz bandwidth, and the SRP2 field in the U-SIG indicates an SRP value of a high 40 MHz bandwidth in the 80 MHz bandwidth. This is the same for the 160 MHz bandwidth.

### 4. 320 MHz bandwidth

A maximum bandwidth supported in the 802.11be standard is 320 MHz, and a maximum bandwidth supported in the 802.11ax standard is 160 MHz. Therefore, to avoid affecting setting of the SRP field in the HE-SIG-A of the HE TB PPDU on a primary 160 MHz channel (that is, the HE station copies UL SRP values on the primary 160 MHz channel to the HE-SIG-A of the HE TB PPDU sent by the HE station), and the four UL SRP fields (that is, the UL SRP1 to the UL SRP4) in the trigger frame still represent the UL SRP values on the primary 160 MHz channel.

Therefore, in a 320 MHz bandwidth, the four UL SRP fields included in the trigger frame respectively indicate SRP values of four 40 MHz subchannels on a primary 160 MHz channel in ascending order of frequencies, and SRP values of four 40 MHz subchannels on a secondary 160 MHz channel are respectively the same as the SRP values of the four 40 MHz subchannels on the primary 160 MHz channel (that is, the four SRP values on the secondary 160 MHz channel one-to-one correspond with the four SRP values on the primary 160 MHz channel). In other words, the UL SRP fields represent the SRP values on the primary 160 MHz channel. Same as the indication in the 160 MHz bandwidth, the SRP values on the secondary 160 MHz channel are the same as the SRP values on the primary 160 MHz channel, and the SRP values on the secondary 160 MHz channel are implicitly indicated.

When the trigger frame is not adjusted, the smaller value between the value indicated by the UL SRP1 field and the value indicated by a UL SRP2 field, and the smaller value between the value indicated by the UL SRP3 field and the value indicated by the UL SRP4 field are selected as the values indicated by the two SRP fields in the U-SIG of the EHT TB PPDU. In other words, the value indicated by the SRP1 field in the U-SIG of the EHT TB PPDU is equal to the minimum value of the value indicated by the UL SRP1 field and the value indicated by the UL SRP2 field, and the value indicated by the SRP2 field is equal to the minimum value of the value indicated by the UL SRP3 field and the value indicated by the UL SRP4 field. In other words, when the bandwidth of the EHT TB PPDU is 320 MHz, the value of the SRP1 field in the U-SIG is equal to a minimum value in the values of the UL SRP1 field and the UL SRP2 field, which may be represented as SRP1 = min{UL SRP1, UL SRP2}. The value of the SRP2 field in the U-SIG is equal to a minimum value in the values of the UL SRP3 field and the UL SRP4 field, which may be represented as SRP2 = min{UL SRP3, UL SRP4}.

Optionally, similar to the 80 MHz bandwidth and the 160 MHz bandwidth, the SRP1 may be max{UL SRP1, UL SRP2}, and the SRP2 may be max{UL SRP3, UL SRP4}. Alternatively, the SRP1 may be avg{UL SRP1, UL SRP2}, and the SRP2 may be avg{UL SRP3, UL SRP4}.

It can be learned that, in the bandwidth of 80 MHz, 160 MHz, or 320 MHz, in this embodiment of this application, a smaller value (or a minimum value) of the value indicated by the UL SRP1 field and the value indicated by the UL SRP2 is allocated to the SRP1 field in the U-SIG, and a smaller value (or a minimum value) of the value indicated by the UL SRP3 field and the value indicated by the UL SRP4 is allocated to the SRP2 field in the U-SIG. This can ensure that transmit power of a device located in a same OBSS as the AP does not interfere with sending of the AP on some 20 MHz subchannels, and can also resolve a problem of insufficient SRP fields in the U-SIG.

It can be learned that, in different bandwidths (20 MHz/40 MHz/80 MHz/160 MHz/320 MHz), settings of the SRP1 field and the SRP2 field in the U-SIG of the EHT TB PPDU, and settings of the SRP1 field to the SRP4 field in the HE-SIG-A of the HE TB PPDU may be summarized as in Table 4. In Table 4, "/" represents an "or" relationship, that is, "A/B" represents A or B.

**Table 4**

| Bandwidth | Trigger frame | U-SIG | HE-SIG-A |
|---|---|---|---|
| 20 MHz | UL SRP1 = UL SRP2 = UL SRP3 = UL SRP4 | SRP1 = SRP2 = UL | SRP1= SRP2= SRP3 = SRP4 = UL SRP1 |
| | | SRP1/UL SRP2/UL | |
| | | SRP3/UL SRP4 | |
| 40 MHz | UL SRP1 = UL SRP3, and | SRP1 = UL SRP1/UL | SRP1 = SRP3 = UL |
| | UL SRP2 = UL SRP4 | SRP3, and | SRP1/UL SRP3, and |
| | | SRP2 = UL SRP2/UL | SRP2 = SRP4 = UL |
| | | SRP4 | SRP2/UL SRP4 |
| 80 MHz | Four different UL SRP values, each representing a 20 MHz subchannel (Four different UL SRP values, each represents to a 20MHz sub-channel) | SRP1 = min{UL SRP1, UL SRP2}, and | One for each (One for each), that is: |
| | | SRP2 = min{UL SRP3, UL SRP4} | SRP1 = UL SRP1, |
| | | | SRP2 = UL SRP2, |
| | | | SRP3 = UL SRP3, |
| | | | and |
| | | | SRP4 = UL SRP4 |
| 160 MHz | Four different UL SRP values, each representing a 40 MHz subchannel (Four different UL SRP values, each represents to a 40 MHz sub-channel) | SRP1 = min{UL SRP1, UL SRP2}, and | One for each (One for each), that is: |
| | | SRP2 = min{UL SRP3, UL SRP4} | SRP1 = UL SRP1, |
| | | | SRP2 = UL SRP2, |
| | | | SRP3 = UL SRP3, |
| | | | and |
| | | | SRP4 = UL SRP4 |
| 320 MHz | Four UL SRPs represent SRP values in a primary 160 MHz (channel), and SRP values in a secondary 160 MHz (channel) are respectively equal to the SRP values in the primary 160 MHz (channel) (Four UL SRP represents SRP value in P160 (primary 160), SRP values in S160 are equal to P160 respectively). For the primary 160 MHz (channel), four different UL SRP values, each representing a 40 MHz subchannel (For P160, four different UL SRP values, each represents to a 40MHz sub-channel). | SRP1 = min{UL SRP1, | Copy (Copy), that is, |
| | | UL SRP2}, | SRP1 = UL SRP1, |
| | | SRP2 = min{UL SRP3, UL SRP4}, | SRP2 = UL SRP2, |
| | | | SRP3 = UL SRP3, |
| | | SRP values in a secondary 160 MHz (channel) are respectively the same as SRP values in a primary 160 MHz (channel), and are implicitly indicated (SRP values in S160 are same as P160 respectively, and implicitly indicated). | and |
| | | | SRP4 = UL SRP4 |

It can be learned that in this embodiment of this application, for different bandwidths, content of the trigger frame is not changed (that is, the UL SRP value in the trigger frame is not changed), so that the HE station can set the spatial reuse parameter in an original manner, and for the HE station, there is no loss in granularity. In addition, in this embodiment of this application, a frame structure of the U-SIG is not changed (for example, the 1-byte length is maintained), and the spatial reuse parameter in the U-SIG of the EHT TB PPDU is set based on the four UL SRP fields in the trigger frame, so that the EHT station can be scheduled by using the trigger frame to send an uplink EHT TB PPDU, and the HE station and the EHT station can be scheduled by using a same trigger frame.

### Embodiment 2

Embodiment 2 of this application mainly describes how to change a UL SRP value in a trigger frame (that is, change content of the trigger frame) to adapt to an SRP field of a U-SIG in different bandwidths (80/160/320 MHz), and how to set a spatial reuse parameter in a trigger-based PPDU (HE TB PPDU and EHT TB PPDU) after the UL SRP value in the trigger frame changes.

It may be understood that, in actual application, Embodiment 2 of this application may be implemented with reference to some implementations in Embodiment 1, or may be separately implemented. This is not limited in this embodiment of this application. For example, Embodiment 2 of this application is implemented together with the manner of setting the SRP1 field and the SRP2 field in the U-SIG when the bandwidth is 20 MHz and/or 40 MHz in Embodiment 1. In other words, in Embodiment 2 of this application, when the bandwidth is 20 MHz or 40 MHz, the UL SRP value in the trigger frame is not changed. For a manner of setting an SRP1 field and an SRP2 field in a U-SIG of an EHT TB PPDU, refer to corresponding descriptions in Embodiment 1. Details are not described herein again.

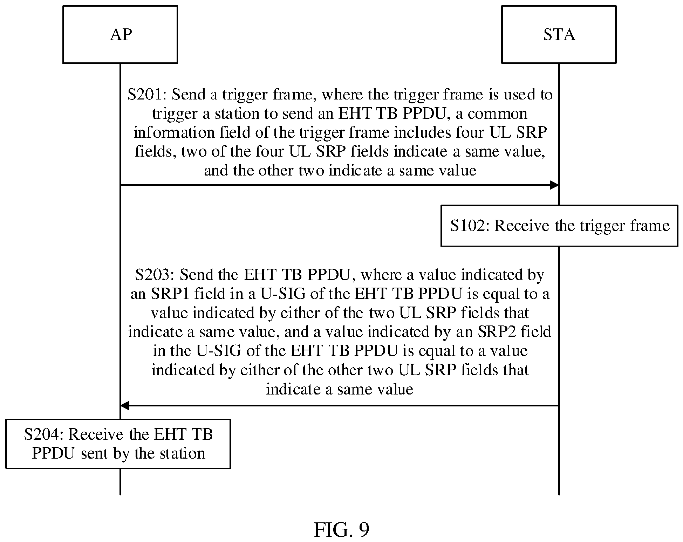

Refer to FIG. 9. FIG. 9 is a schematic flowchart 2 of a method for determining a spatial reuse parameter field in a PPDU according to an embodiment of this application. As shown in FIG. 9, the method for determining a spatial reuse parameter field in a PPDU includes but is not limited to the following steps.

S201: An AP sends a trigger frame, where the trigger frame is used to trigger a station to send an EHT TB PPDU, a common information field of the trigger frame includes four UL SRP fields, two of the four UL SRP fields indicate a same value, and the other two indicate a same value.

S202: The STA receives the trigger frame.

S203: The STA sends the EHT TB PPDU, where a value indicated by an SRP1 field in a U-SIG of the EHT TB PPDU is equal to a value indicated by either of the two UL SRP fields that indicate a same value, and a value indicated by an SRP2 field in the U-SIG of the EHT TB PPDU is equal to a value indicated by either of the other two UL SRP fields that indicate a same value.

S204: The AP receives the EHT TB PPDU sent by the station.

Optionally, the trigger frame may be not only used to trigger an EHT station to send an EHT TB PPDU, but also used to trigger an HE station to send an HE TB PPDU. Alternatively, the trigger frame is only used to trigger an EHT station to send an EHT TB PPDU, or only used to trigger an HE station to send an HE TB PPDU. This embodiment of this application focuses on a case in which the trigger frame is used to trigger an EHT station to send an EHT TB PPDU, but is not limited to a case in which the trigger frame is only used to trigger an EHT station to send an EHT TB PPDU, and may also include a case in which the trigger frame is used to simultaneously trigger an EHT station to send an EHT TB PPDU and an HE station/EHT station to send an HE TB PPDU.

Optionally, the U-SIG of the EHT TB PPDU includes only two spatial reuse parameter (SRP) fields: the SRP1 field and the SRP2 field. The SRP1 field and the SRP2 field respectively indicate SRP values on different subchannels, and the SRP value is equal to a sum of transmit power of the AP on the corresponding subchannel and maximum interference power accepted by the AP. It should be understood that the SRP1 field and the SRP2 field in the U-SIG of the EHT TB PPDU may have other names, for example, a PSR1 field and a PSR2 field. This is not limited in this embodiment of this application.

The common information field of the trigger frame still includes four UL SRP fields: a UL SRP1 field, a UL SRP2 field, a UL SRP3 field, and a UL SRP4 field. Two of the four UL SRP fields indicate a same value, and the other two indicate a same value. In other words, the four UL SRP fields may be considered as two groups, each group includes two UL SRP fields, and values indicated by two UL SRP fields in each group are the same. For example, the UL SRP1 field and the UL SRP2 field are considered as one group, and the UL SRP3 field and the UL SRP4 field are considered as another group; or the UL SRP1 field and the UL SRP3 field are considered as one group, and the UL SRP2 field and the UL SRP4 field are considered as another group; or the UL SRP1 field and the UL SRP4 field are considered as one group, and the UL SRP2 field and the UL SRP3 field are considered as another group. The value indicated by the SRP1 field in the U-SIG of the EHT TB PPDU is equal to a value indicated by either UL SRP field in one group (that is, two UL SRP fields that indicate a same value), and the value indicated by the SRP2 field in the U-SIG of the EHT TB PPDU is equal to a value indicated by either UL SRP field in the other group (that is, the other two UL SRP fields that indicate a same value).

For different bandwidths (80/160/320 MHz), the following describes in detail setting of the spatial reuse parameter field in the trigger-based PPDU by using an example in which the UL SRP1 field and the UL SRP2 field form one group, and the UL SRP3 field and the UL SRP4 field form another group.

### 1. 80 MHz or 160 MHz bandwidth

An 80 MHz bandwidth includes four 20 MHz subchannels, the common information field of the trigger frame includes four UL SRP fields, and the four UL SRP fields respectively indicate SRP values of the four 20 MHz subchannels on the 80 MHz channel in ascending order of frequencies. Similarly, a 160 MHz bandwidth includes four 40 MHz subchannels, and the four UL SRP fields in the trigger frame respectively indicate SRP values of the four 40 MHz subchannels on the 160 MHz channel in ascending order of frequencies.

In the 80 MHz or 160 MHz bandwidth, the UL SRP value in the trigger frame is changed, so that the value indicated by the UL SRP1 field is the same as the value indicated by the UL SRP2 field, and the value indicated by the UL SRP3 field is the same as the value indicated by the UL SRP4 field. That is, in the 80 MHz or 160 MHz bandwidth, a value of the UL SRP1 field in the trigger frame is the same as a value of the UL SRP2 field, which may be represented as UL SRP1 = UL SRP2. A value of the UL SRP3 field in the trigger frame is the same as a value of the UL SRP4 field, which may be represented as UL SRP3 = UL SRP4. In other words, for the 80 MHz bandwidth, in the trigger frame, UL SRP values of two 20 MHz subchannels of a first 40 MHz subchannel in ascending order of frequencies are the same, and UL SRP values of two 20 MHz subchannels of a second 40 MHz subchannel in ascending order of frequencies are also the same. For the 160 MHz bandwidth, in the trigger frame, UL SRP values of two 40 MHz subchannels of a first 80 MHz subchannel in ascending order of frequencies are the same, and UL SRP values of two 40 MHz subchannels of a second 80 MHz subchannel in ascending order of frequencies are also the same.

For an HE TB PPDU, four SRP fields in an HE-SIG-A one-to-one correspond with the four UL SRP fields in the trigger frame, that is, values of the four SRP fields in the HE-SIG-A are still copied from the values of the four UL SRP fields in the trigger frame. For example, the value of the SRP1 field in the HE-SIG-A is equal to the value of the UL SRP1 field, the value of the SRP2 field in the HE-SIG-A is equal to the value of the UL SRP2 field, the value of the SRP3 field in the HE-SIG-A is equal to the value of the UL SRP3 field, and the value of the SRP4 field in the HE-SIG-A is equal to the value of the UL SRP4 field. For an EHT TB PPDU, a U-SIG includes only two SRP fields. The value indicated by the SRP1 field in the U-SIG is equal to the value indicated by the UL SRP1 field or the UL SRP2 field, and the value indicated by the SRP2 field in the U-SIG is equal to the value indicated by the UL SRP3 field or the UL SRP4 field. In other words, when the bandwidth of the EHT TB PPDU is 80 MHz or 160 MHz, the value of the SRP1 field in the U-SIG is equal to the value of the UL SRP1 field or the UL SRP2 field, which may be represented as SRP1 = UL SRP1/UL SRP2. The value of the SRP2 field in the U-SIG is equal to the value of the UL SRP3 field or the UL SRP4 field, which may be represented as SRP2= UL SRP3/UL SRP4.

Optionally, in the 80 MHz or 160 MHz bandwidth, how to make the value indicated by the UL SRP1 field in the trigger frame the same as the value indicated by the UL SRP2 field (or UL SRP1 = UL SRP2) and how to make the value indicated by the UL SRP3 field the same as the value indicated by the UL SRP4 field (or UL SRP3 = UL SRP4) may be determined by the AP. In an example, in the 80 MHz bandwidth, UL SRP1 = UL SRP2 = min {transmit power of the AP + maximum interference power accepted by the AP on a first 20 MHz subchannel, transmit power of the AP + maximum interference power accepted by the AP on a second 20 MHz subchannel}; and UL SRP3 = UL SRP4 = min {transmit power of the AP + maximum interference power accepted by the AP on a third 20 MHz subchannel, transmit power of the AP + maximum interference power accepted by the AP on a fourth 20 MHz subchannel}. The first, the second, the third, and the fourth 20 MHz subchannels are four 20 MHz subchannels in the 80 MHz bandwidth in ascending order of frequencies. The function min{x, y} indicates that a minimum value of x and y is taken.

Similarly, in another example, in the 160 MHz bandwidth, UL SRP1 = UL SRP2 = min{transmit power of the AP + maximum interference power accepted by the AP on a first 40 MHz subchannel, transmit power of the AP + maximum interference power accepted by the AP on a second 40 MHz subchannel}; and UL SRP3 = UL SRP4 = min {transmit power of the AP + maximum interference power accepted by the AP on a third 40 MHz subchannel, transmit power of the AP + maximum interference power accepted by the AP on a fourth 40 MHz subchannel}. The first, the second, the third, and the fourth 40 MHz subchannels are four 40 MHz subchannels in the 160 MHz bandwidth in ascending order of frequencies.

Optionally, in the 80 MHz or 160 MHz bandwidth, UL SRP1 = UL SRP2 = max{transmit power of the AP + maximum interference power accepted by the AP on a first 20 MHz (or 40 MHz) subchannel, transmit power of the AP + maximum interference power accepted by the AP on a second 20 MHz (or 40 MHz) subchannel}; and UL SRP3 = UL SRP4 = max{transmit power of the AP + maximum interference power accepted by the AP on a third 20 MHz (or 40 MHz) subchannel, transmit power of the AP + maximum interference power accepted by the AP on a fourth 20 MHz (or 40 MHz) subchannel}.

Optionally, in the 80 MHz or 160 MHz bandwidth, UL SRP1 = UL SRP2 = avg{transmit power of the AP + maximum interference power accepted by the AP on a first 20 MHz (or 40 MHz) subchannel, transmit power of the AP + maximum interference power accepted by the AP on a second 20 MHz (or 40 MHz) subchannel}; and UL SRP3 = UL SRP4 = avg{transmit power of the AP + maximum interference power accepted by the AP on a third 20 MHz (or 40 MHz) subchannel, transmit power of the AP + maximum interference power accepted by the AP on a fourth 20 MHz (or 40 MHz) subchannel}.

### 2. 320 MHz bandwidth

A maximum bandwidth supported in the 802.11be standard is 320 MHz, and a maximum bandwidth supported in the 802.11ax standard is 160 MHz. Therefore, to avoid affecting setting of the SRP field in the HE-SIG-A of the HE TB PPDU on a primary 160 MHz channel (that is, the HE station copies UL SRP values on the primary 160 MHz channel to the HE-SIG-A of the HE TB PPDU sent by the HE station), and the four UL SRP fields (that is, the UL SRP1 to the UL SRP4) in the trigger frame still represent the UL SRP values on the primary 160 MHz channel.

Therefore, in a 320 MHz bandwidth, the four UL SRP fields included in the trigger frame respectively indicate SRP values of four 40 MHz subchannels on a primary 160 MHz channel in ascending order of frequencies, and SRP values of four 40 MHz subchannels on a secondary 160 MHz channel are respectively the same as the SRP values of the four 40 MHz subchannels on the primary 160 MHz channel (that is, the four SRP values on the secondary 160 MHz channel one-to-one correspond with the four SRP values on the primary 160 MHz channel).

In the 320 MHz bandwidth, the UL SRP value in the trigger frame is changed, so that the value indicated by the UL SRP1 field is the same as the value indicated by the UL SRP2 field, and the value indicated by the UL SRP3 field is the same as the value indicated by the UL SRP4 field. That is, in the 320 MHz bandwidth, a value of the UL SRP1 field in the trigger frame is the same as a value of the UL SRP2 field, which may be represented as UL SRP1 = UL SRP2. A value of the UL SRP3 field in the trigger frame is the same as a value of the UL SRP4 field, which may be represented as UL SRP3 = UL SRP4.

For an HE TB PPDU, four SRP fields in an HE-SIG-A one-to-one correspond with the four UL SRP fields in the trigger frame, that is, values of the four SRP fields in the HE-SIG-A are still copied from the values of the four UL SRP fields in the trigger frame. For an EHT TB PPDU, a U-SIG includes only two SRP fields. The value indicated by the SRP1 field in the U-SIG is equal to the value indicated by the UL SRP1 field or the UL SRP2 field, and the value indicated by the SRP2 field in the U-SIG is equal to the value indicated by the UL SRP3 field or the UL SRP4 field. In other words, when the bandwidth of the EHT TB PPDU is 320 MHz, the value of the SRP1 field in the U-SIG is equal to the value of the UL SRP1 field or the UL SRP2 field, which may be represented as SRP1 = UL SRP1/UL SRP2. The value of the SRP2 field in the U-SIG is equal to the value of the UL SRP3 field or the UL SRP4 field, which may be represented as SRP2 = UL SRP3/UL SRP4. It can be learned that the U-SIG uses two SRP fields to determine SRP values of the entire 320 MHz bandwidth (the four UL SRP fields in the trigger frame still indicate only an SRP value of each 80 MHz subband in the primary 160 MHz, and an SRP value in the secondary 160 MHz is the same as the SRP value in the primary 160 MHz), and the four SRP fields in the HE-SIG-A correctly indicate SRP information on the primary 160 MHz channel.

Optionally, in the 320 MHz bandwidth, how to make the value indicated by the UL SRP1 field in the trigger frame the same as the value indicated by the UL SRP2 field (or UL SRP1 = UL SRP2) and how to make the value indicated by the UL SRP3 field the same as the value indicated by the UL SRP4 field (or UL SRP3 = UL SRP4) may be determined by the AP. For details, refer to corresponding descriptions in the foregoing 80 MHz or 160 MHz bandwidth. Details are not described herein again.

It can be learned that, in different bandwidths (80 MHz/160 MHz/320 MHz), settings of the UL SRP1 field to the UL SRP4 field in the trigger frame, settings of the SRP1 field and the SRP2 field in the U-SIG of the EHT TB PPDU, and settings of the SRP1 field to the SRP4 field in the HE-SIG-A of the HE TB PPDU may be summarized as in Table 5. "/" in Table 5 represents an "or" relationship.

**Table 5**

| Bandwidth | Trigger frame | U-SIG | HE-SIG-A |
|---|---|---|---|
| 80 MHz | UL SRP1 = UL SRP2, | SRP1 = UL SRP1/UL | One for each (One for each), that is: |
| | UL SRP3 = UL SRP4, and | SRP2, and | |
| | each value represents a 20 MHz subchannel (each represents to a 20 MHz sub-channel). | SRP2 = UL SRP3/UL | SRP1 = UL SRP1, |
| | | SRP4 | SRP2 = UL SRP2, |
| | | | SRP3 = UL SRP3, |
| | | | and |
| | | | SRP4 = UL SRP4 |
| 160 MHz | UL SRP1 = UL SRP2, | SRP1 = UL SRP1/UL | One for each (One for each), that is: |
| | UL SRP3 = UL SRP4, and | SRP2, and | |
| | each value represents a 40 MHz subchannel (each represents to a 40 MHz sub-channel). | SRP2 = UL SRP3/UL | SRP1 = UL SRP1, |
| | | SRP4 | SRP2 = UL SRP2, |
| | | | SRP3 = UL SRP3, |
| | | | and |
| | | | SRP4 = UL SRP4 |
| 320 MHz | Four UL SRPs represent SRP values in a primary 160 MHz (channel), and SRP values in a secondary 160 MHz (channel) are respectively equal to the SRP values in the primary 160 MHz (channel) (Four UL SRP represents SRP value in P160 (primary 160), SRP values in S160 are equal to P160 respectively). | SRP1 = UL SRP1/UL | Copy (Copy), that is, |
| | | SRP2, | SRP1 = UL SRP1, |
| | | SRP2 = UL SRP3/UL | SRP2 = UL SRP2, |
| | | SRP4, and | SRP3 = UL SRP3, |
| | | SRP values in a secondary 160 MHz (channel) are respectively the same as SRP values in a primary 160 MHz (channel), and are implicitly indicated (SRP values in S160 are same as P160 respectively, and implicitly indicated). | and |
| | | | SRP4 = UL SRP4 |
| | For a primary 160 MHz (channel), UL SRP1 = UL SRP2, UL SRP3 = UL SRP4, and each value represents a 40 MHz subchannel (For P160, UL SRP1 = UL SRP2, UL SRP3=UL SRP4, each represents to a 40MHz sub-channel). | | |

It may be understood that, in actual application, if Embodiment 2 of this application is implemented with reference to the manner of setting the SRP1 field and the SRP2 field in the U-SIG when the bandwidth is 20 MHz and/or 40 MHz in Embodiment 1, in the bandwidth of 20/40/80/160/320 MHz, settings of the UL SRP1 field to the UL SRP4 field in the trigger frame, settings of the SRP1 field and the SRP2 field in the U-SIG, and settings of the SRP1 field to the SRP4 field in the HE-SIG-A may be summarized as shown in Table 6 below. "/" in Table 6 represents an "or" relationship.

**Table 6**

| Bandwidth | Trigger frame | U-SIG | HE-SIG-A |
|---|---|---|---|
| 20 MHz | UL SRP1 = UL SRP2 = UL SRP3 = UL SRP4 | SRP1 = SRP2 = UL | SRP1= SRP2= SRP3 = SRP4 = UL SRP1 |
| | | SRP1/UL SRP2/UL | |
| | | SRP3/UL SRP4 | |
| 40 MHz | UL SRP1 = UL SRP3, and | SRP1 = UL SRP1/UL | SRP1 = SRP3 = UL |
| | UL SRP2 = UL SRP4 | SRP3, and | SRP1/UL SRP3, and |
| | | SRP2 = UL SRP2/UL | SRP2 = SRP4 = UL |
| | | SRP4 | SRP2/UL SRP4 |
| 80 MHz | UL SRP1 = UL SRP2, | SRP1 = UL SRP1/UL | One for each (One |
| | UL SRP3 = UL SRP4, and | SRP2, and | for each), that is: |
| | each value represents a 20 MHz subchannel (each represents to a 20 MHz sub-channel). | SRP2 = UL SRP3/UL | SRP1 = UL SRP1, |
| | | SRP4 | SRP2 = UL SRP2, |
| | | | SRP3 = UL SRP3, |
| | | | and |
| | | | SRP4 = UL SRP4 |
| 160 MHz | UL SRP1 = UL SRP2, | SRP1 = UL SRP1/UL | One for each (One |
| | UL SRP3 = UL SRP4, and | SRP2, and | for each), that is: |
| | each value represents a 40 MHz subchannel (each represents to a 40 MHz sub-channel). | SRP2 = UL SRP3/UL | SRP1 = UL SRP1, |
| | | SRP4 | SRP2 = UL SRP2, |
| | | | SRP3 = UL SRP3, |
| | | | and |
| | | | SRP4 = UL SRP4 |
| 320 MHz | Four UL SRPs represent SRP values in a primary 160 MHz (channel), and SRP values in a secondary 160 MHz (channel) are respectively equal to the SRP values in the primary 160 MHz (channel) (Four UL SRP represents SRP value in P160 (primary 160), SRP values in S160 are equal to P160 respectively). | SRP1 = UL SRP1/UL | Copy (Copy), that is, |
| | | SRP2, | SRP1 = UL SRP1, |
| | | SRP2 = UL SRP3/UL | SRP2 = UL SRP2, |
| | | SRP4, and | SRP3 = UL SRP3, |
| | | SRP values in a secondary 160 MHz (channel) are respectively the same as SRP values in a primary 160 MHz (channel), and are implicitly indicated (SRP values in S160 are same as P160 respectively, and implicitly indicated). | and |
| | | | SRP4 = UL SRP4 |
| | For a primary 160 MHz (channel), UL SRP1 = UL SRP2, UL SRP3 = UL SRP4, and each value represents a 40 MHz subchannel (For P160, UL SRP1 = UL SRP2, UL SRP3=UL SRP4, each represents to a 40MHz sub-channel). | | |

It can be learned that in this embodiment of this application, a UL SRP value in a trigger frame is changed (that is, content of the trigger frame is changed) to adapt to an SRP field of a U-SIG, and a spatial reuse parameter field in the U-SIG is set, so that the trigger frame can schedule an EHT station to send an uplink EHT TB PPDU, or an HE station and an EHT station can be scheduled by using a same trigger frame.

In an optional embodiment, for any bandwidth (for example, 20 MHz, 40 MHz, 80 MHz, 160 MHz, or 320 MHz), a UL SRP value in the trigger frame is changed, so that there is only one UL SRP value in the entire bandwidth, that is, values indicated by four UL SRP fields included in the trigger frame are the same. In other words, in any bandwidth, values of the four UL SRP fields included in the trigger frame are the same, which may be represented as UL SRP1 = UL SRP2 = UL SRP3 = UL SRP4.

For an HE TB PPDU, four SRP fields in an HE-SIG-A one-to-one correspond with the four UL SRP fields in the trigger frame, that is, values of the four SRP fields in the HE-SIG-A are still copied from the values of the four UL SRP fields in the trigger frame. For an EHT TB PPDU, a U-SIG includes only two SRP fields. Both values indicated by the SRP1 field and the SRP2 field in the U-SIG are equal to the value indicated by any one of the UL SRP1 field, the UL SRP2 field, the UL SRP3 field, and the UL SRP4 field. In other words, when the bandwidth of the EHT TB PPDU is any bandwidth, values of the SRP1 field and the SRP2 field in the U-SIG are equal to a value of any one of the UL SRP1 field, the UL SRP2 field, the UL SRP3 field, and the UL SRP4 field, which may be represented as SRP1 = SRP2 = UL SRP1/UL SRP2/UL SRP3/UL SRP4.

It can be learned that, in this embodiment of this application, two SRP fields in a U-SIG still respectively indicate SRP values in a half of an entire bandwidth.

### Embodiment 3

The invention as claimed is in particular reflected to the technical teaching of the following embodiment 3. Embodiment 3 of of the invention mainly describes that in a case of a 320 MHz bandwidth, a special user information field in a trigger frame independently indicates a spatial reuse parameter for an EHT TB PPDU.

It may be understood that, in actual application, Embodiment 3 of this invention may be implemented with reference to the foregoing Embodiment 1 or Embodiment 2 in terms of manners of setting the SRP1 field and the SRP2 field in the U-SIG in bandwidths of 20 MHz, 40 MHz, 80 MHz, and 160 MHz. Embodiment 3 of this application may alternatively be separately implemented. This is not limited in this embodiment of this application.

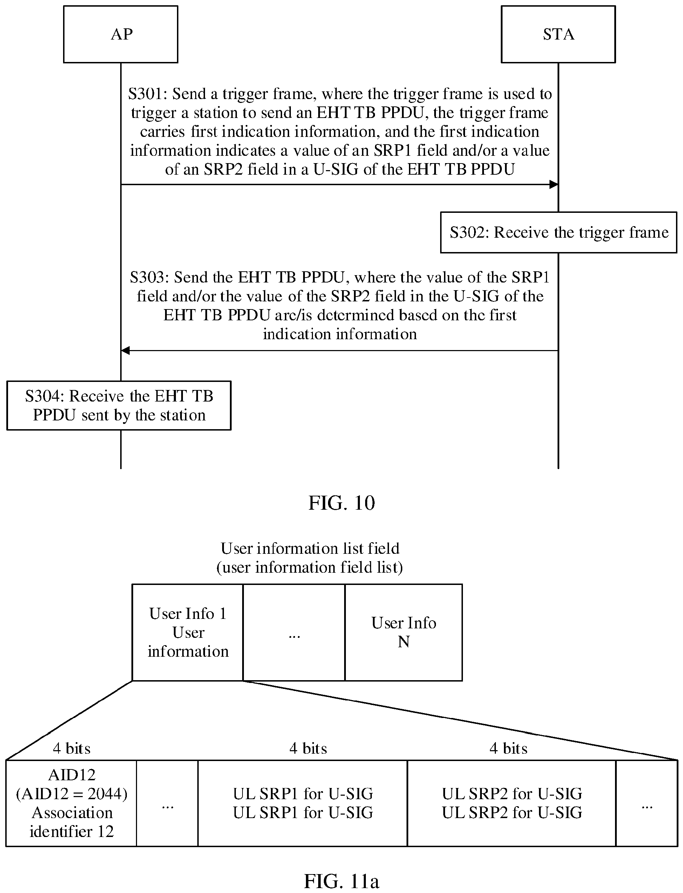

Refer to FIG. 10. FIG. 10 is a schematic flowchart 3 of a method for determining a spatial reuse parameter field in a PPDU according to an embodiment of this application. As shown in FIG. 10, the method for determining a spatial reuse parameter field in a PPDU includes but is not limited to the following steps.

S301: An AP sends a trigger frame, where the trigger frame is used to trigger a station to send an EHT TB PPDU, the trigger frame carries first indication information, and the first indication information indicates a value of an SRP1 field and/or a value of an SRP2 field in a U-SIG of the EHT TB PPDU.

S302: The STA receives the trigger frame.

S303: The STA sends the EHT TB PPDU, where the value of the SRP1 field and/or the value of the SRP2 field in the U-SIG of the EHT TB PPDU are/is determined based on the first indication information.

S304: The AP receives the EHT TB PPDU sent by the station.

Optionally, the trigger frame may be not only used to trigger an EHT station to send an EHT TB PPDU, but also used to trigger an HE station to send an HE TB PPDU. Alternatively, the trigger frame is only used to trigger an EHT station to send an EHT TB PPDU, or only used to trigger an HE station to send an HE TB PPDU. This embodiment of this application focuses on a case in which the trigger frame is used to trigger an EHT station to send an EHT TB PPDU, but is not limited to a case in which the trigger frame is only used to trigger an EHT station to send an EHT TB PPDU, and may also include a case in which the trigger frame is used to simultaneously trigger an EHT station to send an EHT TB PPDU and an HE station/EHT station to send an HE TB PPDU.

Optionally, the U-SIG of the EHT TB PPDU includes only two spatial reuse parameter (SRP) fields: the SRP1 field and the SRP2 field. The SRP1 field and the SRP2 field respectively indicate SRP values on different subchannels, and the SRP value is equal to a sum of transmit power of the AP on the corresponding subchannel and maximum interference power accepted by the AP. It should be understood that the SRP1 field and the SRP2 field in the U-SIG of the EHT TB PPDU may have other names, for example, a PSR1 field and a PSR2 field. This is not limited in this embodiment of this application.

The trigger frame may carry the first indication information, and the first indication information may indicate the values of the SRP1 field and the SRP2 field in the U-SIG of the EHT TB PPDU, or the first indication information indicates the value of the SRP2 field in the U-SIG of the EHT TB PPDU. The first indication information may be located in a user information field of the trigger frame. A value of an association identifier (association identifier, AID) 12 field of the user information field is a preset value. The preset value may be any one of 2008 to 2044 or 2046 to 4095. For example, the preset value is 2044. Optionally, the common information field of the trigger frame includes four UL SRP fields: a UL SRP1 field, a UL SRP2 field, a UL SRP3 field, and a UL SRP4 field. The four UL SRP fields may respectively indicate values of four SRP fields in an HE TB PPDU.

Optionally, a bandwidth of the EHT TB PPDU is 320 MHz. For a case in which the HE station cannot perform transmission in the 320 MHz bandwidth, the four UL SRP fields included in the common information field of the trigger frame still respectively indicate SRP values of four 40 MHz subchannels on a primary 160 MHz channel in ascending order of frequencies. After receiving the trigger frame, the HE station copies the values of the four UL SRP fields in the trigger frame to four SRP fields in an HE-SIG-A of the HE TB PPDU. Therefore, the four UL SRP fields may also be understood as values indicating the four SRP fields in the HE-SIG-A.

For the EHT station, an AID12 field in a user information field in the trigger frame is set to a special value (for example, AID12 = 2044), so that the EHT station can identify that the user information field serves for setting an SRP field in the U-SIG. In other words, the user information field carries the first indication information, indicating the value of the SRP1 field and/or the SRP2 field in the U-SIG. It should be understood that the HE station does not parse the user information field whose AID12 field is the special value in the trigger frame, or the HE station receives the user information field whose AID12 field is the special value, indicating that the field is irrelevant to the HE station. In other words, the first indication information added to the trigger frame does not affect behavior of the HE station.

When the first indication information indicates the values of the SRP1 field and the SRP2 field in the U-SIG, 8 bits after the AID12 field in the user information field are used for carrying the first indication information. First 4 bits of the 8 bits indicate the value of the SRP1 field in the U-SIG, and last 4 bits of the 8 bits indicate the value of the SRP2 field. It should be understood that the 8 bits may be represented by a first field and a second field. The first field is the first 4 bits of the 8 bits, and the second field is the last 4 bits of the 8 bits. To be specific, the first field following the AID12 field (for example, AID12 = 2044) indicates the value of the SRP1 field in the U-SIG, and the second field following the AID12 field (for example, AID12 = 2044) indicates the value of the SRP2 field in the U-SIG. It should be further understood that the first field may be referred to as a UL SRP1 field for the U-SIG, and the second field may be referred to as a UL SRP2 field for the U-SIG. The first field and the second field may have other names. This is not limited in this embodiment of this application.

After receiving the trigger frame, the EHT station sets the value of the SRP1 field in the U-SIG of the to-be-sent EHT TB PPDU to a value of the first field in the user information field of the trigger frame, and sets the value of the SRP2 field in the U-SIG to a value of the second field in the user information field of the trigger frame. The first field and the second field in the user information field of the trigger frame each correspond to a 160 MHz bandwidth. For example, the first field corresponds to a first 160 MHz bandwidth in ascending order of frequencies, and the second field corresponds to a second 160 MHz bandwidth in ascending order of frequencies. In other words, the SRP1 field in the U-SIG corresponds to the first 160 MHz bandwidth in ascending order of frequencies, and the SRP2 field in the U-SIG corresponds to the second 160 MHz bandwidth in ascending order of frequencies.

Refer to FIG. 11a. FIG. 11a is a schematic diagram of indicating an SRP in a U-SIG of a trigger frame according to an embodiment of this application. As shown in FIG. 11a, a user information field of the trigger frame includes an AID12 field, a UL SRP1 field used for the U-SIG, a UL SRP2 field used for the U-SIG, and the like. A value of the AID12 field is a special value, for example, 2044. The UL SRP1 field for the U-SIG and the UL SRP2 field for the U-SIG are located after the AID12 field, and may be adjacent to the AID12 field, or may not be adjacent to the AID12 field. The UL SRP1 field for the U-SIG indicates a value of the SRP1 field in the U-SIG, and the UL SRP2 field for the U-SIG indicates a value of the SRP2 field in the U-SIG. The value indicated by the UL SRP1 field for the U-SIG is equal to a sum of transmit power of the AP and maximum interference power accepted by the AP on a primary 160 MHz channel. The value indicated by the UL SRP2 field for the U-SIG is equal to a sum of transmit power of the AP and maximum interference power accepted by the AP on a secondary 160 MHz channel. For correspondences between values and meanings of the UL SRP1 field for the U-SIG and the UL SRP2 field for the U-SIG, reference may be made to Table 3 in the foregoing Embodiment 1.

When the first indication information only indicates the value of the SRP2 field in the U-SIG, 4 bits after the AID12 field in the user information field are used for carrying the first indication information. In other words, the 4 bits indicate the value of the SRP2 field in the U-SIG. The 4 bits may be referred to as the UL SRP2 field for the U-SIG, and the 4 bits may also have other names. This is not limited in this embodiment of this application. Optionally, when the first indication information indicates only the value of the SRP2 field in the U-SIG, four reserved bits in the common information field of the trigger frame may be used to carry the first indication information, that is, the four reserved bits are used to indicate the value of the SRP2 field in the U-SIG. The common information field of the trigger frame includes four UL SRP fields. After receiving the trigger frame, the EHT station sets the value of the SRP1 field in the U-SIG of the to-be-sent EHT TB PPDU to a smallest value of values of the four UL SRP fields included in the common information field of the trigger frame, that is, SRP1 = min(UL SRP1, UL SRP2, UL SRP3, UL SRP4); and sets the value of the SRP2 field in the U-SIG to the value of the UL SRP2 field for the U-SIG in the user information field of the trigger frame. The SRP1 field in the U-SIG corresponds to a first 160 MHz bandwidth in ascending order of frequencies, and the SRP2 field in the U-SIG corresponds to a second 160 MHz bandwidth in ascending order of frequencies.

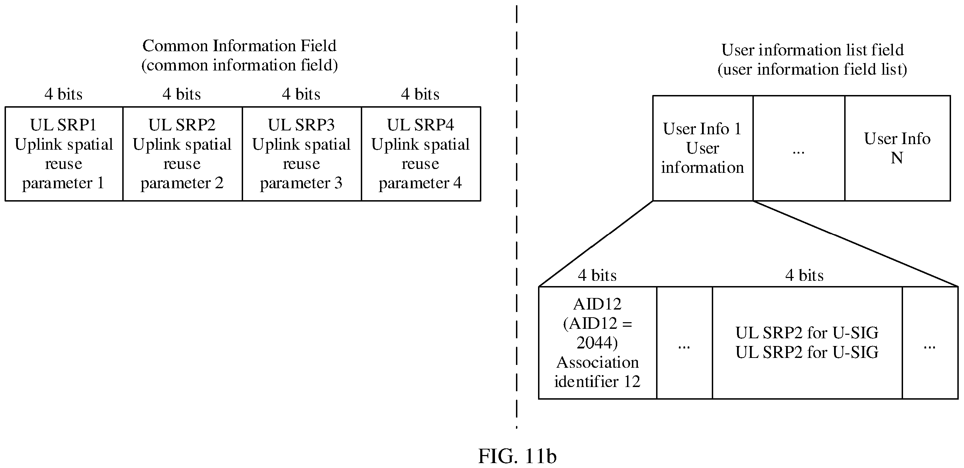

Refer to FIG. 11b. FIG. 11b is another schematic diagram of indicating an SRP in a U-SIG of a trigger frame according to an embodiment of this application. As shown in FIG. 11b, a common information field of the trigger frame includes four UL SRP fields, respectively indicating SRP values of four 40 MHz subchannels on a primary 160 MHz channel in ascending order of frequencies. A user information field of the trigger frame includes an AID12 field, a UL SRP2 field for a U-SIG, and the like. A value of the AID12 field is a special value, for example, 2044. The UL SRP2 field for the U-SIG is located after the AID12 field, and may be adjacent to the AID12 field, or may not be adjacent to the AID12 field. The UL SRP2 field for the U-SIG indicates a value of an SRP2 field in the U-SIG. A value indicated by the UL SRP2 field for the U-SIG is equal to a sum of transmit power of the AP on a secondary 160 MHz channel and maximum interference power accepted by the AP, or is equal to an SRP value on the secondary 160 MHz channel. For correspondences between values and meanings of the UL SRP2 field for the U-SIG, reference may be made to Table 3 in the foregoing Embodiment 1.

It should be understood that this embodiment of this application mainly focuses on a manner of setting the SRP1 field and the SRP2 field in the U-SIG in the 320 MHz bandwidth. For a manner of setting the SRP1 field and the SRP2 field in the U-SIG in the 160 MHz or smaller bandwidth, refer to related descriptions in Embodiment 1 or Embodiment 2. Details are not described herein again.

It can be learned that in this embodiment of this application, in a case of the 320 MHz bandwidth, a special user information field in the trigger frame independently indicates a spatial reuse parameter for the EHT TB PPDU. A meaning of the special user information field is clear, and scheduling of an HE station is not affected. In this way, an HE station and an EHT station can be scheduled by using a same trigger frame.

### Embodiment 4

Embodiment 4 of this application mainly describes a manner of setting a UL SRP value in a trigger frame when an EHT station is scheduled to send only an EHT TB PPDU.

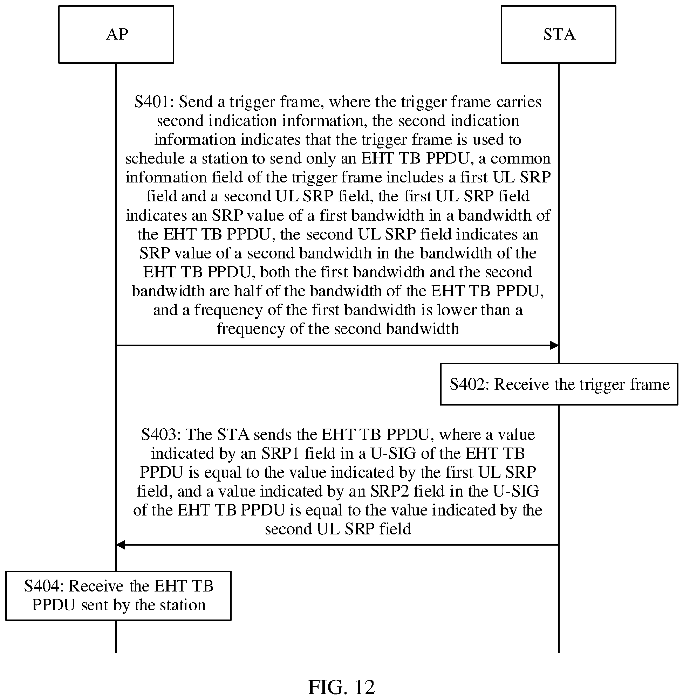

Refer to FIG. 12. FIG. 12 is a schematic flowchart 4 of a method for determining a spatial reuse parameter field in a PPDU according to an embodiment of this application. As shown in FIG. 12, the method for determining a spatial reuse parameter field in a PPDU includes but is not limited to the following steps.

S401: An AP sends a trigger frame, where the trigger frame carries second indication information, the second indication information indicates that the trigger frame is used to schedule a station to send only an EHT TB PPDU, a common information field of the trigger frame includes a first UL SRP field and a second UL SRP field, the first UL SRP field indicates an SRP value of a first bandwidth in a bandwidth of the EHT TB PPDU, the second UL SRP field indicates an SRP value of a second bandwidth in the bandwidth of the EHT TB PPDU, both the first bandwidth and the second bandwidth are a half of the bandwidth of the EHT TB PPDU, and a frequency of the first bandwidth is lower than a frequency of the second bandwidth.

S402: The STA receives the trigger frame.

S403: The STA sends the EHT TB PPDU, where a value indicated by an SRP1 field in a U-SIG of the EHT TB PPDU is equal to the value indicated by the first UL SRP field, and a value indicated by an SRP2 field in the U-SIG of the EHT TB PPDU is equal to the value indicated by the second UL SRP field.

S404: The AP receives the EHT TB PPDU sent by the station.

Optionally, the U-SIG of the EHT TB PPDU includes only two spatial reuse parameter (SRP) fields: the SRP1 field and the SRP2 field. The SRP1 field and the SRP2 field respectively indicate SRP values on different subchannels, and the SRP value is equal to a sum of transmit power of the AP on the corresponding subchannel and maximum interference power accepted by the AP. It should be understood that the SRP1 field and the SRP2 field in the U-SIG of the EHT TB PPDU may have other names, for example, a PSR1 field and a PSR2 field. This is not limited in this embodiment of this application.

Specifically, the trigger frame carries the second indication information, and the second indication information indicates that the trigger frame is used to schedule a station (or an EHT station) to send only an EHT TB PPDU. The second indication information may be 1 to 4 bits. The U-SIG field of the EHT TB PPDU includes only two SRP fields, and because the trigger frame does not schedule an HE station, only two valid UL SRP fields are needed in the common information field of the trigger frame. The common information field of the trigger frame may include the first UL SRP field and the second UL SRP field. The first UL SRP field may indicate the SRP value of the first bandwidth in the bandwidth of the EHT TB PPDU, and the second UL SRP field may indicate the SRP value of the second bandwidth in the bandwidth of the EHT TB PPDU. The first bandwidth and the second bandwidth are equal to a half of the bandwidth of the EHT TB PPDU. The first bandwidth is a low-frequency part in the bandwidth of the EHT TB PPDU in ascending order of frequencies, and the second bandwidth is a high-frequency part in the bandwidth of the EHT TB PPDU in ascending order of frequencies, that is, the frequency of the first bandwidth is lower than the frequency of the second bandwidth.

After receiving the trigger frame, the EHT station sets the value indicated by the SRP1 field in the U-SIG of the EHT TB PPDU to the value indicated by the first UL SRP field, and sets the value indicated by the SRP2 field in the U-SIG to the value indicated by the second UL SRP field. In other words, a value of the SRP1 field in the U-SIG is equal to a value of the first UL SRP field, and a value of the SRP2 field in the U-SIG is equal to a value of the second UL SRP field.

It should be understood that if the bandwidth of the EHT TB PPDU is 40 MHz, the first UL SRP field indicates an SRP value in a first 20 MHz (that is, low 20 MHz) bandwidth in the 40 MHz bandwidth in ascending order of frequencies, and the second UL SRP field indicates an SRP value in a second 20 MHz (that is, high 20 MHz) bandwidth in the 40 MHz bandwidth in ascending order of frequencies. If the bandwidth of the EHT TB PPDU is 80 MHz, the first UL SRP field indicates an SRP value on a first 40 MHz (that is, low 40 MHz) bandwidth in the 80 MHz bandwidth in ascending order of frequencies, and the second UL SRP field indicates an SRP value in a second 40 MHz (that is, high 40 MHz) bandwidth in the 80 MHz bandwidth in ascending order of frequencies. If the bandwidth of the EHT TB PPDU is 160 MHz, the first UL SRP field indicates an SRP value on a first 80 MHz (that is, low 80 MHz) bandwidth in the 160 MHz bandwidth in ascending order of frequencies, and the second UL SRP field indicates an SRP value on a second 80 MHz (that is, high 80 MHz) bandwidth in the 160 MHz bandwidth in ascending order of frequencies. If the bandwidth of the EHT TB PPDU is 320 MHz, the first UL SRP field indicates an SRP value on a first 160 MHz (that is, low 160 MHz) bandwidth in the 320 MHz bandwidth in ascending order of frequencies, and the second UL SRP field indicates an SRP value on a second 160 MHz (that is, high 160 MHz) bandwidth in the 320 MHz bandwidth in ascending order of frequencies.

Optionally, when the bandwidth of the EHT TB PPDU is 20 MHz, the value of the first UL SRP field is the same as the value of the second UL SRP field, and both the first UL SRP field and the second UL SRP field indicate an SRP value of the 20 MHz bandwidth.

Optionally, the first UL SRP field and the second UL SRP field may be any one of a UL SRP1 field, a UL SRP2 field, a UL SRP3 field, or a UL SRP4 field, and the first UL SRP field is different from the second UL SRP field. For example, the first UL SRP field is the UL SRP1 field, the second UL SRP field is the UL SRP2 field, and other UL SRP fields (that is, the UL SRP3 field and the UL SRP4 field) are reserved or used for another purpose (for example, used as a parameter for uplink multi-AP transmission, for example, a quantity of APs, an AP identifier, or a parameter of an automatic hybrid repeat request (hybrid automatic repeat request, HARQ), for example, a retransmission indication or a HARQ combination type). For another example, the first UL SRP field is the UL SRP3 field, the second UL SRP field is the UL SRP4 field, and other UL SRP fields (that is, the UL SRP1 field and the UL SRP2 field) are reserved or used for another purpose. For still another example, the first UL SRP field is the UL SRP1 field, the second UL SRP field is the UL SRP3 field, and other UL SRP fields (that is, the UL SRP2 field and the UL SRP4 field) are reserved or used for another purpose. For yet another example, the first UL SRP field is the UL SRP2 field, the second UL SRP field is the UL SRP3 field, and other UL SRP fields (that is, the UL SRP1 field and the UL SRP4 field) are reserved or used for another purpose.

It can be learned that in this embodiment of this application, when the trigger frame indicates that an EHT station is scheduled to send only an EHT TB PPDU, only two UL SRP fields (the other two UL SRP fields are reserved) in the trigger frame are used to respectively indicate SRP values in a lower frequency half and a higher frequency half of a total bandwidth. The EHT station copies values of the two UL SRP fields in the trigger frame to two SRP fields in a U-SIG. This can resolve insufficient SRP fields in the U-SIG, and can reduce indication overheads in the trigger frame.

### Embodiment 5

The foregoing Embodiment 1 to Embodiment 4 describe a method for setting two SRP fields of a U-SIG when one or more stations send an EHT TB PPDU in different scenarios. Embodiment 5 of this application mainly describes a spatial reuse method based on a spatial reuse parameter in 802.11 be.

It can be understood that, in actual application, Embodiment 5 of this application may be implemented with reference to any one of Embodiment 1 to Embodiment 4, or may be implemented separately. This is not limited in this embodiment of this application.

It may be understood that, in this embodiment of this application, a first AP and a first STA belong to a same BSS, which is denoted as a BSS1. A second AP and a second STA belong to another BSS, which is denoted as a BSS2. The first AP and the second AP are located in an OBSS formed by the BSS1 and the BSS2. Therefore, to reduce interference, caused by energy generated when the second AP sends a parameterized spatial reuse transmission (parameterized spatial reuse transmission, PSRT) PPDU, to receiving of an EHT TB PPDU by the first AP, transmit power used when the second AP sends the PSRT PPDU needs to be restricted.

Optionally, in this embodiment of this application, the second AP may receive information sent by the first AP and the first STA.

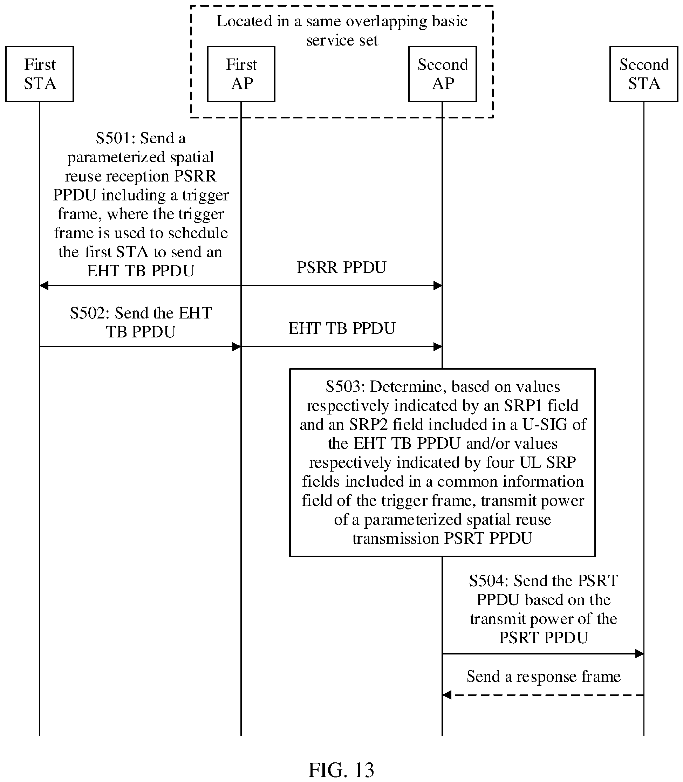

Refer to FIG. 13. FIG. 13 is a schematic flowchart of a spatial reuse method according to an embodiment of this application. As shown in FIG. 13, the spatial reuse method includes but is not limited to the following steps.

S501: The first AP sends a parameterized spatial reuse reception (parameterized spatial reuse reception, PSRR) PPDU including a trigger frame (trigger frame), where the trigger frame is used to schedule the first STA to send an EHT TB PPDU. Correspondingly, the first STA receives the trigger frame.

It may be understood that, in addition to the trigger frame, the PSRR PPDU may further include other information. However, this embodiment of this application focuses on a trigger frame part in the PSRR PPDU. Therefore, the other information included in the PSRR PPDU is not described in this embodiment of this application.

Specifically, the PSRR PPDU including the trigger frame is used to schedule a station to perform uplink data transmission, for example, send an uplink EHT TB PPDU. As shown in FIG. 6a, a common information field of the trigger frame includes an uplink spatial reuse (UL Spatial Reuse) field. The uplink spatial reuse field may include four uplink spatial reuse parameter (UL SRP) fields whose lengths are 4 bits, indicating a sum of transmit power of an AP and maximum interference power accepted by the AP. The four UL SRP fields included in the uplink spatial reuse field are a UL SRP1 field, a UL SRP2 field, a UL SRP3 field, and a UL SRP4 field. For an implementation of the four UL SRP fields in different bandwidths, refer to any one of Embodiment 1 to Embodiment 4. Details are not described herein again.

S502: The first STA sends the EHT TB PPDU. Correspondingly, the first AP receives the EHT TB PPDU sent by the station.

The "first AP" in this embodiment of this application is the "AP" described in Embodiment 1 to Embodiment 4, and the "first STA" in this embodiment of this application is the "STA" described in Embodiment 1 to Embodiment 4.

Specifically, for an implementation of step S502 in this embodiment of this application, refer to the implementation of step S103 in Embodiment 1. Details are not described herein again. Alternatively, for an implementation of step S502 in this embodiment of this application, refer to the implementation of step S203 in Embodiment 2. Details are not described herein again. Alternatively, for an implementation of step S502 in this embodiment of this application, refer to the implementation of step S303 in Embodiment 3. Details are not described herein again. Alternatively, for an implementation of step S502 in this embodiment of this application, refer to the implementation of step S403 in Embodiment 4. Details are not described herein again.

S503: The second AP determines, based on values respectively indicated by an SRP1 field and an SRP2 field included in a U-SIG of the EHT TB PPDU and/or values respectively indicated by the four UL SRP fields included in the common information field of the trigger frame, transmit power of a parameterized spatial reuse transmission PSRT PPDU.

S504: The second AP sends the PSRT PPDU based on the transmit power of the PSRT PPDU. Correspondingly, the second STA receives the PSRT PPDU.

Specifically, the first AP and the second AP are located in the OBSS formed by the BSS1 and the BSS2. Therefore, the second AP may also receive the trigger frame sent by the first AP. Therefore, after the first AP sends the PSRR PPDU including the trigger frame, the second AP receives the PSRR PPDU including the trigger frame. The trigger frame includes four UL SRP fields, and a value indicated by one UL SRP field is equal to a sum of transmit power of the first AP and maximum interference power accepted by the first AP. The second AP may also receive the EHT TB PPDU sent by the first STA, and the U-SIG of the EHT TB PPDU includes the SRP1 field and the SRP2 field. A value indicated by the SRP1 field is equal to a sum of transmit power of the first AP on a first subchannel and maximum interference power accepted by the first AP. A value indicated by the SRP2 field is a sum of transmit power of the first AP on a second subchannel and maximum interference power accepted by the first AP. A bandwidth of the first subchannel and a bandwidth of the second subchannel are equal to a half of a bandwidth of the EHT TB PPDU, and a frequency of the first subchannel is lower than a frequency of the second subchannel.

After the second AP receives the PSRR PPDU and the EHT TB PPDU (that is, it is determined that the first STA has sent the EHT TB PPDU), the second AP calculates, based on power (namely, a received power level, received power level, RPL) at which the PSRR PPDU is received, the values respectively indicated by the SRP1 field and the SRP2 field included in the U-SIG, and/or the values respectively indicated by the four UL SRP fields, the transmit power used for sending the PSRT PPDU. The second AP sends the PSRT PPDU based on the transmit power obtained through calculation. Correspondingly, the second STAreceives the PSRT PPDU, and replies a response frame in response to the PSRT PPDU to the second AP.

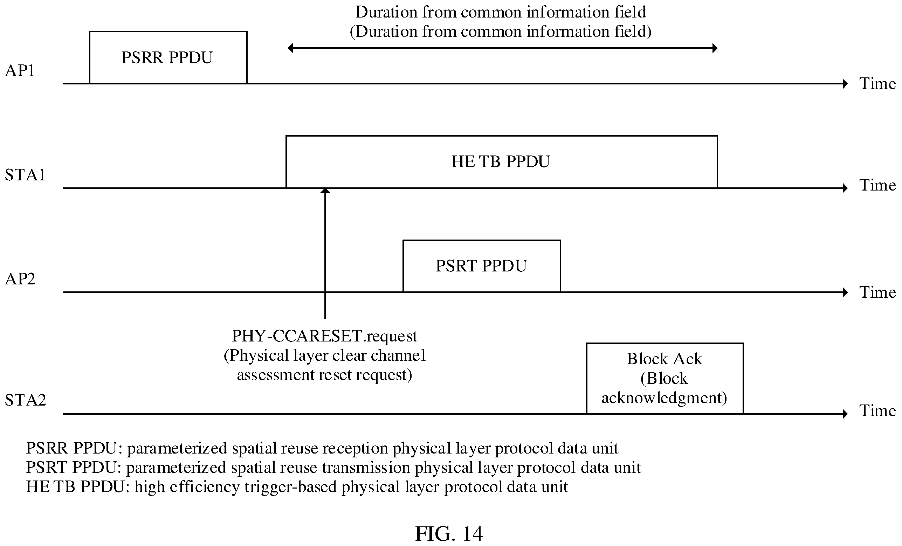

Refer to FIG. 14. FIG. 14 is a sequence diagram of a spatial reuse method according to an embodiment of this application. It is assumed that an AP1 and an AP2 are located in a same OBSS, the AP1 and a STA1 belong to a BSS1, and the AP2 and a STA2 belong to a BSS2. As shown in FIG. 14, the AP1 (namely, the first AP) sends a PSRR PPDU including a trigger frame. After receiving the PSRR PPDU, the STA1 (namely, the first STA) sends an uplink EHT TB PPDU based on an indication of the trigger frame at a time interval (for example, a short interframe space). Because the AP1 and the AP2 are located in a same OBSS, the AP2 may receive the PSRR PPDU sent by the AP1 and the EHT TB PPDU sent by the STA. After the AP2 (namely, the second AP) receives the PSRR PPDU and the EHT TB PPDU, the AP2 calculates, based on power (namely, an RPL) at which the PSRR PPDU is received and two SRP values and/or four UL SRP values in the EHT TB PPDU, power used by the AP2 for sending a PSRT PPDU. After detecting that the EHT TB PPDU is sent, the AP2 sends the PSRT PPDU based on the power obtained through calculation. After receiving the PSRT PPDU, the STA2 (namely, the second STA) sends a block acknowledgment (block acknowledge) frame at a time interval (for example, a short interframe space), to acknowledge that the STA2 has received the PSRT PPDU.

Optionally, the transmit power of the PSRT PPDU obtained by the second AP through calculation satisfies the following formula: PPDU transmit power (used by the second AP for sending the PSRT PPDU) - log10(PSRT PPDU bandwidth/20 MHz) ≤ SRP - RPL

log₁₀(PSRT PPDU bandwidth/20 MHz) in the formula (1-1) indicates a bandwidth normalization factor. In the formula (1-1), SRP is an SRP value on a subchannel. In the formula (1-1), RPL is combined transmit power at all receive antenna connectors, over the PSRR PPDU bandwidth, in a non-HE part of or a non-EHT PPDU part of a triggering PPDU (a PPDU including the trigger frame) (RPL is the combined transmit power at the receive antenna connector, over the PSRR PPDU bandwidth, during the non-HE portion of the HE PPDU preamble of the triggering PPDU, averaged over all antennas used to receive the PPDU). Bandwidth normalization has been performed on values of SRP and PRL in the formula (1-1). It should be understood that, because a value indicated by a UL SRP field is equal to the sum of the transmit power of the AP (herein, the first AP) and maximum interference power accepted by the AP (herein, the first AP), the maximum interference power accepted by the AP (herein, the first AP) is determined by a value of a spatial reuse parameter (SRP).

Optionally, the second AP may obtain the RPL by using the PSRR PPDU, and does not obtain the UL SRP in the PSRR PPDU, but obtains the SRP by using the U-SIG of the EHT TB PPDU. To be specific, the second AP calculates, based on the power (namely, the RPL) at which the PSRR PPDU is received and the values respectively indicated by the SRP1 field and the SRP2 field included in the U-SIG, the transmit power used for sending the PSRT PPDU. Alternatively, the second AP may obtain both the RPL and the UL SRP by using the PSRR PPDU, and after determining that the EHT TB PPDU is received, the second AP does not obtain the SRP in the U-SIG. To be specific, the second AP calculates, based on the power (namely, the RPL) at which the PSRR PPDU is received and the values respectively indicated by the four UL SRP fields, the transmit power used for sending the PSRT PPDU.

Optionally, the foregoing formula (1-1) may be equivalent to the following formula (1-2): Normalized transmit power of the second AP ≤ transmit power of the first AP + maximum interference power accepted by the first AP - power at which the second AP receives the PSRR PPDU sent by the first AP

The right side of the formula (1-2), namely, the transmit power of the first AP minus the power at which the second AP receives the PSRR PPDU sent by the first AP, is equal to a path loss (path loss) between the first AP and the second AP.

Therefore, the formula (1-2) may alternatively be equivalent to the following formula (1-3): Normalized transmit power of the second AP ≤ maximum interference power accepted by the first AP + path loss between the first AP and the second AP

The formula (1-3) may alternatively be equivalent to the following formula (1-4): Normalized transmit power of the second AP - path loss between the first AP and the second AP ≤ maximum interference power accepted by the first AP

Because the left side of the formula (1-4), namely, the normalized transmit power of the second AP minus the path loss between the first AP and the second AP, represents interference caused by the second AP to the first AP, the formula (1-4) may be equivalent to the following formula (1-5): Interference caused by the second AP to the first AP ≤ maximum interference power accepted by the first AP

It can be learned that this embodiment of this application provides a spatial reuse method for an EHT TB PPDU, to be compatible with a case of two SRP fields in a U-SIG, and spatial reuse is implemented in compliance with an EHT standard. In this way, devices in an overlapping basic service set can simultaneously perform transmission, improving transmission efficiency.

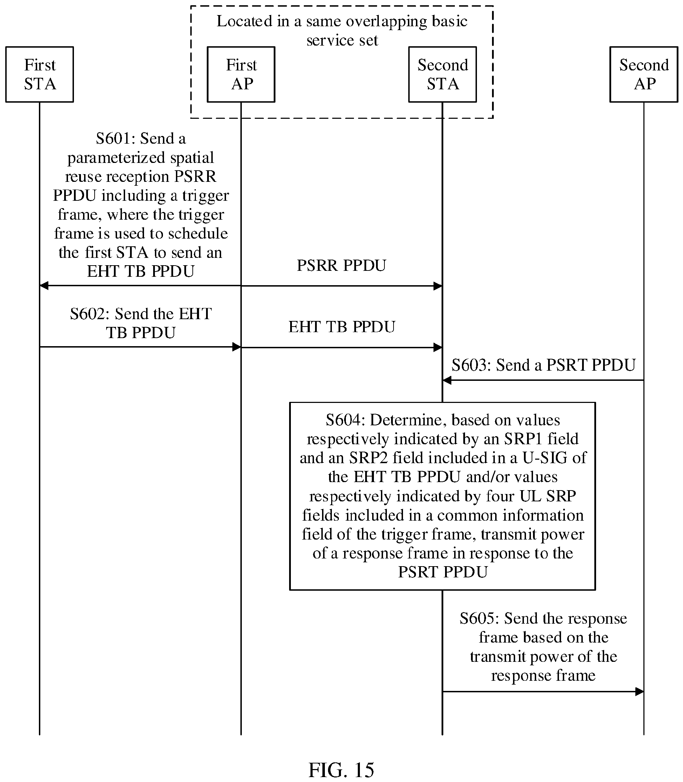

In an optional embodiment, the spatial reuse method provided in this application may also be applied to the second STA. FIG. 15 is another schematic flowchart of a spatial reuse method according to an embodiment of this application. It may be understood that, in this embodiment of this application, a first AP and a first STA belong to a same BSS, which is denoted as a BSS1. A second AP and a second STA belong to another BSS, which is denoted as a BSS2. The first AP and the second STA are located in an OBSS formed by the BSS1 and the BSS2. Therefore, to reduce interference, caused by energy generated when the second STA sends a response frame of a PSRT PPDU, to receiving of an EHT TB PPDU by the first AP, transmit power used when the second STA sends the response frame needs to be restricted.

Optionally, in this embodiment of this application, the second STA may receive information sent by the first AP and the first STA.

As shown in FIG. 15, the spatial reuse method includes but is not limited to the following steps.

S601: The first AP sends a parameterized spatial reuse reception PSRR PPDU including a trigger frame, where the trigger frame is used to schedule the first STA to send an EHT TB PPDU. Correspondingly, the first STA receives the trigger frame.

S602: The first STA sends the EHT TB PPDU. Correspondingly, the first AP receives the EHT TB PPDU sent by the station.

Specifically, for implementations of step S601 and step S602 in this embodiment of this application, refer to the implementations of step S501 and step S502 in the embodiment shown in FIG. 13. Details are not described herein again.

S603: The second AP sends a PSRT PPDU. Correspondingly, the second STA receives the PSRT PPDU.

S604: The second STA determines, based on values respectively indicated by an SRP1 field and an SRP2 field included in a U-SIG of the EHT TB PPDU and/or values respectively indicated by four UL SRP fields included in a common information field of the trigger frame, transmit power of a response frame in response to the PSRT PPDU.

S605: The second STA sends the response frame based on the transmit power of the response frame.

Specifically, for implementations of step S604 and step S605 in this embodiment of this application, refer to the implementations of step S503 and step S504 in the embodiment shown in FIG. 13. Details are not described herein again. It should be understood that the transmit power of the response frame in response to the PSRT PPDU in step S604 corresponds to the transmit power of the PSRT PPDU in step S503. For a manner of determining the transmit power of the response frame in step S604, refer to a manner of determining the transmit power of the PSRT PPDU in step S503. Details are not described herein again.

Optionally, the second AP may also be located in an OBSS formed by the BSS1 and the BSS2. Therefore, to reduce interference, caused by energy generated when the second STA sends the response frame of the PSRT PPDU and energy generated when the second AP sends the PSRT PPDU, to receiving of the EHT TB PPDU by the first AP, both transmit power used when the second STA sends the response frame and transmit power used when the second AP sends the PSRT PPDU need to be restricted. Therefore, when the first AP, the second STA, and the second AP are all located in the OBSS formed by the BSS1 and the BSS2, before the second AP sends the PSRT PPDU (that is, before step S603), the second AP may determine, based on the values respectively indicated by the SRP1 field and the SRP2 field included in the U-SIG of the EHT TB PPDU, and/or the values respectively indicated by the four UL SRP fields included in the common information field of the trigger frame, the transmit power of the PSRT PPDU. In this case, step S603 is specifically: Send the PSRT PPDU based on the transmit power of the PSRT PPDU.

It can be learned that this embodiment of this application provides a spatial reuse method for an EHT TB PPDU, to be compatible with a case of two SRP fields in a U-SIG, and spatial reuse is implemented in compliance with an EHT standard. In this way, devices in an overlapping basic service set can simultaneously perform transmission, improving transmission efficiency.

The foregoing content describes in detail the methods provided in this application. To facilitate implementation of the foregoing solutions in embodiments of this application, embodiments of this application further provide corresponding apparatuses or devices.

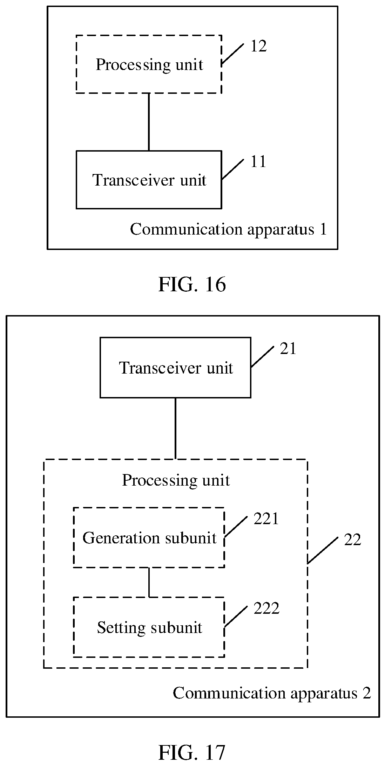

In this embodiment of this application, the AP and the STA may be divided into functional modules based on the foregoing method examples. For example, functional modules may be obtained through division based on corresponding functions, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation. The following describes in detail communication apparatuses in embodiments of this application with reference to FIG. 16 to FIG. 19. The communication apparatus is an access point or a station. Further, the communication apparatus may be an apparatus in an AP, or the communication apparatus may be an apparatus in a STA.

When an integrated unit is used, refer to FIG. 16. FIG. 16 is a schematic diagram depicting a structure of a communication apparatus 1 according to an embodiment of this application. The communication apparatus 1 may be an AP or a chip in the AP, for example, a Wi-Fi chip. As shown in FIG. 16, the communication apparatus 1 includes a transceiver unit 11, and optionally includes a processing unit 12.

In a first design, the transceiver unit 11 is configured to send a trigger frame, where the trigger frame is used to trigger a station to send an EHT TB PPDU. The transceiver unit 11 is further configured to receive the EHT TB PPDU sent by the station. Values indicated by a spatial reuse parameter SRP1 field and an SRP2 field in a universal signal field U-SIG of the EHT TB PPDU are respectively determined based on values indicated by one or more uplink spatial reuse parameter UL SRP fields in a common information field of the trigger frame.

Optionally, the processing unit 12 is configured to generate the trigger frame.

It should be understood that the communication apparatus 1 in the first design may correspondingly perform Embodiment 1, and the foregoing operations or functions of the units in the communication apparatus 1 are respectively used to implement corresponding operations of the AP in Embodiment 1. For brevity, details are not described herein again.

In a second design, the transceiver unit 11 is configured to send a trigger frame, where the trigger frame is used to trigger a station to send an EHT TB PPDU, a common information field of the trigger frame includes four UL SRP fields, two of the four UL SRP fields indicate a same value, and the other two indicate a same value. The transceiver unit 11 is further configured to receive the EHT TB PPDU sent by the station, where a value indicated by an SRP1 field in a U-SIG of the EHT TB PPDU is equal to a value indicated by either of the two UL SRP fields that indicate a same value, and a value indicated by an SRP2 field in the U-SIG of the EHT TB PPDU is equal to a value indicated by either of the other two UL SRP fields that indicate a same value.

Optionally, the processing unit 12 is configured to generate the trigger frame.

It should be understood that the communication apparatus 1 in the second design may correspondingly perform Embodiment 2, and the foregoing operations or functions of the units in the communication apparatus 1 are respectively used to implement corresponding operations of the AP in Embodiment 2. For brevity, details are not described herein again.

In a third design, the transceiver unit 11 is configured to send a trigger frame, where the trigger frame is used to trigger a station to send an EHT TB PPDU, the trigger frame carries first indication information, and the first indication information indicates a value of an SRP1 field and/or a value of an SRP2 field in a U-SIG of the EHT TB PPDU. The transceiver unit 11 is further configured to receive the EHT TB PPDU sent by the station, where the value of the SRP1 field and/or the value of the SRP2 field in the U-SIG of the EHT TB PPDU are/is determined based on the first indication information.

Optionally, the processing unit 12 is configured to generate the trigger frame.

It should be understood that the communication apparatus 1 in the third design may correspondingly perform Embodiment 3, and the foregoing operations or functions of the units in the communication apparatus 1 are respectively used to implement corresponding operations of the AP in Embodiment 3. For brevity, details are not described herein again.

In a fourth design, the transceiver unit 11 is configured to send a trigger frame. The transceiver unit 11 is further configured to receive an EHT TB PPDU sent by the station, where a value indicated by an SRP1 field in a U-SIG of the EHT TB PPDU is equal to a value indicated by a first UL SRP field, and a value indicated by an SRP2 field in the U-SIG of the EHT TB PPDU is equal to a value indicated by a second UL SRP field. The trigger frame carries second indication information, the second indication information indicates that the trigger frame is used to schedule a station to send only an EHT TB PPDU, a common information field of the trigger frame includes the first UL SRP field and the second UL SRP field, the first UL SRP field indicates an SRP value of a first bandwidth in a bandwidth of the EHT TB PPDU, the second UL SRP field indicates an SRP value of a second bandwidth in the bandwidth of the EHT TB PPDU, both the first bandwidth and the second bandwidth are a half of the bandwidth of the EHT TB PPDU, and a frequency of the first bandwidth is lower than a frequency of the second bandwidth.

Optionally, the processing unit 12 is configured to generate the trigger frame.

It should be understood that the communication apparatus 1 in the fourth design may correspondingly perform Embodiment 4, and the foregoing operations or functions of the units in the communication apparatus 1 are separately configured to implement corresponding operations of the AP in Embodiment 4. For brevity, details are not described herein again.

Refer to FIG. 17. FIG. 17 is a schematic diagram depicting a structure of a communication apparatus 2 according to an embodiment of this application. The communication apparatus 2 may be a STA or a chip in the STA, for example, a Wi-Fi chip. As shown in FIG. 17, the communication apparatus 2 includes a transceiver unit 21, and optionally includes a processing unit 22.

In a first design, the transceiver unit 21 is configured to receive a trigger frame, where the trigger frame is used to trigger the communication apparatus 2 to send an EHT TB PPDU. The transceiver unit 21 is further configured to send the EHT TB PPDU, where values indicated by an SRP1 field and an SRP2 field in a U-SIG of the EHT TB PPDU are respectively determined based on values indicated by one or more UL SRP fields in a common information field of the trigger frame.

Optionally, the processing unit 22 includes a generation subunit 221 and a setting subunit 222. The generation subunit 22 is configured to generate the EHT TB PPDU. The setting subunit 222 is configured to set the SRP1 field and the SRP2 field in the U-SIG of the EHT TB PPDU based on the values indicated by one or more UL SRP fields in the common information field of the trigger frame.

It should be understood that the communication apparatus 2 in the first design may correspondingly perform Embodiment 1, and the foregoing operations or functions of the units in the communication apparatus 2 are respectively used to implement corresponding operations of the STA in Embodiment 1. For brevity, details are not described herein again.

In a second design, the transceiver unit 21 is configured to receive a trigger frame, where the trigger frame is used to trigger the communication apparatus 2 to send an EHT TB PPDU, a common information field of the trigger frame includes four UL SRP fields, two of the four UL SRP fields indicate a same value, and the other two indicate a same value. The transceiver unit 21 is further configured to send the EHT TB PPDU, where a value indicated by an SRP1 field in a U-SIG of the EHT TB PPDU is equal to a value indicated by either of the two UL SRP fields that indicate a same value, and a value indicated by an SRP2 field in the U-SIG of the EHT TB PPDU is equal to a value indicated by either of the other two UL SRP fields that indicate a same value.

Optionally, the processing unit 22 includes a generation subunit 221 and a setting subunit 222. The generation subunit 22 is configured to generate the EHT TB PPDU. The setting subunit 222 is configured to: set the value indicated by the SRP1 field in the U-SIG of the EHT TB PPDU to a value indicated by either UL SRP field in a first group of the two groups, and set the value indicated by the SRP2 field in the U-SIG to a value indicated by either UL SRP field in a second group of the two groups

It should be understood that the communication apparatus 2 in the second design may correspondingly perform Embodiment 2, and the foregoing operations or functions of the units in the communication apparatus 2 are respectively used to implement corresponding operations of the STA in Embodiment 2. For brevity, details are not described herein again.

In a third design, the transceiver unit 21 is configured to receive a trigger frame, where the trigger frame is used to trigger the communication apparatus 2 to send an EHT TB PPDU, the trigger frame carries first indication information, and the first indication information indicates a value of an SRP1 field and/or a value of an SRP2 field in a U-SIG of the EHT TB PPDU. The transceiver unit 21 is further configured to send the EHT TB PPDU, where the value of the SRP1 field and/or the value of the SRP2 field in the U-SIG of the EHT TB PPDU are/is determined based on the first indication information.

Optionally, the processing unit 22 includes a generation subunit 221 and a setting subunit 222. The generation subunit 22 is configured to generate the EHT TB PPDU. The setting subunit 222 is configured to set the value of the SRP1 field and/or the value of the SRP2 field in the U-SIG of the EHT TB PPDU based on the first indication information.

It should be understood that the communication apparatus 2 in the third design may correspondingly perform Embodiment 3, and the foregoing operations or functions of the units in the communication apparatus 2 are respectively used to implement corresponding operations of the STA in Embodiment 3. For brevity, details are not described herein again.

In a fourth design, the transceiver unit 21 is configured to receive a trigger frame. The transceiver unit 21 is further configured to send the EHT TB PPDU, where a value indicated by an SRP1 field in a U-SIG of the EHT TB PPDU is equal to a value indicated by a first UL SRP field, and a value indicated by an SRP2 field in the U-SIG of the EHT TB PPDU is equal to a value indicated by a second UL SRP field. The trigger frame carries second indication information, the second indication information indicates that the trigger frame is used to schedule a station to send only an EHT TB PPDU, a common information field of the trigger frame includes the first UL SRP field and the second UL SRP field, the first UL SRP field indicates an SRP value of a first bandwidth in a bandwidth of the EHT TB PPDU, the second UL SRP field indicates an SRP value of a second bandwidth in the bandwidth of the EHT TB PPDU, both the first bandwidth and the second bandwidth are a half of the bandwidth of the EHT TB PPDU, and a frequency of the first bandwidth is lower than a frequency of the second bandwidth.

Optionally, the processing unit 22 includes a generation subunit 221 and a setting subunit 222. The generation subunit 22 is configured to generate the EHT TB PPDU. The setting subunit 222 is configured to: set the value indicated by the SRP1 field in the U-SIG of the EHT TB PPDU to the value indicated by the first UL SRP, and set the value indicated by the SRP2 field in the U-SIG to the value indicated by the second UL SRP field.

It should be understood that the communication apparatus 2 in the fourth design may correspondingly perform Embodiment 4, and the foregoing operations or functions of the units in the communication apparatus 2 are separately configured to implement corresponding operations of the STA in Embodiment 4. For brevity, details are not described herein again.

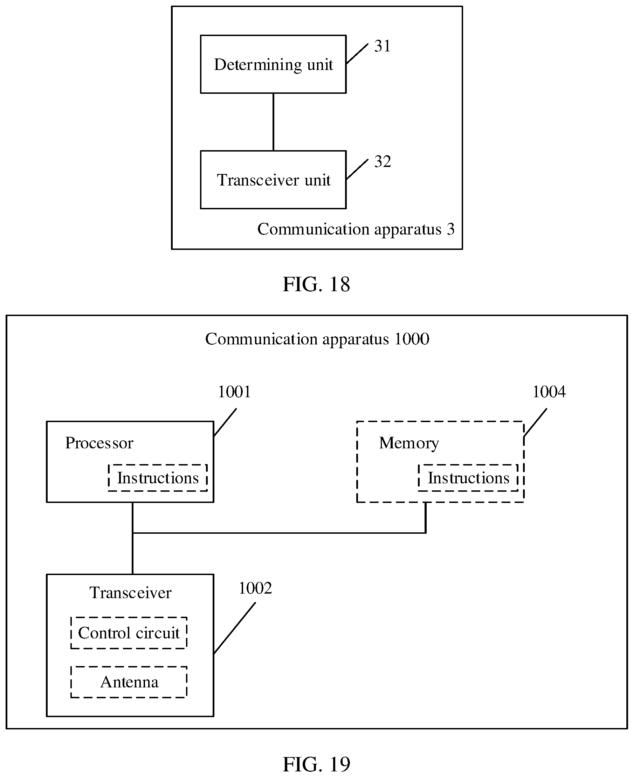

Refer to FIG. 18. FIG. 18 is a schematic diagram depicting a structure of a communication apparatus 3 according to an embodiment of this application. The communication apparatus 3 may be an AP or a STA. Further, the communication apparatus 3 may be a chip in the AP or the STA, for example, a Wi-Fi chip. As shown in FIG. 18, the communication apparatus 3 may include a determining unit 31 and a transceiver unit 32.

In a design, the communication apparatus 3 is an AP or a chip in the AP. The determining unit 31 is configured to determine transmit power of a PSRT PPDU based on values respectively indicated by an SRP1 field and an SRP2 field included in a U-SIG of an EHT TB PPDU and/or values respectively indicated by four UL SRP fields included in a common information field of a trigger frame. The transceiver unit 32 is configured to send the PSRT PPDU based on the transmit power of the PSRT PPDU.

Optionally, the transceiver unit 32 is further configured to receive the trigger frame, where the trigger frame includes the four UL SRP fields. A value indicated by one UL SRP field is a sum of transmit power of a first AP on one subchannel and maximum interference power accepted by the first AP. The communication apparatus 3 and the first AP are located in a same OBSS. The first AP refers to an AP that sends the trigger frame.

Optionally, the transceiver unit 32 is further configured to receive the EHT TB PPDU, where the U-SIG of the EHT TB PPDU includes the SRP1 field and the SRP2 field. The value indicated by the SRP1 field is a sum of transmit power of a first AP on a first subchannel and maximum interference power accepted by the first AP. The value indicated by the SRP2 field is a sum of transmit power of the first AP on a second subchannel and maximum interference power accepted by the first AP. A bandwidth of the first subchannel and a bandwidth of the second subchannel are equal to a half of a bandwidth of the EHT TB PPDU, and a frequency of the first subchannel is lower than a frequency of the second subchannel. The communication apparatus 3 and the first AP are located in a same OBSS.

It should be understood that the communication apparatus 3 in this design may correspondingly perform the method in FIG. 13, and the foregoing operations or functions of the units in the communication apparatus 3 are separately configured to implement corresponding operations of the second AP in FIG. 13. For brevity, details are not described herein again.

In another design, the communication apparatus 3 is a STA or a chip in the STA. The determining unit 31 is configured to determine transmit power of a response frame in response to a PSRT PPDU based on values respectively indicated by an SRP1 field and an SRP2 field included in a U-SIG of an EHT TB PPDU and/or values respectively indicated by four UL SRP fields included in a common information field of a trigger frame. The transceiver unit 32 is configured to send the response frame based on the transmit power of the response frame.

Optionally, the transceiver unit 32 is further configured to receive the trigger frame, where the trigger frame includes the four UL SRP fields. A value indicated by one UL SRP field is a sum of transmit power of a first AP on one subchannel and maximum interference power accepted by the first AP. The communication apparatus 3 and the first AP are located in a same OBSS. The first AP refers to an AP that sends the trigger frame.

Optionally, the transceiver unit 32 is further configured to receive the EHT TB PPDU, where the U-SIG of the EHT TB PPDU includes the SRP1 field and the SRP2 field. The value indicated by the SRP1 field is a sum of transmit power of a first AP on a first subchannel and maximum interference power accepted by the first AP. The value indicated by the SRP2 field is a sum of transmit power of the first AP on a second subchannel and maximum interference power accepted by the first AP. A bandwidth of the first subchannel and a bandwidth of the second subchannel are equal to a half of a bandwidth of the EHT TB PPDU, and a frequency of the first subchannel is lower than a frequency of the second subchannel. The communication apparatus 3 and the first AP are located in a same OBSS.

Optionally, the transceiver unit 32 is further configured to receive the PSRT PPDU sent by a second AP.

In any one of the foregoing designs, the determining unit 31 may be a processing unit.

It should be understood that the communication apparatus 3 in this design may correspondingly perform the method in FIG. 15, and the foregoing operations or functions of the units in the communication apparatus 3 are separately configured to implement corresponding operations of the second STA in FIG. 15. For brevity, details are not described herein again.

The foregoing describes the AP and the STA in embodiments of this application. The following describes possible product forms of the AP and the STA. It should be understood that, any product having a function of the AP described in FIG. 16, any product having a function of the STA described in FIG. 17, or any product having a function of the AP or the STA described in FIG. 18 shall fall within the protection scope of embodiments of this application. It should be further understood that the following description is merely an example, and product forms of the AP and the STA in embodiments of this application are not limited thereto.

In a possible product form, the AP and the STA in embodiments of this application may be implemented by using general bus architectures.

For ease of description, refer to FIG. 19. FIG. 19 is a schematic diagram depicting a structure of a communication apparatus 1000 according to an embodiment of this application. The communication apparatus 1000 may be an AP or a STA, or a chip in the AP or the STA. FIG. 19 shows only main components of the communication apparatus 1000. In addition to a processor 1001 and a transceiver 1002, the communication apparatus may further include a memory 1004 and an input/output apparatus (not shown in the figure).

The processor 1001 is mainly configured to process a communication protocol and communication data, control the communication apparatus, execute a software program, and process data of the software program. The memory 1004 is mainly configured to store the software program and the data. The transceiver 1002 may include a control circuit and an antenna. The control circuit is mainly configured to perform conversion between a baseband signal and a radio frequency signal and process the radio frequency signal. The antenna is mainly configured to send and receive a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 1001 may read the software program in the memory 1004, interpret and execute instructions of the software program, and process data of the software program. When data needs to be sent wirelessly, the processor 1001 performs baseband processing on the to-be-sent data, and then outputs a baseband signal to a radio frequency circuit. The radio frequency circuit performs radio frequency processing on the baseband signal, and then sends a radio frequency signal in an electromagnetic wave form through the antenna. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The processor 1001, the transceiver 1002, and the memory 1004 may be connected through a communication bus.

In a design, the communication apparatus 1000 may be configured to perform a function of the AP in Embodiment 1. The processor 1001 may be configured to generate the trigger frame sent in step S101 in FIG. 7, and/or configured to perform another process of the technology described in this specification. The transceiver 1002 may be configured to perform step S101 and step S104 in FIG. 7, and/or configured to perform another process of the technology described in this specification.

In another design, the communication apparatus 1000 may be configured to perform a function of the STA in Embodiment 1: The processor 1001 may be configured to generate the EHT TB PPDU sent in step S103 in FIG. 7, and/or configured to perform another process of the technology described in this specification. The transceiver 1002 may be configured to perform step S102 and step S103 in FIG. 7, and/or configured to perform another process of the technology described in this specification.

In a design, the communication apparatus 1000 may be configured to perform a function of the AP in Embodiment 2. The processor 1001 may be configured to generate the trigger frame sent in step S201 in FIG. 9, and/or configured to perform another process of the technology described in this specification. The transceiver 1002 may be configured to perform step S201 and step S204 in FIG. 9, and/or configured to perform another process of the technology described in this specification.

In another design, the communication apparatus 1000 may be configured to perform a function of the STA in Embodiment 2: The processor 1001 may be configured to generate the EHT TB PPDU sent in step S203 in FIG. 9, and/or configured to perform another process of the technology described in this specification. The transceiver 1002 may be configured to perform step S202 and step S203 in FIG. 9, and/or configured to perform another process of the technology described in this specification.

In a design, the communication apparatus 1000 may be configured to perform a function of the AP in Embodiment 3. The processor 1001 may be configured to generate the trigger frame sent in step S301 in FIG. 10, and/or configured to perform another process of the technology described in this specification. The transceiver 1002 may be configured to perform step S301 and step S304 in FIG. 10, and/or configured to perform another process of the technology described in this specification.

In another design, the communication apparatus 1000 may be configured to perform a function of the STA in Embodiment 3: The processor 1001 may be configured to generate the EHT TB PPDU sent in step S303 in FIG. 10, and/or configured to perform another process of the technology described in this specification. The transceiver 1002 may be configured to perform step S302 and step S303 in FIG. 10, and/or configured to perform another process of the technology described in this specification.

In a design, the communication apparatus 1000 may be configured to perform a function of the AP in Embodiment 4. The processor 1001 may be configured to generate the trigger frame sent in step S401 in FIG. 12, and/or configured to perform another process of the technology described in this specification. The transceiver 1002 may be configured to perform step S401 and step S404 in FIG. 12, and/or configured to perform another process of the technology described in this specification.

In another design, the communication apparatus 1000 may be configured to perform a function of the STA in Embodiment 4: The processor 1001 may be configured to generate the EHT TB PPDU sent in step S403 in FIG. 12, and/or configured to perform another process of the technology described in this specification. The transceiver 1002 may be configured to perform step S402 and step S403 in FIG. 12, and/or configured to perform another process of the technology described in this specification.

In a design, the communication apparatus 1000 may be configured to perform a function of the second AP in Embodiment 5. The processor 1001 may be configured to perform step S503 in FIG. 13, and/or configured to perform another process of the technology described in this specification. The transceiver 1002 may be configured to perform step S504 in FIG. 13, and/or configured to perform another process of the technology described in this specification.

In a design, the communication apparatus 1000 may be configured to perform a function of the second STA in Embodiment 5. The processor 1001 may be configured to perform step S604 in FIG. 15, and/or configured to perform another process of the technology described in this specification. The transceiver 1002 may be configured to perform step S605 in FIG. 15, and/or configured to perform another process of the technology described in this specification.

In any one of the foregoing designs, the processor 1001 may include a transceiver configured to implement sending and receiving functions. For example, the transceiver may be a transceiver circuit, an interface, or an interface circuit. The transceiver circuit, the interface, or the interface circuit configured to implement the sending and receiving functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions. The instructions may be a computer program. The computer program is run on the processor 1001, so that the communication apparatus 1000 can perform the method described in any one of the foregoing method embodiments. The computer program may be fixed in the processor 1001. In this case, the processor 1001 may be implemented by hardware.

In an implementation, the communication apparatus 1000 may include a circuit, and the circuit may implement a sending, receiving, or communication function in the foregoing method embodiments. The processor and the transceiver described in this application may be implemented in an integrated circuit (integrated circuit, IC), an analog IC, a radio frequency integrated circuit RFIC, a mixed-signal IC, an application-specific integrated circuit (application specific integrated circuit, ASIC), a printed circuit board (printed circuit board, PCB), an electronic device, and the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited by FIG. 19. The communication apparatus may be an independent device or may be a part of a larger device. For example, the communication apparatus may be:
(1) an independent integrated circuit IC, a chip, or a chip system or subsystem;
(2) a set including one or more ICs, where optionally, the set of ICs may further include a storage component configured to store data and a computer program;
(3) an ASIC, for example, a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) another device, or the like.

In a possible product form, the AP and STA in embodiments of this application may be implemented by general-purpose processors.

A general-purpose processor for implementing the AP includes a processing circuit and an input/output interface that is internally connected to and communicates with the processing circuit.

In a design, the general-purpose processor may be configured to perform a function of the AP in Embodiment 1. Specifically, the processing circuit may be configured to generate the trigger frame sent in step S101 in FIG. 7, and/or configured to perform another process of the technology described in this specification. The input/output interface is configured to perform step S101 and step S104 in FIG. 7, and/or configured to perform another process of the technology described in this specification.

In a design, the general-purpose processor may be configured to perform a function of the AP in Embodiment 2. Specifically, the processing circuit is configured to generate the trigger frame sent in step S201 in FIG. 9, and/or configured to perform another process of the technology described in this specification. The input/output interface is configured to perform step S201 and step S204 in FIG. 9, and/or configured to perform another process of the technology described in this specification.

In a design, the general-purpose processor may be configured to perform a function of the AP in Embodiment 3. Specifically, the processing circuit is configured to generate the trigger frame sent in step S301 in FIG. 10, and/or configured to perform another process of the technology described in this specification. The input/output interface is configured to perform step S301 and step S304 in FIG. 10, and/or configured to perform another process of the technology described in this specification.

In a design, the general-purpose processor may be configured to perform a function of the AP in Embodiment 4. Specifically, the processing circuit is configured to generate the trigger frame sent in step S401 in FIG. 12, and/or configured to perform another process of the technology described in this specification. The input/output interface is configured to perform step S401 and step S404 in FIG. 12, and/or configured to perform another process of the technology described in this specification.

In a design, the general-purpose processor may be configured to perform a function of the second AP in Embodiment 5. Specifically, the processing circuit is configured to perform step S503 in FIG. 13, and/or configured to perform another process of the technology described in this specification. The input/output interface is configured to perform step S504 in FIG. 13, and/or configured to perform another process of the technology described in this specification.

A general-purpose processor for implementing the STA includes a processing circuit and an input/output interface that is internally connected to and communicates with the processing circuit.

In a design, the general-purpose processor may be configured to perform a function of the STA in Embodiment 1. Specifically, the processing circuit is configured to generate the EHT TB PPDU sent in step S103 in FIG. 7, and/or configured to perform another process of the technology described in this specification. The input/output interface is configured to perform step S102 and step S103 in FIG. 7, and/or configured to perform another process of the technology described in this specification.

In a design, the general-purpose processor may be configured to perform a function of the STA in Embodiment 2. Specifically, the processing circuit is configured to generate the EHT TB PPDU sent in step S203 in FIG. 9, and/or configured to perform another process of the technology described in this specification. The input/output interface is configured to perform step S202 and step S203 in FIG. 9, and/or configured to perform another process of the technology described in this specification.

In a design, the general-purpose processor may be configured to perform a function of the STA in Embodiment 3. Specifically, the processing circuit is configured to generate the EHT TB PPDU sent in step S303 in FIG. 10, and/or configured to perform another process of the technology described in this specification. The input/output interface is configured to perform step S302 and step S303 in FIG. 10, and/or configured to perform another process of the technology described in this specification.

In a design, the general-purpose processor may be configured to perform a function of the STA in Embodiment 4. Specifically, the processing circuit is configured to generate the EHT TB PPDU sent in step S403 in FIG. 12, and/or configured to perform another process of the technology described in this specification. The input/output interface is configured to perform step S402 and step S403 in FIG. 12, and/or configured to perform another process of the technology described in this specification.

In a design, the general-purpose processor may be configured to perform a function of the second STA in Embodiment 5. Specifically, the processing circuit is configured to perform step S604 in FIG. 15, and/or configured to perform another process of the technology described in this specification. The input/output interface is configured to perform step S605 in FIG. 15, and/or configured to perform another process of the technology described in this specification.

It should be understood that the communication apparatuses in the foregoing various product forms have any function of the AP or STA in the method embodiments. Details are not described herein again.

An embodiment of this application further provides a computer-readable storage medium. The computer-readable storage medium stores computer program code. When the processor executes the computer program code, an electronic device performs the method in any one of the foregoing embodiments.

An embodiment of this application further provides a computer program product. When the computer program product runs on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through the interface circuit, to enable the apparatus to perform the method in any one of the foregoing embodiments.

An embodiment of this application further provides a wireless communication system including an AP and a STA. The AP and the STA may perform the method in any one of the foregoing embodiments.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a core network interface device. Certainly, the processor and the storage medium may exist in the core network interface device as discrete components.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium. The communication medium includes any medium that facilitates transmission of a computer program from one place to another. The storage medium may be any available medium accessible to a general-purpose or a special-purpose computer.

In the foregoing specific implementations, the objectives, technical solutions, and beneficial effects of this application are further described in detail. The scope of protection is determined by Art. 69 of the EPC protocol.

## Claims

1. A method for determining a spatial reuse parameter field in a physical layer protocol data unit, comprising:
sending (S301), by an access point, AP, a trigger frame, wherein the trigger frame is used to trigger a station to send an EHT TB PPDU, and a special user information field of the trigger frame comprises a first field and a second field; and
receiving (S303), by the AP, the EHT TB PPDU sent by the station, wherein a value indicated by an SRP1 field in a U-SIG of the EHT TB PPDU is set to a value indicated by the first field, and a value indicated by an SRP2 field in the U-SIG of the EHT TB PPDU is set to a value indicated by the second field.

2. A method for determining a spatial reuse parameter field in a physical layer protocol data unit, comprising:
receiving (S301), by a station STA, a trigger frame, wherein the trigger frame is used to trigger the station to send an EHT TB PPDU, and a special user information field of the trigger frame comprises a first field and a second field; and
sending (S303), by the STA, the EHT TB PPDU, wherein a value indicated by an SRP1 field in a U-SIG of the EHT TB PPDU is set to a value indicated by the first field, and a value indicated by an SRP2 field in the U-SIG of the EHT TB PPDU is set to a value indicated by the second field.

3. The method according to claim 1 or 2, wherein a common information field of the trigger frame comprises four uplink spatial reuse parameter UL SRP fields, two of the four UL SRP fields indicate a same value, and the other two indicate a same value; and the value indicated by the first field is equal to a value indicated by either of the two UL SRP fields that indicate a same value, and the value indicated by the second field is equal to a value indicated by either of the other two UL SRP fields that indicate a same value.

4. The method according to any one of claims 1 to 3, wherein the special user information field comprises an association identifier (12) 12 field, and a value of the association identifier (12) 12 field is a special value.

5. The method according to any one of claims 1 to 4, wherein a bandwidth of the EHT TB PPDU is any one of 80 MHz, 160 MHz, and 320 MHz.

6. The method according to claim 3, wherein the four UL SRP fields are a UL SRP1 field, a UL SRP2 field, a UL SRP3 field, and a UL SRP4 field, values indicated by the UL SRP1 field and the UL SRP2 field are the same, and values indicated by the UL SRP3 field and the UL SRP4 field are the same.

7. The method according to claim 3 or 6, wherein a bandwidth of the EHT TB PPDU is 320 MHz, the four UL SRP fields respectively indicate SRP values of four 40 MHz subchannels on a primary 160 MHz channel in ascending order of frequencies, and SRP values of four 40 MHz subchannels on a secondary 160 MHz channel are respectively the same as the SRP values of the four 40 MHz subchannels on the primary 160 MHz channel.

8. The method according to claim 3 or 6, wherein the four UL SRP fields are a UL SRP1 field, a UL SRP2 field, a UL SRP3 field, and a UL SRP4 field, and values indicated by the four UL SRP fields are the same; and
when a bandwidth of the EHT TB PPDU is 20 MHz, the value indicated by the SRP1 field and the value indicated by the SRP2 field in the U-SIG of the EHT TB PPDU are equal to a value indicated by any one of the four UL SRP fields.

9. The method according to claim 3 or 6, wherein the four UL SRP fields are a UL SRP1 field, a UL SRP2 field, a UL SRP3 field, and a UL SRP4 field, values indicated by the UL SRP1 field and the UL SRP3 field are the same, and values indicated by the UL SRP2 field and the UL SRP4 field are the same; and
when a bandwidth of the EHT TB PPDU is 40 MHz, the value indicated by the SRP1 field in the U-SIG of the EHT TB PPDU is equal to the value indicated by the UL SRP1 field or the value indicated by the UL SRP3 field, and the value indicated by the SRP2 field in the U-SIG of the EHT TB PPDU is equal to the value indicated by the UL SRP2 field or the value indicated by the UL SRP4 field.

10. A communication apparatus (1000), wherein the communication apparatus (1000) comprises a processor (1000, 1001) and a transceiver (1002), the transceiver (1002) is configured to send and receive a PPDU, and the processor (1000, 1001) is configured to execute program instructions, to enable the communication apparatus (1000) to perform the method according to any one of claims 1, 3 to 9.

11. A communication apparatus (1000), wherein the communication apparatus (1000) comprises a processor (1000, 1001) and a transceiver (1002), the transceiver (1002) is configured to send and receive a PPDU, and the processor (1000, 1001) is configured to execute program instructions, to enable the communication apparatus (1000) to perform the method according to any one of claims 2 to 9.

12. A computer-readable storage medium, wherein the computer-readable storage medium stores program instructions, and when the program instructions are run on a computer associated with an access point, AP, or a computer associated with a station, STA, cause the AP to perform the steps of the method of any of claims 1, 3 to 9, or cause the STA to perform the steps of of the method of any of claims 2-9.

13. A computer program product, comprising instructions, wherein when the instructions are run on a computer associated with an access point, AP, or a computer associated with a station, STA, cause the AP to perform the steps of the method of any of claims 1, 3 to 9, or cause the STA to perform the steps of of the method of any of claims 2-9.

## Patentansprüche

1. Verfahren zum Bestimmen eines räumlichen Wiederverwendungsparameterfeldes in einer Protokolldateneinheit einer physischen Schicht, umfassend:
Senden (S301) eines Trigger-Frames durch einen Zugangspunkt (access point, AP), wobei der Trigger-Frame verwendet wird, um eine Station zum Senden einer Trigger-basierten Protokolldateneinheit einer physikalischen Schicht mit extrem hohem Durchsatz (extremely high throughput trigger-based physical layer data protocol unit, EHT TB PPDU) zu triggern, und wobei ein spezielles Benutzerinformationsfeld des Trigger-Frames ein erstes Feld und ein zweites Feld umfasst; und
Empfangen (S303) der durch die Station gesendeten EHT-TB-PPDU durch den AP, wobei ein Wert, der durch ein Feld des räumlichen Wiederverwendungsparameters 1 (spatial reuse parameter 1, SRP1) in einem universellen Signal (universal signal, U-SIG) der EHT-TB-PPDU angegeben ist, auf einen Wert gesetzt wird, der durch das erste Feld angegeben ist, und ein Wert, der durch ein SRP2-Feld in dem U-SIG der EHT-TB-PPDU angegeben ist, auf einen Wert gesetzt wird, der durch das zweite Feld angegeben ist.

2. Verfahren zum Bestimmen eines räumlichen Wiederverwendungsparameterfeldes in einer Protokolldateneinheit einer physischen Schicht, umfassend:
Empfangen (S301) eines Trigger-Frames durch eine Station STA, wobei der Trigger-Frame verwendet wird, um die Station zum Senden einer EHT-TB-PPDU zu triggern, und wobei ein spezielles Benutzerinformationsfeld des Trigger-Frames ein erstes Feld und ein zweites Feld umfasst; und
Senden (S303) der EHT-TB-PPDU durch die STA, wobei ein Wert, der durch ein SRP1-Feld in einem U-SIG der EHT-TB-PPDU angegeben ist, auf einen Wert gesetzt wird, der durch das erste Feld angegeben ist, und ein Wert, der durch ein SRP2-Feld in dem U-SIG der EHT-TB-PPDU angegeben ist, auf einen Wert gesetzt wird, der durch das zweite Feld angegeben ist.

3. Verfahren gemäß Anspruch 1 oder 2, wobei ein gemeinsames Informationsfeld des Trigger-Frames vier Uplink-räumliche Wiederverwendungsparameter-UL-SRP-Felder umfasst, wobei zwei der vier UL-SRP-Felder einen gleichen Wert angeben und die anderen beiden einen gleichen Wert angeben; und der Wert, der durch das erste Feld angegeben wird, gleich einem Wert ist, der durch eines der beiden UL-SRP-Felder angegeben wird, die einen gleichen Wert angeben, und der Wert, der durch das zweite Feld angegeben wird, gleich einem Wert ist, der durch eines der beiden anderen UL-SRP-Felder angegeben wird, die einen gleichen Wert angeben.

4. Verfahren gemäß einem der Ansprüche 1 bis 3, wobei das spezielle Benutzerinformationsfeld ein Feld für den Verknüpfungsbezeichner (12) 12 umfasst und ein Wert des Feldes für den Verknüpfungsbezeichner (12) 12 ein spezieller Wert ist.

5. Verfahren gemäß einem der Ansprüche 1 bis 4, wobei eine Bandbreite der EHT-TB-PPDU eine beliebige von 80 MHz, 160 MHz und 320 MHz ist.

6. Verfahren gemäß Anspruch 3, wobei die vier UL-SRP-Felder ein UL-SRP1-Feld, ein UL-SRP2-Feld, ein UL-SRP3-Feld und ein UL-SRP4-Feld sind, die Werte, die durch das UL-SRP1-Feld und das UL-SRP2-Feld angegeben werden, gleich sind und die Werte, die durch das UL-SRP3-Feld und das UL-SRP4-Feld angegeben werden, gleich sind.

7. Verfahren gemäß Anspruch 3 oder 6, wobei eine Bandbreite der EHT-TB-PPDU 320 MHz ist, die vier UL-SRP-Felder jeweils SRP-Werte von vier 40-MHz-Unterkanälen auf einem primären 160-MHz-Kanal in aufsteigender Frequenzreihenfolge angeben, und die SRP-Werte von vier 40-MHz-Unterkanälen auf einem sekundären 160-MHz-Kanal jeweils gleich den SRP-Werten der vier 40-MHz-Unterkanäle auf dem primären 160-MHz-Kanal sind.

8. Verfahren gemäß Anspruch 3 oder 6, wobei die vier UL-SRP-Felder ein UL-SRP1-Feld, ein UL-SRP2-Feld, ein UL-SRP3-Feld und ein UL-SRP4-Feld sind, und die Werte, die durch die vier UL-SRP-Felder angegeben werden, gleich sind; und
wenn eine Bandbreite der EHT-TB-PPDU 20 MHz ist, der Wert, der durch das SRP1-Feld angegeben wird, und der Wert, der durch das SRP2-Feld angegeben wird, in dem U-SIG der EHT-TB-PPDU gleich einem Wert sind, der durch ein beliebiges der vier UL-SRP-Felder angegeben wird.

9. Verfahren gemäß Anspruch 3 oder 6, wobei die vier UL-SRP-Felder ein UL-SRP1-Feld, ein UL-SRP2-Feld, ein UL-SRP3-Feld und ein UL-SRP4-Feld sind, die Werte, die durch das UL-SRP1-Feld und das UL-SRP3-Feld angegeben werden, gleich sind und die Werte, die durch das UL-SRP2-Feld und das UL-SRP4-Feld angegeben werden, gleich sind; und
wenn eine Bandbreite der EHT-TB-PPDU 40 MHz ist, der Wert, der durch das SRP1-Feld in dem U-SIG der EHT-TB-PPDU angegeben wird, gleich dem Wert, der durch das UL-SRP1-Feld angegeben wird, oder dem Wert, der durch das UL-SRP3-Feld angegeben wird, ist und der Wert, der durch das SRP2-Feld in dem U-SIG der EHT-TB-PPDU angegeben wird, gleich dem Wert, der durch das UL-SRP2-Feld angegeben wird, oder dem Wert, der durch das UL-SRP4-Feld angegeben wird, ist.

10. Kommunikationsvorrichtung (1000), wobei die Kommunikationsvorrichtung (1000) einen Prozessor (1000, 1001) und einen Transceiver (1002) umfasst, wobei der Transceiver (1002) dazu konfiguriert ist, eine PPDU zu senden und zu empfangen, und der Prozessor (1000, 1001) dazu konfiguriert ist, Programmanweisungen auszuführen, um die Kommunikationsvorrichtung (1000) in die Lage zu versetzen, das Verfahren gemäß einem der Ansprüche 1, 3 bis 9 durchzuführen.

11. Kommunikationsvorrichtung (1000), wobei die Kommunikationsvorrichtung (1000) einen Prozessor (1000, 1001) und einen Transceiver (1002) umfasst, wobei der Transceiver (1002) dazu konfiguriert ist, eine PPDU zu senden und zu empfangen, und der Prozessor (1000, 1001) dazu konfiguriert ist, Programmanweisungen auszuführen, um die Kommunikationsvorrichtung (1000) in die Lage zu versetzen, das Verfahren gemäß einem der Ansprüche 2 bis 9 durchzuführen.

12. Computerlesbares Speichermedium, wobei das computerlesbare Speichermedium Programmanweisungen speichert und wenn die Programmanweisungen auf einem Computer, der mit einem Zugangspunkt, AP, verknüpft ist, oder einem Computer, der mit einer Station, STA, verknüpft ist, ausgeführt werden, den AP veranlassen, die Schritte des Verfahrens gemäß einem der Ansprüche 1, 3 bis 9 durchzuführen, oder die STA veranlassen, die Schritte des Verfahrens gemäß einem der Ansprüche 2-9 durchzuführen.

13. Computerprogrammprodukt, umfassend Anweisungen, wobei, wenn die Anweisungen auf einem Computer, der mit einem Zugangspunkt, AP, verknüpft ist, oder einem Computer, der mit einer Station, STA, verknüpft ist, ausgeführt werden, den AP veranlassen, die Schritte des Verfahrens gemäß einem der Ansprüche 1, 3 bis 9 durchzuführen, oder die STA veranlassen, die Schritte des Verfahrens gemäß einem der Ansprüche 2-9 durchzuführen.

## Revendications

1. Procédé pour déterminer un champ de paramètre de réutilisation spatiale dans une unité de données de protocole de couche physique, comprenant :
l'envoi (S301), par un point d'accès, AP, d'une trame de déclenchement, dans lequel la trame de déclenchement est utilisée pour déclencher une station pour envoyer une PPDU EHT TB, et un champ d'informations utilisateur spécial de la trame de déclenchement comprend un premier champ et un second champ ; et
la réception (S303), par l'AP, de la PPDU EHT TB envoyée par la station, dans lequel une valeur indiquée par un champ SRP1 dans un U-SIG de la PPDU EHT TB est définie sur une valeur indiquée par le premier champ, et une valeur indiquée par un champ SRP2 dans l'U-SIG de la PPDU EHT TB est définie sur une valeur indiquée par le second champ.

2. Procédé pour déterminer un champ de paramètre de réutilisation spatiale dans une unité de données de protocole de couche physique, comprenant :
la réception (S301), par une station STA, d'une trame de déclenchement, dans lequel la trame de déclenchement est utilisée pour déclencher la station pour envoyer une PPDU EHT TB, et un champ d'informations utilisateur spécial de la trame de déclenchement comprend un premier champ et un second champ ; et
l'envoi (S303), par la STA, de la PPDU EHT TB, dans lequel une valeur indiquée par un champ SRP1 dans un U-SIG de la PPDU EHT TB est définie sur une valeur indiquée par le premier champ, et une valeur indiquée par un champ SRP2 dans l'U-SIG de la PPDU EHT TB est définie sur une valeur indiquée par le second champ.

3. Procédé selon la revendication 1 ou 2, dans lequel un champ d'informations commun de la trame de déclenchement comprend quatre champs UL SRP de paramètre de réutilisation spatiale de liaison montante, deux des quatre champs UL SRP indiquent une même valeur, et les deux autres indiquent une même valeur ; et la valeur indiquée par le premier champ est égale à une valeur indiquée par l'un ou l'autre des deux champs UL SRP qui indiquent une même valeur, et la valeur indiquée par le second champ est égale à une valeur indiquée par l'un ou l'autre des deux autres champs UL SRP qui indiquent une même valeur.

4. Procédé selon l'une quelconque des revendications 1 à 3, dans lequel le champ d'informations d'utilisateur spécial comprend un champ d'identifiant d'association (12) 12, et une valeur du champ d'identifiant d'association (12) 12 est une valeur spéciale.

5. Procédé selon l'une quelconque des revendications 1 à 4, dans lequel une bande passante de la PPDU EHT TB est l'une quelconque des 80 MHz, 160 MHz et 320 MHz.

6. Procédé selon la revendication 3, dans lequel les quatre champs UL SRP sont un champ UL SRP1, un champ UL SRP2, un champ UL SRP3 et un champ UL SRP4, les valeurs indiquées par le champ UL SRP1 et le champ UL SRP2 sont les mêmes, et les valeurs indiquées par le champ UL SRP3 et le champ UL SRP4 sont les mêmes.

7. Procédé selon la revendication 3 ou 6, dans lequel une bande passante de la PPDU EHT TB est de 320 MHz, les quatre champs UL SRP indiquent respectivement des valeurs SRP de quatre sous-canaux de 40 MHz sur un canal primaire de 160 MHz dans l'ordre croissant de fréquences, et les valeurs SRP de quatre sous-canaux de 40 MHz sur un canal secondaire de 160 MHz sont respectivement les mêmes que les valeurs SRP des quatre sous-canaux de 40 MHz sur le canal primaire de 160 MHz.

8. Procédé selon la revendication 3 ou 6, dans lequel les quatre champs UL SRP sont un champ UL SRP1, un champ UL SRP2, un champ UL SRP3 et un champ UL SRP4, et les valeurs indiquées par les quatre champs UL SRP sont les mêmes ; et
lorsque la bande passante de la PPDU EHT TB est de 20 MHz, la valeur indiquée par le champ SRP1 et la valeur indiquée par le champ SRP2 dans l'U-SIG de la PPDU EHT TB sont égales à une valeur indiquée par l'un quelconque des quatre champs UL SRP.

9. Procédé selon la revendication 3 ou 6, dans lequel les quatre champs UL SRP sont un champ UL SRP1, un champ UL SRP2, un champ UL SRP3 et un champ UL SRP4, les valeurs indiquées par le champ UL SRP1 et le champ UL SRP2 sont les mêmes, et les valeurs indiquées par le champ UL SRP3 et le champ UL SRP4 sont les mêmes ; et
lorsque la bande passante de la PPDU EHT TB est de 40 MHz, la valeur indiquée par le champ SRP1 dans l'U-SIG de la PPDU EHT TB est égale à la valeur indiquée par le champ UL SRP1 ou à la valeur indiquée par le champ UL SRP3, et la valeur indiquée par le champ SRP2 dans l'U-SIG de la PPDU EHT TB est égale à la valeur indiquée par le champ UL SRP2 ou à la valeur indiquée par le champ UL SRP4.

10. Appareil de communication (1000), dans lequel l'appareil de communication (1000) comprend un processeur (1000, 1001) et un émetteur-récepteur (1002), l'émetteur-récepteur (1002) est configuré pour envoyer et recevoir une PPDU, et le processeur (1000, 1001) est configuré pour exécuter des instructions de programme, pour permettre à l'appareil de communication (1000) de réaliser le procédé selon l'une quelconque des revendications 1, 3 à 9.

11. Appareil de communication (1000), dans lequel l'appareil de communication (1000) comprend un processeur (1000, 1001) et un émetteur-récepteur (1002), l'émetteur-récepteur (1002) est configuré pour envoyer et recevoir une PPDU, et le processeur (1000, 1001) est configuré pour exécuter des instructions de programme, pour permettre à l'appareil de communication (1000) de réaliser le procédé selon l'une quelconque des revendications 2 à 9.

12. Support de stockage lisible par ordinateur, dans lequel le support de stockage lisible par ordinateur stocke des instructions de programme, et lorsque les instructions de programme sont exécutées sur un ordinateur associé à un point d'accès, AP, ou un ordinateur associé à une station, STA, amènent l'AP à réaliser les étapes du procédé selon l'une quelconque des revendications 1, 3 à 9, ou amènent la STA à réaliser les étapes du procédé selon l'une quelconque des revendications 2 à 9.

13. Produit de programme informatique comprenant des instructions, dans lequel lorsque les instructions sont exécutées sur un ordinateur associé à un point d'accès, AP, ou un ordinateur associé à une station, STA, amènent l'AP à réaliser les étapes du procédé selon l'une quelconque des revendications 1, 3 à 9, ou amènent la STA à réaliser les étapes du procédé selon l'une quelconque des revendications 2 à 9.
